(19) Europäisches Patentamt / European Patent Office / Office européen des brevets

(11) EP 2 679 096 A1

(12) EUROPEAN PATENT APPLICATION

(43) Date of publication:
**01.01.2014 Bulletin 2014/01**

(21) Application number: **13183213.1**

(22) Date of filing: **05.02.2008**

(51) Int Cl.:
***A01P 3/00*** *(2006.01)* ***A01P 5/00*** *(2006.01)*
***A01P 7/02*** *(2006.01)* ***A01P 7/04*** *(2006.01)*
***A01N 43/56*** *(2006.01)* ***A01N 47/02*** *(2006.01)*
***A01N 37/36*** *(2006.01)* ***A01N 37/46*** *(2006.01)*
***A01N 37/50*** *(2006.01)* ***A01N 43/36*** *(2006.01)*
***A01N 43/40*** *(2006.01)* ***A01N 43/54*** *(2006.01)*
***A01N 43/653*** *(2006.01)* ***A01N 47/24*** *(2006.01)*
***A01N 47/26*** *(2006.01)* ***A01N 47/34*** *(2006.01)*
***A01N 47/38*** *(2006.01)* ***A01N 51/00*** *(2006.01)*
***A01N 53/00*** *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.02.2007 EP 07101846**
**28.03.2007 US 908479 P**

(62) Document number(s) of the earlier application(s) in accordance with Art. 76 EPC:
**08708676.5 / 2 109 366**

(71) Applicant: **BASF SE**
**67056 Ludwigshafen (DE)**

(72) Inventors:
- **Voeste, Dirk**
  **67117 Limburgerhof (DE)**
- **Haden, Egon**
  **67346 Speyer (DE)**
- **Oloumi-Sadeghi, Hassan**
  **Raleigh, NC 27614 (US)**

Remarks:
This application was filed on 05-09-2013 as a divisional application to the application mentioned under INID code 62.

# (54) Pesticidal mixtures

(57) Synergistic pesticidal mixtures comprising, as active components, an insecticidal compound I which is fipronil and a fungicidal compound IIA which is trifloxystrobin.

EP 2 679 096 A1

## Description

The present invention relates to synergistic mixtures comprising, as active components,

1) an insecticidal compound I selected from fipronil and ethiprole;
and

2) a fungicidal compound IIA selected from List A:

a) azoles, in particular: difenoconazole, bitertanole, bromuconazole, diniconazole, enilconazole, fenbuconazole, flusilazole, fluquinconazole, flutriafol, imibenconazole, ipconazole, myclobutanil, paclobutrazol, penconazole, propiconazole, simeconazole, tetraconazole, uniconazole-P, triadimenol, triadimefon, triticonazole, cyazofamid, pefurazoate, benomyl, carbendazim, fuberidazole, thiabendazole, ethaboxam, etridiazole and hymexazole;

b) strobilurins, in particular: azoxystrobin, dimoxystrobin, enestroburin, fluoxastrobin, kresoxim-methyl, metominostrobin, picoxystrobin, trifloxystrobin, or methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate, methyl 2-(ortho-((2,5-dimethylphenyloxymethylene)phenyl)-3-methoxyacrylate;

c) carboxamides, in particular: carboxin, benalaxyl, boscalid, fenhexamid, flutolanil, furametpyr, mepronil, metalaxyl, mefenoxam (metalaxyl-M), ofurace, oxadixyl, oxycarboxin, penthiopyrad, thifluzamide, tiadinil, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(2'-fluoro-4'-chloro-5'-methyl¬biphenyl-2-yl)-1-methyl-3-trifluoro¬methyl-1H-pyrazole-4 carboxamide, N-(3',4',5'-trifluorobiphenyl-2-yl)-1-methyl-3-trifluoromethyl-1H-pyrazole-4-carboxamide, N-(3',4',5'-trifluorobiphenyl-2-yl)-1-methyl-3-difluoromethyl-1H-pyrazole-4-carboxamide, N-(2',4',5'-trifluorobiphenyl-2-yl)-1-methyl-3-difluoromethyl-1 H-pyrazole-4-carboxamide, N-(3',4',5'-trifluorobiphenyl-2-yl)-3-chlorofluoromethyl-1-methyl-1H-pyrazole-4-carboxamide, N-(3' ,4'-dichloro-4-fluorobiphenyl-2-yl)-3-difluoro-methyl-1-methyl-pyrazole-4-carboxamide, N-(3',4'-dichloro-5-fluorobiphenyl-2-yl)-3-difluoromethyl-1-methylpyrazole-4-carboxamide, N-(2-(1,3-dimethylbutyl)-phenyl)-1,3-dimethyl-5-fluoro-1H-pyrazole-4-carboxylic acid amide, N-(cis-2-bicyclopropyl-2-yl-phenyl)-3-difluoromethyl-1-methyl-1 H-pyrazole-4-carboxylic acid amide, N-(trans-2-bicyclopropyl-2-yl-phenyl)-3-difluoro-methyl-1-methyl-1 H-pyrazole-4-carboxylic acid amide, 3-(difluoromethyl)-1-methyl-N-[1,2,3,4-tetrahydro-9-(1-methylethyl)-1,4-methanonaphthalen-5-yl]-1H-pyrazole-4carboxamide, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide; 3,4-dichloro-N-(2-cyanophenyl)isothiazol-5-carboxamide; N-(2',4'-difluorobiphenyl-2-yl)-1-methyl-3-trifluoromethyl-1H-pyrazole-4-carboxamide; N-(2',4'-dichloro-biphenyl-2-yl)-1-methyl-3-trifluoromethyl-1H-pyrazole- 4-carboxamide; N-(2', 4'-difluorobiphenyl-2-yl)-3-difluoromethyl-1-methyl-1 H-pyrazole- 4-carboxamide; N-(2',4'-dichlorobiphenyl-2-yl)-3-difluoromethyl-1-methyl-1H-pyrazole-4-carboxamide; N-(2',5'-difluorobiphenyl-2-yl)-1-methyl-3-trifluoromethyl-1H-pyrazole- 4-carboxamide; N-(2',5'-dichlorobiphenyl-2-yl)-1-methyl-3-trifluoromethyl-1H-pyrazole-4-carboxamide; N-(2',5'-difluorobiphenyl-2-yl)-3-difluoromethyl-1-methyl-1H-pyrazole-4-carboxamide; N-(2',5'-dichlorobiphenyl-2-yl)-3-difluoromethyl-1-methyl-1H-pyrazole-4-carboxamide; N-(3',5'-difluorobiphenyl-2-yl)-1-methyl-3-trifluoromethyl-1H-pyrazole-4-carboxamide; N-(3',5'-dichlorobiphenyl-2-yl)-1-methyl-3-trifluoromethyl-1H-pyrazole-4-carboxamide, N-(3',5'-difluorobiphenyl-2-yl)-3-difluoromethyl-1-methyl-1 H-pyrazole-4-carboxamide; N-(3',5'-dichlorobiphenyl-2-yl)-3-difluoromethyl-1-methyl-1 H-pyrazole-4-carboxamide; N-(3'-fluorobiphenyl-2-yl)-1-methyl-3-trifluoromethyl-1H-pyrazole-4-carboxamide, N-(3'-chlorobiphenyl-2-yl)-1-methyl-3-trifluoromethyl-1 H-pyrazole-4-carboxamide; N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1 H-pyrazole-4-carboxamide; N-(2'-fluorobiphenyl-2-yl)-1-methyl-3-trifluoromethyl-1H-pyrazole-4-carboxamide; N-(2'-chlorobiphenyl-2-yl)-1-methyl-3-trifluoromethyl-1H-pyrazole-4-carboxamide; N-(2'-fluorobiphenyl-2-yl)-3-difluoromethyl-1-methyl-1H-pyrazole-4-carboxamide; N-(2'-chlorbiphenyl-2-yl)-3-difluoromethyl-1-methyl-1H-pyrazole-4-carboxamide; N-(2'-fluoro-4'-chloro-5'-methylbiphenyl-2-yl)-1-methyl-3-trifluoromethyl-1H-pyrazole-4-carboxamide; N-(3',4',5'-trifluorobiphenyl-2-yl)-1-methyl-3-trifluoromethyl-1H-pyrazole-4-carboxamide; N-(3',4',5'-trifluorobiphenyl-2-yl)-1-methyl-3-difluoromethyl-1H-pyrazole-4-carboxamide; N-(2',4',5'-trifluorobiphenyl-2-yl)-1-methyl-3-difluoromethyl-1 H-pyrazole-4-carboxamide; N-(3',4',5'-trifluorobiphenyl-2-yl)-3-chlorofluoromethyl-1-methyl-1 H-pyrazole-4-carboxamide; N-[2-(1,1,2,3,3,3-hexafluoropropoxy)phenyl]-1-methyl-3-trifluoromethyl-1H-pyrazole-4-carboxamide; N-[2-(1,1,2,3,3,3-hexafluoropropoxy)-phenyl]-3-difluoromethyl-1-methyl-1H-pyrazole-4-carboxamide, N-[2-(2-chloro-1,1,2-trifluoroethoxy)phenyl]-1-methyl-3-trifluoromethyl-1H-pyrazole-4-carboxamide; N-[2-(2-chlor-1,1,2-trifluoroethoxy)phenyl]-3-difluoromethyl-1-methyl-1H-pyrazole-4-carboxamide; 4-carbonsäure-N-[2-(1,1,2,2-tetrafluoroethoxy)phenyl]-3-difluoromethyl-1-methyl-1H-pyrazole-4-carboxamide; N-[2-(1,1,2,2-tetrafluoroethoxy)phenyl]-1-methyl-3-trifluoromethyl-1 H-pyrazole-4-carboxamide; N-(4'-(trifluoromethylthio)biphenyl-2-yl)-3-difluoromethyl-1-methyl-1 H-pyrazole-4-carboxamide; N-(4'-(trifluoromethylthio)biphenyl-2-yl)-1-methyl-3-trifluoromethyl-1H-pyrazole-4-carboxamide;
flumorph;
flumetover, fluopicolide (picobenzamid), zoxamide;
carpropamid, diclocymet, mandipropamid; N-(2-{4-[3-(4-chlorophenyl)prop-2-ynyloxy]-3-methoxyphenyl}ethyl)-2-methane-sulfonylamino-3-methylbutyramide, N-(2-{4-[3-(4-chlorophenyl)-prop-2-ynyloxy]-3-methoxyphenyl}ethyl)-2-ethanesulfonylamino-3-methyl-butyramide;

d) heterocylic compounds, in particular: fluazinam, pyrifenox;
bupirimate, cyprodinil, fenarimol, ferimzone, mepanipyrim, nuarimol, pyrimethanil;
triforine;
fenpiclonil, fludioxonil;
iprodione, procymidone, vinclozolin;
famoxadone, fenamidone, octhilinone, probenazole;
amisulbrom, anilazine, diclomezine, pyroquilon, proquinazid, tricyclazole; 2-butoxy-6-iodo-3-propylchromen-4-one;
acibenzolar-S-methyl, captafol, captan, dazomet, folpet, fenoxanil, quinoxyfen; 3-[5-(4-chlorophenyl)-2,3-dimethylisoxazolidin-3-yl]pyridine;

e) carbamates, in particular: mancozeb, maneb, metam, metiram, ferbam, propineb,;
diethofencarb, iprovalicarb, flubenthiavalicarb, propamocarb;
methyl 3-(4-chlorophenyl)-3-(2-isopropoxycarbonylamino-3-methyl-butyrylamino)propanoate;
and

f) other active compounds, selected from
guanidines: dodine, iminoctadine, guazatine;
antibiotics: kasugamycin, streptomycin, polyoxine, validamycin A;
nitrophenyl derivates: binapacryl, dinocap, dinobuton;
sulfur-containing heterocyclyl compounds: dithianon, isoprothiolane;
organometal compounds: fentin salts, such as fentin-acetate;
organophosphorus compounds: edifenphos, iprobenfos, fosetyl, fosetyl-aluminum, phosphorous acid and its salts, pyrazophos, tolclofos-methyl;
organochlorine compounds: chlorothalonil, dichlofluanid, flusulfamide, hexachlorobenzene, phthalide, pencycuron, quintozene, thiophanate-methyl, tolylfluanid;
inorganic active compounds: Bordeaux mixture, copper acetate, copper hydroxide, copper oxychloride, sulfur;
others: cyflufenamid, cymoxanil, dimethirimol, ethirimol, furalaxyl, metrafenone and spiroxamine.

The present invention also comprises synergistic mixtures as defined above, which further comprise one or two fungicidal compounds IIB selected from List B which is defined as List A plus triticonazole, orysastrobin, 5-chloro-7-(4-methylpiperidin-1-yl)-6-(2,4,6-trifluorophenyl)-[1,2,4]tri-azolo[1,5-a]pyrimidine, 6-(3,4-dichloro-phenyl)-5-methyl-[1,2,4]triazolo[1,5-a]pyrimidine-7-ylamine, 6-(4-tert-butylphenyl)-5-methyl-[1,2,4]triazolo[1,5-a]pyrimidine-7-ylamine, 5-methyl-6-(3,5,5-trimethyl-hexyl)-[1,2,4]triazolo[1,5-a]pyrimidine-7-ylamine, 5-methyl-6-octyl-[1,2,4]triazolo[1,5-a]pyrimidine-7-ylamine, 6-methyl-5-octyl-[1,2,4]triazolo[1,5-a]pyrimidine-7-yl-amine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]triazolo[1,5-a]pyrimidine-7-ylamine, 6-octyl-5-propyl-[1,2,4]triazolo[1,5-a]pyrimidine-7-ylamine, 5-methoxy-methyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoromethyl-6-(3,5,5-trimethyl-hexyl)-[1,2,4]triazolo[1,5-a]pyrimidine-7-ylamine, cyproconazole, epoxiconazole, hexaconazole, metconazole, prothioconazole, propiconazole, tebuconazole, imazalil, prochloraz, triflumizol, dimethomorph, aldimorph, dodemorph, fenpropimorph, tridemorph; fenpropidin, mancozeb, maneb, metam, metiram, ferbam, thiram, zineb, ziram and basic copper sulfate;
in synergistically effective amounts,
with the proviso that the combination of compound IIA and compounds IIB is not: metalaxyl, fludioxonil and difenoconazole; metalaxyl-M, fludioxonil and difenoconazole; fludioxonil, metalaxyl and azoxystrobin; fludioxonil, metalaxyl and picoxystrobin; fludioxonil, metalaxyl; trifloxystrobin; fludioxonil, metalaxyl and kresoxim-methyl; and fludioxonil and propiconazole.

The following subset of compounds IIB is hereinafter also designated as compounds IIC): cyproconazole, epoxiconazole, hexaconazole, metconazole, propiconazole, tebuconazole, imazalil, prochloraz, triflumizol, dimethomorph, aldimorph, dodemorph, fenpropimorph, tridemorph; fenpropidin, mancozeb, maneb, metam, metiram, ferbam, thiram, zineb, ziram and basic copper sulfate.

The present invention also comprises fungicidal synergistic mixtures consisting of fungicidal compound IIB and IID, wherein such compounds defined above.

The present invention also comprises fungicidal synergistic mixtures consisting of three fungicidal compounds, wherein two compounds are selected from List B, List B is defined above, and the third fungidical compound is fungicidal compound IID selected from List D, which is defined as List B plus pyracolostrobin.

The present invention also comprises quaternary mixtures comprising, as active components

1) an insecticidal compound I selected from fipronil and ethiprole; and
2) a fungicidal compound IIA;
3) a fungicidal compound IIB; and
4) and a fungicide, wherein the fungicide is fungicidal compound IID

in synergistically effective amounts.

The inventive mixtures can further contain one or more insecticidal compounds III.

In this respect, the present invention also comprises mixtures comprising, as active components

(1) an insecticidal compound I selected from fipronil and ethiprole;
(2) a nicotinic receptor agonists/antagonists compound IIIA;
(3) and a fungicide, wherein the fungicide is fungicidal compound IID and/or compound IIB;
in synergistically effective amounts.

The present invention also comprises mixtures comprising, as active components

(1) an insecticidal compound I selected from fipronil and ethiprole;
(2) an anthraniliamide compound IIIB;
(3) and a fungicide, wherein the fungicide is fungicidal compound IID and/or compound IIB;

in synergistically effective amounts.

Moreover, the invention relates to a method for controlling pests, this includes animal pests and harmful fungi, using mixtures of a compound I (optionally together with com-pound III) with an active compound IIA and optionally compound(s) IIB (or IID) and to the use of a the aforementioned compounds for preparing such mixtures, and also to compositions comprising such mixtures.

The invention furthermore relates to a method for controlling pests, this includes animal pests and harmful fungi, using mixtures of a compound I with an active compound IIC and optionally compound(s) IIB and to the use of a compound I and the active compound IIC and optionally compound(s) IIB for preparing such mixtures.

The invention furthermore relates to a method for controlling pests, this includes animal pests and harmful fungi, using mixtures of a compound I with compound III, compound(s) II and to the use of the aforementioned compounds for preparing such mixtures.

The invention furthermore relates to a method for controlling pests, this includes animal pests and harmful fungi, using mixtures of compound I, fungicidal compound IIA, fungicidal compound IIB and compound IID and to the use of a compound I, active compound IIA, and the active compound IIB and compound IID for preparing such mixtures.

In one embodiment, the present invention provides methods for the control of insects, acarids or nematodes comprising contacting the insect, acarid or nematode or their food supply, habitat, breeding grounds or their locus with a pesticidally effective amount of the inventive mixtures.

Moreover, in another embodiment the present invention also relates to a method of protecting plants from attack or infestation by insects, acarids or nematodes comprising contacting the plant, or the soil or water in which the plant is growing, with a pesticidally effective amount of the inventive mixture.

This invention also provides a method for treating, controlling, preventing or protecting an animal against infestation or infection by parasites which comprises orally, topically or parenterally administering or applying to the animals a parasiticidally effective amount of the inventive mixture.

The invention also provides a process for the preparation of a composition for treating, controlling, preventing or protecting a warm-blooded animal or a fish against infestation or infection by insects, acarids or nematodes which comprises a pesticidally effective amount of the inventive mixture.

Moreover, the invention relates to a method for controlling harmful fungi using the inventive mixtures and to the use of a compound I and the active compound IIA and optionally compound(s) IIB for preparing such mixtures, and also to compositions comprising such mixtures.

The invention furthermore relates to a method for controlling harmful fungi, using the synergistic fungicidal mixtures as defined above.

The present invention further relates to plant-protecting active ingredient mixtures having synergistically enhanced action of improving the health of plants and to a method of applying such inventive mixtures to the plants

Fipronil, its preparation and its action against insect and acarid pests is known (EP 295117).

Ethiprole, its preparation and its action against insect and acarid pests is known (WO 97/22593).

Mixtures, active against harmful fungi, of fipronil with benzylideneazolylmethylcycloalkane fungicides have been described in a general manner in WO 95/12314 (US 5,877,194). Triticonazole and 2-(4-chlorobenzylidene)-1-(1H-1,2,4-triazol-1-ylmethyl)-1-cyclohexanol have been mentioned as azole mixing partners in this document.

WO 99/48366 discloses mixtures of triple oxime ether derivatives and insecticides. A mixture of orysastrobin and fipronil is mentioned as an example.

In WO 00/28825, at least quaternary compositions are described that comprise an insecticide selected from phenylpyrazole or neonicotinoid insecticides and at least three fungicides including metalaxyl or metalaxyl-M and their close structural derivatives, fludioxonil and its close structural derivatives, and difenoconazole and its close structural derivatives. Explicitly preferred is a composition comprising thiamethoxam as insecticide, metalaxyl or metalaxyl-M, fludioxonil and difenoconazole.

WO 02/102148 discloses mixtures of fludioxonil, metalaxyl and a strobilurine fungicide such as azoxystrobin, picoxystrobin, trifloxystrobin and kresoxim-methyl which optionally may further contain an insecticide selected from fipronil or a neonicotinoid insecticide. Mixtures containing thiamethoxam as insecticide are mentioned explicitly.

WO 05/051081 discloses antimicrobial compositions of fludioxonil and at least one selected from a list of certain azole compounds which optionally may further contain an insecticide, inter alia fipronil.

In WO 05/058040, combinations of fipronil and pyraclostrobin are disclosed which may contain one further fungicide or insecticide.

WO 03/075653 discloses mixtures of prothioconazole with several insecticides, inter alia fipronil.

WO 95/00303 generically discloses mixtures of fungicides and insecticides for protection of technical materials. Preferred insecticides were chlopyrifos, phoxim, silafluofen, cyfluthrin, cypermethrin, deltamethrin, permethrin, imidacloprid, hexaflumuron and lindan.

WO 06/066810 encompasses orysastrobin mixtures with a further fungicide, which may additionally comprise an additional insecticidal mixing partner selected from the group consisting of imazethapyr, imazamox, imazapyr, imazapic, dimethenamid-p, fipronil, imidacloprid, acetamipird, nitenpyram, carbofuran, carbosulfan, benfuracarb, thiacloprid, clothianidin, MTI 446 or CGA 293343. Specific mixtures with the additional insecticidal mixing partner were not disclosed.

DE 195 48 873 discloses mixtures of fipronil with several fungicides, especially several azole fungicides for protection of technical materials, especially wood.

The active compounds IIA,IIB and IID mentioned above, their preparation and their action against harmful fungi are generally known (cf.: http://www.hclrss.demon.co.uk/index.html); they are commercially available. Paticularly, they are known from: bitertanol, β-([1,1'-biphenyl]-4-yloxy)-α-(1,1-dimethylethyl)-1*H*-1,2,4-triazole-1-ethanol (DE 23 24 020), bromuconazole, 1-[[4-bromo-2-(2,4-dichlorophenyl)tetrahydro-2-furanyl]methyl]-1*H*-1,2,4-triazole (Proc. 1990 Br. Crop. Prot. Conf. - Pests Dis. Vol. 1, p. 459); cyproconazole, 2-(4-chlorophenyl)-3-cyclopropyl-1-[1,2,4]triazol-1-ylbutan-2-ol (US 4 664 696); difenoconazole, 1-{2-[2-chloro-4-(4-chloro-phenoxy)phenyl]-4-methyl-[1,3]dioxolan-2-ylmethyl}-1H-[1,2,4]triazole (GB-A 2 098 607); diniconazole, (β*E*)-β-[(2,4-dichlorophenyl)methylene]-α-(1,1-dimethylethyl)-1*H*-1,2,4-triazole-1-ethanol (Noyaku Kagaku, 1983, Vol. 8, p. 575); enilconazole (imazalil), 1-[2-(2,4-dichlorphenyl)-2-(2-propenyloxy)ethyl]-1*H*-imidazole (Fruits, 1973, Vol. 28, p. 545); epoxiconazole, (2RS,3SR)-1-[3-(2-chlorophenyl)-2,3-epoxy-2-(4-fluorophenyl)propyl]-1*H*-1,2,4-triazole (EP-A 196 038); fluquinconazole, 3-(2,4-dichlorophenyl)-6-fluoro-2-[1,2,4]-triazol-1-yl-3H-quinazolin-4-one (Proc. Br. Crop Prot. Conf.-Pests Dis., 5-3, 411 (1992)); fenbuconazole, α-[2-(4-chlorophenyl)ethyl]-α-phenyl-1*H*-1,2,4-triazole-1-propanenitrile (Proc. 1988 Br. Crop Prot. Conf. - Pests Dis. Vol. 1, p. 33); flusilazole, 1-{[bis-(4-fluorophenyl)methylsilanyl]methyl}-1H-[1,2,4]triazole (Proc. Br. Crop Prot. Conf.-Pests Dis., 1, 413 (1984)); flutriafol, α-(2-fluorophenyl)-α-(4-fluorophenyl)-1*H*-1,2,4-triazole-1-ethanol (EP 15 756); hexaconazole, 2-(2,4-dichlorophenyl)-1-[1,2,4]triazol-1-ylhexan-2-ol (CAS RN 79983-71-4); imibenconazole, (4-chlorophenyl)methyl *N*-(2,4-dichlorophenyl)-1*H*-1,2,4-triazole-1-ethanimidothioate ((Proc. 1988 Br. Crop Prot. Conf. - Pests Dis. Vol. 2, p. 519); imidothioate ((Proc. 1988 Br. Crop Prot. Conf. - Pests Dis. Vol. 2, p. 519); ipconazole, 2-[(4-chlorophenyl)methyl]-5-(1-methylethyl)-1-(*H*-1,2,4-triazol-1-ylmethyl)cyclopentanol (EP 267 778); metconazole, 5-(4-chlorobenzyl)-2,2-dimethyl-1-[1,2,4]triazol-1-ylmethylcyclopentanol (GB 857 383); myclobutanil, 2-(4-chlorophenyl)-2-[1,2,4]triazol-1-ylmethylpentanenitrile (CAS RN 88671-89-0); penconazole, 1-[2-(2,4-dichlorophenyl)pentyl]-1H-[1,2,4]triazole (Pesticide Manual, 12th Ed. (2000), p.712); propiconazole, 1-[[2-(2,4-dichlorophenyl)-4-propyl-1,3-dioxolan-2-yl]methyl]-1*H*-1,2,4-triazole (BE 835 579); prothioconazole, 2-[2-(1-chlorocyclopropyl)-3-(2-chlorophenyl)-2-hydroxypropyl]-2,4-dihydro-[1,2,4]triazole-3-thione (WO 96/16048); simeconazole, α-(4-fluorophenyl)-α-[(trimethylsilyl)methyl]-1*H*-1,2,4-triazole-1-ethanol [CAS RN 149508-90-7] ; triadimefon, 1-(4-chlorophenoxy)-3,3-dimethyl-1-(1*H*-1,2,4-triazol-1-yl)-2-butanone; triadimenol, β-(4-chlorophenoxy)-α-(1,1-dimethylethyl)-1*H*-1,2,4-triazole-1-ethanol; tebuconazole, 1-(4-chlorophenyl)-4,4-dimethyl-3-[1,2,4]triazol-1-ylmethylpentan-3-ol (EP-A 40 345); tetraconazole, 1-[2-(2,4-dichlorophenyl)-3-(1,1,2,2-tetrafluoroethoxy)propyl]-1*H*-1,2,4-triazole (EP 234 242); triticonazole, (5*E*)-5-[(4-chlorophenyl)methylene]-2,2-dimethyl-1-(1*H*-1,2,4-triazol-1-ylmethyl)cyclopentanol (FR 26 41 277); prochloraz, N-{propyl-[2-(2,4,6-trichlorophen-oxy) ethyl]}imidazole-1-carboxamide (US 3 991 071); pefurazoate, 4-pentenyl 2-[(2-furan-ylmethyl)(1 *H*-imidazol-1-ylcarbonyl)amino]butanoate [CAS RN 101903-30-4] ; triflumizole, (4-chloro-2-trifluoromethylphenyl)-(2-propoxy-1-[1,2,4]triazol-1-ylethylidene)amine (JP-A 79/119 462); cyazofamid, 4-chloro-2-cyano-*N,N*-dimethyl-5-(4-methylphenyl)-1*H*-imidazole-1-sulfonamide (CAS RN 120116-88-3]; benomyl, N-butyl-2-acetylaminobenzoimidazol-1-carboxamide (US 3 631 176); carbendazim, methyl (1 H-benzoimidazol-2-yl)-carbamate (US 3 657 443); thiabendazole, 2-(1,3-thiazol-4-yl)benzimidazole (US 3 017 415) ; fuberidazole, 2-(2-furanyl)-1*H*-benzimidazole (DE 12 09 799); ethaboxam, *N*-(cyano-2-thienylmethyl)-4-ethyl-2-(ethylamino)-5-thiazolcarboxamide (EP-A 639 574); etridiazole; hymexazole, 5-methyl-1,2-oxazol-3-ol (JP 518249, JP 532202); azoxystrobin, methyl 2-{2-[6-(2-cyano-1-vinylpenta-1,3-dienyloxy)pyrimi-din-4-yloxy]phenyl}-3-methoxyacrylate (EP-A 382 375); dimoxystrobin, (*E*)-2-(methoxyimino)-*N*-methyl-2-[α-(2,5-xylyloxy)-*o*-tolyl]acetamide (EP-A 477 631); fluoxastrobin, (*E*)-{2-[6-(2-chlorophenoxy)-5-fluoropyrimidin-4-yloxy]phenyl}(5,6-dihydro-1,4,2-dioxazin-3-yl)methanone *O*-methyloxime (WO 97/27189); kresoxim-methyl, methyl (*E*)-methoxyimino[α-(*o*-tolyloxy)-*o*-tolyl] acetate (EP-A 253 213); metominostrobin, (*E*)-2-(methoxyimino)-*N*-methyl-2-(2-phenoxyphenyl)acetamide (EP-A 398 692); orysastrobin, (2*E*)-2-(methoxyimino)-2-{2-[(3*E*,5*E*,6*E*)-5-(methoxyimino)-4,6-dimethyl-2,8-dioxa-3,7-diazanona-3,6-dien-1-yl]phenyl}-*N*-methylacetamide (WO 97/15552); picoxystrobin, methyl 3-methoxy-2-[2-(6-trifluoromethylpyridin-2-yloxymethyl)phenyl]acrylate (EP-A 278 595); trifloxystrobin, methyl (*E*)-methoxyimino-{(*E*)-α-[1-(α,α,α-trifluoro-*m*-tolyl)ethylideneaminooxy]-*o*-tolyl}acetate (EP-A 460 575); carboxin, 5,6-dihydro-2-methyl-*N*-phenyl-1,4-oxathiin-3-carboxamide (US 3 249 499); benalaxyl, methyl *N*-(phenylacetyl)-*N*-(2,6-xylyl)-DL-alaninate (DE 29 03 612); boscalid, 2-chloro-*N*-(4'-chlorbiphenyl-2-yl)nicotinamide (EP-A 545 099); fenhexamid, N-(2,3-dichloro-4-hydroxyphenyl)-1-methylcyclohexanecarboxamide (Proc. Br. Crop Prot. Conf. - Pests Dis., 1998, Vol. 2, p. 327); flutolanil,α,α,α-trifluoro-3'-isopropoxy-*o*-toluanilide (JP 1104514); furametpyr, 5-chloro-*N*-(1,3-dihydro-1,1,3-trimethyl-4-isobenzofuranyl)-1,3-dimethyl-1*H*-pyrazole-4-carboxamide [CAS RN 123572-88-3]; mepronil, 3'-isopropoxy-o-toluanilide (US 3 937 840); metalaxyl, methyl *N*-(methoxyacetyl)-*N*-(2,6-xylyl)-DL-alaninate (GB 15 00 581); mefenoxam (metalaxyl-M), methyl *N*-(2,6-dimethylphenyl)-*N*-(methoxyacetyl)-D-alaninate; ofurace, (*RS*)-α-(2-chloro-N-2,6-xylylacetamido)-γ-butyrolactone [CAS RN 58810-48-3]; oxadixyl; *N*-(2,6-dimethylphenyl)-2-methoxy-*N*-(2-oxo-3-oxazolidinyl)acetamide (GB 20 58 059); oxycarboxin, 5,6-dihydro-2-methyl-1,4-oxathiin-3-carboxanilide 4,4-dioxide (US 3 399 214); penthiopyrad, *N*-[2-(1,3-dimethylbutyl)-3-thienyl]-1-methyl-3-(trifluoromethyl)-1*H*-pyrazole-4-carboxamide (JP 10130268); thifluzamide, *N*-[2,6-dibromo-4-(trifluoromethoxy)phenyl]-2-methyl-4-(trifluoromethyl)-5-thiazolecarboxamide; tiadinil, 3'-chloro-4,4'-dimethyl-1,2,3-thiadiazole-5-carboxanilide [CAS RN 223580-51-6]; dimethomorph, 3-(4-chlorophenyl)-3-(3,4-dimethoxyphenyl)-1-morpholin-4-ylpropenone (EP-A 120 321); flumorph, 3-(4-fluorophenyl)-3-(3,4-dimethoxyphenyl)-1-morpholin-4-ylpropenone (EP-A 860 438); flumetover, 2-(3,4-dimethoxyphenyl)-*N*-ethyl-α,α,α-trifluoro-*N*-methyl-*p*-toluamide [AGROW No. 243, 22 (1995)]; fluopicolide (picobenzamid), 2,6-dichloro-N-(3-chloro-5-trifluoromethylpyridin-2-ylmethyl) benzamide (WO 99/42447); zoxamide, (*RS*)-3,5-dichloro-*N*-(3-chloro-1-ethyl-1-methyl-2-oxopropyl)-p-toluamide [CAS RN 156052-68-5]; carpropamid, 2,2-dichloro-*N*-[1-(4-chlorophenyl)ethyl]-1-ethyl-3-methylcyclopropanecarboxamide [CAS RN 104030-54-8]; diclocymet, 2-cyano-*N*-[(1*R*)-1-(2,4-dichlorophenyl)ethyl]-3,3-dimethyl butanamide; mandipropamid, (*RS*)-2-(4-chlorophenyl)-*N*-[3-methoxy-4-(prop-2-ynyloxy)phenethyl]-2-(prop-2-ynyloxy)acetamide [CAS RN 374726-62-2]; fluazinam, 3-chloro-N-[3-chloro-2,6-dinitro-4-(trifluoromethyl)phenyl]-5-(trifluoromethyl)-2-pyridinamine (The Pesticide Manual, publ. The British Crop Protection Council, 10th ed. (1995), p. 474); pyrifenox, 1-(2,4-dichlorophenyl)-2-(3-pyridinyl)ethanone *O*-methyloxime (EP-A 49 854); bupirimate, 5-butyl-2-ethylamino-6-methyl-pyrimidin-4-yldimethylsulfamate [CAS RN 41483-43-6]; cyprodinil, (4-cyclopropyl-6-methylpyrimidin-2-yl)phenylamine (EP-A 310 550); fenarimol, (4-chlorophenyl) (2-chlorophenyl) pyrimidin-5-ylmethanol (GB 12 18 623); ferimzone, (*Z*)-2'-methylacetophenone 4,6-dimethylpyrimidin-2-ylhydrazone [CAS RN 89269-64-7]; mepanipyrim, (4-methyl-6-prop-1-ynylpyrimidin-2-yl) phenylamine (EP-A 224 339); nuarimol, α-(2-chlorophenyl)-α-(4-fluorophenyl)-5-pyrimidinemethanol (GB 12 18 623); pyrimethanil, 4,6-dimethylpyrimidin-2-ylphenylamine (DD-A 151 404); triforine, *N,N*-{piperazine-1,4-diyl-bis[(trichloromethyl)methylene]}diformamide (DE 19 01 421); fenpiclonil, 4-(2,3-dichlorophenyl)-1 H-pyrrole-3-carbonitrile (Proc. 1988 Br. Crop Prot. Conf. - Pests Dis., Vol. 1, p. 65); fludioxonil, 4-(2,2-difluorobenzo[1,3]dioxol-4-yl)-1H-pyrrole-3-carbonitrile (The Pesticide Manual, publ. The British Crop Protection Council, 10th ed. (1995), p. 482); aldimorph, 4-alkyl-2,5(or 2,6)-dimethylmorpholine, comprising 65-75% of 2,6-dimethylmorpholine and 25-35% of 2,5-dimethylmorpholine, comprising more than 85% of 4-dodecyl-2,5(or 2,6)-dimethylmorpholine, where "alkyl" may also include octyl, decyl, tetradecyl or hexadecyl and where the cis/trans ratio is 1:1; dodemorph, 4-cyclododecyl-2,6-dimethylmorpholine (DE 1198125); fenpropimorph, (*RS*)-*cis*-4-[3-(4-*tert*-butylphenyl)-2-methylpropyl]-2,6-dimethylmorpholine (DE 27 52 096); tridemorph, 2,6-dimethyl-4-tridecylmorpholine (DE 11 64 152); fenpropidin, (*RS*)-1-[3-(4-*tert* butylphenyl)-2-methylpropyl]piperidine (DE 27 52 096); iprodione, N-isopropyl-3-(3,5-dichloro-phenyl)-2,4-dioxoimidazolidine-1-carboxamide (GB 13 12 536);

procymidone, *N*-(3,5-dichlorophenyl)-1,2-dimethylcyclopropane-1,2-dicarboximide (US 3 903 090); vinclozolin, 3-(3,5-dichlorophenyl)-5-methyl-5-vinyloxazolidine-2,4-dione (DE-OS 22 07 576); famoxadone, (*RS*)-3-anilino-5-methyl-5-(4-phenoxyphenyl)-1,3-oxazolidine-2,4-dione; fenamidone, (*S*)-1-anilino-4-methyl-2-methylthio-4-phenylimidazolin-5-one; octhilinone; probenazole, 3-allyloxy-1,2-benzothiazole 1,1-dioxide; amisulbrom, N,N-dimethyl-3-(3-bromo-6-fluoro-2-methylindole-1-sulfonyl)-[1,2,4]triazole-1-sulfonamide (WO 03/053145); anilazine, 4,6-dichloro-*N*-(2-chlorophenyl)-1,3,5-triazine-2-amine (US 2 720 480); diclomezine, 6-(3,5-dichlorophenyl)-p-tolyl)pyridazin-3(2*H*)-one; pyroquilon; proquinazid, 6-iodo-2-propoxy-3-propylquinazolin-4(3*H*)-one (WO 97/48684); tricyclazole, 5-methyl-1,2,4-triazolo[3,4-b] benzothiazole (GB 14 19 121); acibenzolar-S-methyl, methyl benzo[1,2,3]thiadiazole-7-carbothionate; captafol, *N*-(1,1,2,2-tetrachloroethylthio)cyclohex-4-ene-1,2-dicarboximide; captan, 2-trichloromethylsulfanyl-3a,4,7,7a-tetrahydroisoindole-1,3-dione (US 2 553 770); dazomet, 3,5-dimethyl-1,3,5-thiadiazinane-2-thione; folpet, 2-trichloromethylsulfanylisoindole-1,3-dione (US 2 553 770); fenoxanil, *N*-(1-cyano-1,2-dimethylpropyl)-2-(2,4-dichlorophenoxy) propanamide; quinoxyfen, 5,7-dichloro-4-(4-fluorophenoxy)quinoline (US 5 240 940); mancozeb, manganese ethylenebis(dithiocarbanate) zinc complex (US 3 379 610); maneb, manganese ethylenebis(dithiocarbamate) (US 2 504 404); metam, methyldithiocarbaminic acid (US 2 791 605); metiram, zinc ammoniate ethylenebis(dithiocarbamate) (US 3 248 400); propineb, zinc propyl-enebis(dithiocarbamate) polymer (BE 611 960); ferbam, iron(3+) dimethyldithiocarbamate (US 1 972 961); thiram, bis(dimethylthiocarbamoyl) disulfide (DE 642 532); ziram, dimethyldithiocarbamate; zineb, zinc ethylenebis(dithiocarbamate) (US 2 457 674); diethofencarb, isopropyl 3,4-diethoxycarbanilate; iprovalicarb, isopropyl [(1S)-2-methyl-1-(1-p-tolylethylcarbamoyl)propyl]carbamate (EP-A 472 996); flubenthiavalicarb (benthiavalicarb), isopropyl {(S)-1-[(1R)-1-(6-fluorobenzothiazol-2-yl)ethylcarbamoyl]-2-methylpropyl)carbamate (J PA 09/323 984); propamocarb, propyl 3-(dimethylamino)propylcarbamate (DE 16 43 040); dodine, (2,4-dichlorophenoxy)acetic acid (US 2 867 562); iminoctadine, bis(8-guanidinooctyl)amine (GB 11 14 155); guazatine, mixture of products from the amidation of iminodi (octamethylene)diamine, mainlyiminoctadine; kasugamycin, 1 L-1,3,4/2,5,6-1-deoxy-2,3,4,5,6-pentahydroxycyclohexyl 2-amino-2,3,4,6-tetradeoxy-4-(α-iminoglycino)-α-D-arabino-hexopyranoside; streptomycin, *O*-2-deoxy-2-methylamino-α-L-glucopyranosyl-(1→2)-*O*-5-deoxy-3-*C*-formyl-α-L-lyxofuranosyl-(1→4)$N^1$,$N^3$-diamidino-D-streptamine; polyoxins, 5-(2-amino-5-*O*-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid and the salts thereof; validamycin A, binapacryl, (*RS*)-2-*sec*-butyl-4,6-dinitrophenyl 3-methylcrotonate; dinocap, the mixture of 2,6-dinitro-4-octylphenyl crotonate and 2,4-dinitro-6-octylphenyl crotonate, wherein "octyl" is a mixture of 1-methylheptyl, 1-ethylhexyl and 1-propylpentyl (US 2 526 660); dinobuton, (*RS*)-2-*sec*-butyl-4,6-dinitrophenyl isopropyl carbonate; dithianon, 5,10-dioxo-5,10-dihydronaphtho[2,3-b][1,4]dithiin-2,3-dicarbonitrile (GB 857 383); isoprothiolane, indol-3-ylacetic acid; fentin acetate, triphenyltin acetate (US 3 499 086); edifenphos, *O*-ethyl *S,S*-diphenyl phosphorodithioate; iprobenfos, S-benzyl *O,O*-diisopropyl phosphorothioate (Jpn. Pesticide Inf., No. 2, S. 11 (1970)); fosetyl, fosetyl-aluminum, (aluminum) ethylphosphonate (FR 22 54 276); pyrazophos, ethyl 2-diethoxyphosphinothioyloxy-5-methylpyrazolo[1,5-*a*]pyrimidine-6-carboxylate (DE 15 45 790); tolclofos-methyl, *O*-2,6-dichloro-*p*-tolyl *O,O*-dimethyl phosphorothioate (GB 1467 561); chlorothalonil, 2,4,5,6-tetrachloroisophthalonitrile (US 3 290 353); dichlofluanid, N-dichlorofluoromethylthio-*N,N*-dimethyl-*N*-phenylsulfamide (DE 11 93 498); flusulfamide, 2',4-dichloro-α,α,α-trifluoro-4'-nitro-*m*-toluenesulfanilide (EP-A 199 433); hexachlorobenzene (C. R. Seances Acad. Agric. Fr., Vol. 31, p. 24 (1945)); phthalide (DE 16 43 347); pencycuron, 1-(4-chlorobenzyl)-1-cyclopentyl-3-phenylurea (DE 27 32 257); quintozene, pentachloronitrobenzene (DE 682 048); thiophanate-methyl, 1,2-phenylenebis(iminocarbonothioyl)bis (dimethylcarbamate) (DE-OS 19 30 540); tolylfluanid, *N*-dichlorofluoromethylthio-*N,N*-dimethyl-*N*-*p*-tolylsulfamide (DE 11 93 498); Bordeaux mixture, mixture of calcium hydroxide and copper(II) sulfate; copper hydroxide, $Cu(OH)_2$; copper oxychloride, $Cu_2Cl(OH)_3$; cyflufenamid, (Z)-*N*-[α-(cyclopropylmethoxyimino)-2,3-difluoro-6-(trifluoromethyl)benzyl]-2-phenylacetamide (WO 96/19442); cymoxanil, 1-(2-cyano-2-methoxyiminoacetyl)-3-ethylurea (US 3 957 847); dimethirimol, 5-butyl-2-dimethylamino-6-methylpyrimidin-4-ol (GB 11 82 584); ethirimol, 5-butyl-2-ethylamino-6-methylpyrimidin-4-ol (GB 11 82 584); furalaxyl, methyl *N*-(2-furoyl)-*N*-(2,6-xylyl)-DL-alaninate (GB 14 48 810); metrafenone, 3'-bromo-2,3,4,6'-tetramethoxy-2',6-dimethylbenzophenone (US 5 945 567); spiroxamine, (8-tert-butyl-1,4-dioxaspiro[4.5]dec-2-yl)diethylamine (EP-A 281 842).

The compounds named according to IUPAC, their preparation and their fungicidal activity are likewise known: methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate (EP-A 12 01 648); methyl 2-(ortho-((2,5-dimethylphenyloxymethylene)phenyl)-3-methoxyacrylate (EP-A 226 917); 5-chloro-7-(4-methylpiperidin-1-yl)-6-(2,4,6-trifluorophenyl)-[1,2,4]triazolo[1,5-a]pyrimidine (WO 98/46608), 3,4-dichloro-N-(2-cyanophenyl)isothiazole-5-carboxamide (WO 99/24413), N-(2-{4-[3-(4-chlorophenyl)prop-2-ynyloxy]-3-methoxyphenyl}ethyl)-2-methanesulfonylamino-3-methyl-butyramide, N-(2-{4-[3-(4-chlorophenyl)prop-2-ynyloxy]-3-methoxyphenyl}ethyl)-2-ethane-sulfonylamino-3-methylbutyramide (WO 04/049804), N-(4'-bromobiphenyl-2-yl)-4-di-fluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide (WO 03/066609); N-(3',4'-dichloro-5-fluorobiphenyl-2-yl)-3-difluoromethyl-1-methylpyrazole-4-carboxamide (WO 03/053145); 2-butoxy-6-iodo-3-propylchromen-4-one (WO 03/14103); 3-[5-(4-chlorophenyl)-2,3-dimethylisoxazolidin-3-yl]pyridine (EP-A 10 35

122); amisulbrom, N,N-dimethyl-3-(3-bromo-6-fluoro-2-methylindole-1-sulfonyl)-[1,2,4]triazole-1-sulfonamide (WO 03/053145); methyl 3-(4-chlorophenyl)-3-(2-isopropoxycarbonylamino-3-methylbutyrylamino)propanoate (EP-A 1028125); pyraclostrobin (The Pesticide Manual, .13th edition, p 900).

6-(3,4-dichloro-phenyl)-5-methyl-[1,2,4]triazolo[1,5-a]pyrimidine-7-ylamine, 6-(4-tert-butylphenyl)-5-methyl-[1,2,4]triazolo[1,5-a]pyrimidine-7-ylamine, 5-methyl-6-(3,5,5-trimethyl-hexyl)-[1,2,4]triazolo[1,5-a]pyrimidine-7-ylamine, 5-methyl-6-octyl-[1,2,4]triazolo[1,5-a]pyrimidine-7-ylamine, 6-methyl-5-octyl-[1,2,4]triazolo[1,5-a]pyrimidine-7-ylamine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]triazolo[1,5-a]pyrimidine-7-ylamine, 6-octyl-5-propyl-[1,2,4]triazolo[1,5-a]pyrimidine-7-ylamine, 5-methoxymethyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoromethyl-6-(3,5,5-trimethyl-hexyl)-[1,2,4]triazolo[1,5-a]pyrimidine-7-ylamine are known from EP-A 71 792; EP-A 141 317; WO 03/009687; WO 05/087771; WO 05/087772; WO 05/087773; PCT/EP/05/002426; PCT/EP2006/050922; asn/or PCT/EP2006/060399.

N-(2',4'-difluorobiphenyl-2-yl)-1-methyl-3-trifluoromethyl-1H-pyrazole-4-carboxamide; N-(2',4'-dichlorobiphenyl-2-yl)-1-methyl-3-trifluoromethyl-1H-pyrazole-4-carboxamide; N-(2',4'-difluorobiphenyl-2-yl)-3-difluoromethyl-1-methyl-1H-pyrazole-4-carboxamide; N-(2',4'-dichlorobiphenyl-2-yl)-3-difluoromethyl-1-methyl-1H-pyrazole-4-carboxamide; N-(2',5'-difluorobiphenyl-2-yl)-1-methyl-3-trifluoromethyl-1H-pyrazole-4-carboxamide; N-(2',5'-dichlorobiphenyl-2-yl)-1-methyl-3-trifluoromethyl-1H-pyrazole-4-carboxamide; N-(2',5'-difluorobiphenyl-2-yl)-3-difluoromethyl-1-methyl-1H-pyrazole-4-carboxamide; N-(2',5'-dichlorobiphenyl-2-yl)-3-difluoromethyl-1-methyl-1H-pyrazole-4-carboxamide; N-(3',5'-difluorobiphenyl-2-yl)-1-methyl-3-trifluoromethyl-1H-pyrazole-4-carboxamide; N-(3',5'-dichlorobiphenyl-2-yl)-1-methyl-3-trifluoromethyl-1H-pyrazole-4-carboxamide, N-(3',5'-difluorobiphenyl-2-yl)-3-difluoromethyl-1-methyl-1H-pyrazole-4-carboxamide; N-(3',5'-dichlorobiphenyl-2-yl)-3-difluoromethyl-1-methyl-1H-pyrazole-4-carboxamide; N-(3'-fluorobiphenyl-2-yl)-1-methyl-3-trifluoromethyl-1H-pyrazole-4-carboxamide; N-(3'-chlorobiphenyl-2-yl)-1-methyl-3-trifluoromethyl-1H-pyrazole-4-carboxamide; N-(3'-fluorobiphenyl-2-yl)-3-difluoromethyl-1-methyl-1H-pyrazole-4-carboxamide; N-(3'-chlorobiphenyl-2-yl)-3-difluoromethyl-1-methyl-1H-pyrazole-4-carboxamide; N-(2'-fluorobiphenyl-2-yl)-1-methyl-3-trifluoromethyl-1H-pyrazole-4-carboxamide; N-(2'-chlorobiphenyl-2-yl)-1-methyl-3-trifluoromethyl-1H-pyrazole-4-carboxamide; N-(2'-fluorobiphenyl-2-yl)-3-difluoromethyl-1-methyl-1H-pyrazole-4-carboxamide; N-(2'-chlorbiphenyl-2-yl)-3-difluoromethyl-1-methyl-1H-pyrazole-4-carboxamide; N-(2'-fluoro-4'-chloro-5'-methylbiphenyl-2-yl)-1-methyl-3-trifluoromethyl-1H-pyrazole-4-carboxamide; N-(3',4',5'-trifluorobiphenyl-2-yl)-1-methyl-3-trifluoromethyl-1H-pyrazole-4-carboxamide; N-(3',4',5'-trifluorobiphenyl-2-yl)-1-methyl-3-difluoromethyl-1H-pyrazole-4-carboxamide; N-(2',4',5'-trifluorobiphenyl-2-yl)-1-methyl-3-difluoromethyl-1H-pyrazole-4-carboxamide; N-(3',4',5'-trifluorobiphenyl-2-yl)-3-chlorofluoromethyl-1-methyl-1H-pyrazole-4-carboxamide; N-[2-(1,1,2,3,3,3-hexafluoropropoxy)phenyl]-1-methyl-3-trifluoromethyl-1H-pyrazole-4-carboxamide; N-[2-(1,1,2,3,3,3-hexafluoropropoxy)-phenyl]-3-difluoromethyl-1-methyl-1H-pyrazole-4-carboxamide, N-[2-(2-chloro-1,1,2-trifluoroethoxy)phenyl]-1-methyl-3-trifluoromethyl-1H-pyrazole-4-carboxamide; N-[2-(2-chlor-1,1,2-trifluoroethoxy)phenyl]-3-difluoromethyl-1-methyl-1H-pyrazole-4-carboxamide; 4-carbonsäure-N-[2-(1,1,2,2-tetrafluoroethoxy)phenyl]-3-difluoromethyl-1-methyl-1H-pyrazole-4-carboxamide; N-[2-(1,1,2,2-tetrafluoroethoxy)phenyl]-1-methyl-3-trifluoromethyl-1 H-pyrazole-4-carboxamide; N-(4'-(trifluoromethylthio)biphenyl-2-yl)-3-difluoromethyl-1-methyl-1 H-pyrazole-4-carboxamide; and N-(4'-(trifluoromethylthio)biphenyl-2-yl)-1-methyl-3-trifluoromethyl-1H-pyrazole-4-carboxamide are known from WO 2006/087343, WO 2001/42223, WO 2005/34628, WO 2005/123689, WO 2005/123690, WO 2006/120219, PCT/EP2006/064991, and/or EP application no. 06123463.9.

One typical problem arising in the field of pest control lies in the need to reduce the dosage rates of the active ingredient in order to reduce or avoid unfavorable environmental or toxicological effects whilst still allowing effective pest control.

In regard to the instant invention the term pests embrace animal pests, and harmful fungi.

Another problem encountered concerns the need to have available pest control agents which are effective against a broad spectrum of pests, e.g. both animal pests and harmful fungi.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compound in question. Therefore there is a need for pest control agents that help prevent or overcome resistance.

Another problem underlying the present invention is the desire for compositions that improve plants, a process which is commonly and hereinafter referred to as "plant health". The term plant health comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase

in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an object of the present invention to provide pesticidal mixtures which solve the problems of reducing the dosage rate and / or enhancing the spectrum of activity and / or combining knock-down activity with prolonged control and / or to resistance management and/or promoting the health of plants.

We have found that this object is in part or in whole achieved by the combination of active compounds defined in the outset.

Especially, it has been found that a mixture of a compound of formula I and compound IIA as defined in the outset show markedly enhanced action against pests compared to the control rates that are possible with the individual compounds and/or is suitable for improving the health of plants when applied to plants, parts of plants, seeds, or at their locus of growth.

Furthermore, it has been found that a mixture of a compound of formula I, a nicotinic receptor agonists/antagonists compound IIIA or an anthranilamide compound IIIB, compound IIB and/or compound IID as defined in the outset show markedly enhanced action against pests compared to the control rates that are possible with the individual compounds and/or is suitable for improving the health of plants when applied to plants, parts of plants, seeds, or at their locus of growth.

Furthermore, it has been found that mixtures of compound I, fungicidal compound IIA, fungicidal compound IIB and compound IID as defined in the outset show markedly enhanced action against pests compared to the control rates that are possible with the individual compounds and/or is suitable for improving the health of plants when applied to plants, parts of plants, seeds, or at their locus of growth.

In this connection, it has been found that a mixture of a compound of formula I and compound IIC as defined in the outset can be used for plant protection, since also these mixtures show markedly enhanced action against pests compared to the control rates that are possible with the individual compounds and/or is suitable for improving the health of plants when applied to plants, parts of plants, seeds, or at their locus of growth.

It has furthermore been found that the following mixtures can be used for plant protection, since these mixtures show markedly enhanced action against fungal pests compared to the control rates that are possible with the individual compounds and/or are suitable for improving the health of plants when applied to plants, parts of plants, seeds, or at their locus of growth:

1) Fungicidal mixtures consisting of fungicidal compound IIB and IID as defined above.
2) Fungicidal mixtures consisting of three fungicidal compounds, wherein two compounds are selected from List B, wherein List B is defined above, and the third fungidical compound is fungicidal compound IID selected from List D, which is defined as List B plus pyracolostrobin.

It has been found that the action of the inventive mixtures goes far beyond the fungicidal and/or insecticidal and/or plant health improving action of the active compounds present in the mixture alone.

Moreover, we have found that simultaneous, that is joint or separate, application of a compound I and compound IIA (and optionally one or two compounds IIB, or optionally compound IIB and compound IID) or successive application of a compound I and the compounds IIA (and IIB, IID) allows enhanced control of pests, that means animal pests, and harmful fungi, compared to the control rates that are possible with the individual compounds (synergistic mixtures).

Moreover, we have found that simultaneous, that is joint or separate, application of a compound I, a nicotinic receptor agonists/antagonists compound IIIA or an anthranilamide compound IIIB, compound IIB and/or compound IID or successive application of a compound I, a nicotinic receptor agonists/antagonists compound IIIA or an anthranilamide compound IIIB and compounds IID allows enhanced control of pests, that means animal pests, and harmful fungi, compared to the control rates that are possible with the individual compounds (synergistic mixtures).

Moreover, we have found that simultaneous, that is joint or separate, application of a fungicidal compounds IIB and IID and optionally a third fungicidal compound IIB or successive application of two compound IIB and compound IID and optionally a third fungicidal compound IIB allows enhanced control of pests, that means harmful fungi, compared to the control rates that are possible with the individual compounds (synergistic mixtures).

Preferred are the inventive secondary mixtures containing fipronil as compound I. Preferred are the inventive tertiary mixtures containing fipronil as compound I. Preferred are the inventive quaternary mixtures containing fipronil as compound I.

Preferred are the inventive secondary mixtures containing ethiprole as compound I. Preferred are the inventive tertiary mixtures containing ethiprole as compound I. Preferred are the inventive quaternary mixtures containing ethiprole as compound I.

Preferred are the inventive mixtures wherein, when compound IIA is fludioxonil, then compounds IIB1 and IIB2

(or IID2) are not selected from bitertanol, bromuconazole, cyproconazole, difenoconazole, diniconazole, epoxiconazole, fenbuconazole, fluquinconazole, flusilazole, flutriafol, hexaconazole, imibenconazole, ipconazole, metconazole, myclobutanil, penconazole, propiconazole, prothioconazole, simeconazole, triadimenol, triadimefon, tebuconazole, tetraconazole, triticonazole, paclobutrazol, and uniconazole-P.

Furthermore, inventive mixtures are preferred which do not contain fludioxonil.

Especially preferred are secondary mixtures containing fipronil as compound I and a fungicidal compound IIA selected from the list comprising azoles:, difenoconazole, fenbuconazole, fluquinconazole, flutriafol, ipconazole, tetraconazole, triadimenol, triadimefon, triticonazole, cyazofamid, triflumizol, benomyl, carbendazim, thiabendazole, ethaboxam, and hymexazole.

Especially preferred are secondary mixtures containing fipronil as compound I and a fungicidal compound IIA selected from the list comprising strobilurins: azoxystrobin, dimoxystrobin, fluoxastrobin, kresoxim-methyl, metominostrobin, picoxystrobin, and trifloxystrobin;

Especially preferred are secondary mixtures containing fipronil as compound I and a fungicidal compound IIA selected from the list comprising carboxamides: carboxin, benalaxyl, fenhexamid, flutolanil, furametpyr, metalaxyl, mefenoxam (metalaxyl-M), ofurace, oxadixyl, oxycarboxin, penthiopyrad, thifluzamide, tiadinil, fluopicolide (picobenzamid), and diclocymet.

Especially preferred are secondary mixtures containing fipronil as compound I and a fungicidal compound IIA selected from the list comprising heterocylic compounds: pyrimethanil, fenpiclonil, fludioxonil, iprodione, procymidone, famoxadone, fenamidone, octhilinone, probenazole, diclomezine, pyroquilon, proquinazid, tricyclazole, captafol, captan, dazomet, fenoxanil, and quinoxyfen.

Especially preferred are secondary mixtures containing fipronil as compound I and a fungicidal compound IIA selected from the list comprising carbamates: propineb diethofencarb, iprovalicarb, propamocarb, and methyl 3-(4-chlorophenyl)-3-(2-isopropoxycarbonylamino-3-methylbutyrylamino)propanoate.

Especially preferred are secondary mixtures containing fipronil as compound I and a fungicidal compound IIA selected from the carboxamides as defined at the outset, prefereably the carboxamides, more preferably N-(2'-fluoro-4'-chloro-5'-methylbiphenyl-2-yl)-1-methyl-3-trifluoro-methyl-1H-pyrazole-4 carboxamide, N-(3',4',5'-trifluorobiphenyl-2-yl)-1-methyl-3-trifluoromethyl-1H-pyrazole-4-carboxamide, N-(3',4',5'-trifluorobiphenyl-2-yl)-1-methyl-3-difluoromethyl-1H-pyrazole-4-carboxamide, N-(2',4',5'-trifluorobiphenyl-2-yl)-1-methyl-3-difluoromethyl-1H-pyrazole-4-carboxamide, N-(3',4',5'-trifluorobiphenyl-2-yl)-3-chlorofluoromethyl-1-methyl-1 H-pyrazole-4-carboxamide, N-(3' ,4'-dichloro-4-fluorobiphenyl-2-yl)-3-difluoro-methyl-1-methyl-pyrazole-4-carboxamide, N-(3',4'-dichloro-5-fluorobiphenyl-2-yl)-3-difluoromethyl-1-methylpyrazole-4-carboxamide, N-(2-(1,3-dimethylbutyl)-phenyl)-1,3-dimethyl-5-fluoro-1 H-pyrazole-4-carboxylic acid amide, N-(cis-2-bicyclopropyl-2-yl-phenyl)-3-difluoromethyl-1-methyl-1 H-pyrazole-4-carboxylic acid amide, N-(trans-2-bicyclopropyl-2-yl-phenyl)-3-difluoro-methyl-1-methyl-1H-pyrazole-4-carboxylic acid amide, 3-(difluoromethyl)-1-methyl-N-[1,2,3,4-tetrahydro-9-(1-methylethyl)-1,4-methanonaphthalen-5-yl]-1H-pyrazole-4carboxamide.

Especially preferred are secondary mixtures containing fipronil as compound I and a fungicidal compound IIA selected from the list comprising: guazatine; streptomycin, validamycin A; binapacryl, dinocap, dinobuton; dithianon, isoprothiolane; fentin salts, such as fentin-acetate; edifenphos, iprobenfos, fosetyl, pyrazophos, chlorothalonil, dichlofluanid, flusulfamide, phthalide, quintozene, thiophanate-methyl, tolylfluanid; copper acetate, copper hydroxide, copper oxychloride, sulfur; cyflufenamid, cymoxanil, dimethirimol, ethirimol, furalaxyl, metrafenone and spiroxamine.

Also especially preferred are secondary mixtures containing fipronil as compound I and a fungicidal compound IIA selected from the list comprising prothioconazole, difenoconazole, flutriafol, triadimenol, fludioxonil, mefenoxam, metalaxyl, azoxystronbin, trifloxystrobin.

Also especially preferred are tertiary mixtures containing fipronil as compound I and a fungicidal compound IIA and fungicdal compound IIB selected from the list comprising triticonazole, tebuconazole, cyproconazole, prochloraz or thiram.

Also especially preferred are quarternary mixtures containing fipronil as compound I and a fungicidal compound IIA, fungicdal compound IIB and fungicidal compound IID, wherein compound IID is pyraclostrobin.

In addition, with respect to their intended use, the following secondary mixtures are also especially preferred, wherein said mixtures contain fipronil as compound I and a fungicidal compound IIC selected from the group consisting of cyproconazole, epoxiconazole, hexaconazole, metconazole, propiconazole, tebu-con¬azole, imazalil, prochloraz, dimethomorph, aldimorph, dodemorph, fenpropi-morph, tridemorph, mancozeb, maneb, metam, metiram, ferbam, thiram, zineb, ziram and basic copper sulfate.

Especially preferred are tertiary mixtures containing fipronil as compound I, fungicidal compound IIA, fungicidal compound IIB and pyraclostrobin.

With respect to their intended use, the secondary, tertiary and quaternary mixtures of compound I, compound IIA (or compound IIC) and compounds IIB1 and compound IID2 listed in the tables below are especially preferred. If compound IIA is identical with compound IIB1 or IID2, the respective secondary (instead of tertiary) or tertiary mixture (instead of quarternay) is disclosed.

Table 1

Mixtures wherein compound I is fipronil, compound IIA is trifloxystrobin, and the combination of compounds IIB1 and IID2 in each case corresponds to a row of Table Q.

Table 2

Mixtures wherein compound I is fipronil, compound IIA is azoxystrobin, and the combination of compounds IIB1 and IID2 in each case corresponds to a row of Table Q.

Table 3

Mixtures wherein compound I is fipronil, compound IIA is boscalid, and the combination of compounds IIB1 and IID2 in each case corresponds to a row of Table Q.

Table 4

Mixtures wherein compound I is fipronil, compound IIA is metalaxyl, and the combination of compounds IIB1 and IID2 in each case corresponds to a row of Table Q.

Table 5

Mixtures wherein compound I is fipronil, compound IIA is metalaxyl-M, and the combination of compounds IIB1 and IID2 in each case corresponds to a row of Table Q.

Table 6

Mixtures wherein compound I is fipronil, compound IIC is cyproconazole, and the combination of compounds IIB1 and IID2 in each case corresponds to a row of Table Q.

Table 7

Mixtures wherein compound I is fipronil, compound IIC is epoxiconazole, and the combination of compounds IIB1 and IID2 in each case corresponds to a row of Table Q.

Table 8

Mixtures wherein compound I is fipronil, compound IIA is fenbuconazole, and the combination of compounds IIB1 and IID2 in each case corresponds to a row of Table Q.

Table 9

Mixtures wherein compound I is fipronil, compound IIA is fluquinconazole, and the combination of compounds IIB1 and IID2 in each case corresponds to a row of Table Q.

Table 10

Mixtures wherein compound I is fipronil, compound IIA is flutriafol, and the combination of compounds IIB1 and IID2 in each case corresponds to a row of Table Q.

Table 11

Mixtures wherein compound I is fipronil, compound IIA is ipconazole, and the combination of compounds IIB1 and IID2 in each case corresponds to a row of Table Q.

Table 12

Mixtures wherein compound I is fipronil, compound IIC is metconazole, and the combination of compounds

IIB1 and IID2 in each case corresponds to a row of Table Q.

Table 13

Mixtures wherein compound I is fipronil, compound IIC is propiconazole, and the combination of compounds IIB1 and IID2 in each case corresponds to a row of Table Q.

Table 14

Mixtures wherein compound I is fipronil, compound IIC is tebuconazole, and the combination of compounds IIB1 and IID2 in each case corresponds to a row of Table Q.

Table 15

Mixtures wherein compound I is fipronil, compound IIA is triadimenol, and the combination of compounds IIB1 and IID2 in each case corresponds to a row of Table Q. => tritconazole is not in compound IIA listing

Table 16

Mixtures wherein compound I is fipronil, compound IIA is imazalil, and the combination of compounds IIB1 and IID2 in each case corresponds to a row of Table Q.

Table 17

Mixtures wherein compound I is fipronil, compound IIC is prochloraz, and the combination of compounds IIB1 and IID2 in each case corresponds to a row of Table Q.

Table 18

Mixtures wherein compound I is fipronil, compound IIA is carbendazim, and the combination of compounds IIB1 and IID2 in each case corresponds to a row of Table Q.

Table 19

Mixtures wherein compound I is fipronil, compound IIA is thiabendazole, and the combination of compounds IIB1 and IID2 in each case corresponds to a row of Table Q.

Table 20

Mixtures wherein compound I is fipronil, compound IIA is ethaboxam, and the combination of compounds IIB1 and IID2 in each case corresponds to a row of Table Q.

Table 21

Mixtures wherein compound I is fipronil, compound IIA is hymexazole, and the combination of compounds IIB1 and IID2 in each case corresponds to a row of Table Q.

Table 22

Mixtures wherein compound I is fipronil, compound IIA is pyrimethanil, and the combination of compounds IIB1 and IID2 in each case corresponds to a row of Table Q.

Table 23

Mixtures wherein compound I is fipronil, compound IIA is fludioxonil, and the combination of compounds IIB1 and IID2 in each case corresponds to a row of Table Q.

Table 24

Mixtures wherein compound I is fipronil, compound IIC is aldimorph, and the combination of compounds IIB1 and IID2 in each case corresponds to a row of Table Q.

Table 25

Mixtures wherein compound I is fipronil, compound IIC is dodemorph, and the combination of compounds IIB1 and IID2 in each case corresponds to a row of Table Q.

Table 26

Mixtures wherein compound I is fipronil, compound IIC is fenpropimorph, and the combination of compounds IIB1 and IID2 in each case corresponds to a row of Table Q.

Table 27

Mixtures wherein compound I is fipronil, compound IIA is iprodione, and the combination of compounds IIB1 and IID2 in each case corresponds to a row of Table Q.

Table 28

Mixtures wherein compound I is fipronil, compound IIA is captan, and the combination of compounds IIB1 and IID2 in each case corresponds to a row of Table Q.

Table 29

Mixtures wherein compound I is fipronil, compound IIA is fenoxanil, and the combination of compounds IIB1 and IID2 in each case corresponds to a row of Table Q.

Table 30

Mixtures wherein compound I is fipronil, compound IIA is probenazole, and the combination of compounds IIB1 and IID2 in each case corresponds to a row of Table Q.

Table 31

Mixtures wherein compound I is fipronil, compound IIC is mancozeb, and the combination of compounds IIB1 and IID2 in each case corresponds to a row of Table Q.

Table 32

Mixtures wherein compound I is fipronil, compound IIC is metiram, and the combination of compounds IIB1 and IID2 in each case corresponds to a row of Table Q.

Table 33

Mixtures wherein compound I is fipronil, compound IIC is thiram, and the combination of compounds IIB1 and IID2 in each case corresponds to a row of Table Q.

Table 34

Mixtures wherein compound I is fipronil, compound IIC is ziram, and the combination of compounds IIB1 and IID2 in each case corresponds to a row of Table Q.

Table 35

Mixtures wherein compound I is fipronil, compound IIA is guazatin, and the combination of compounds IIB1

and IID2 in each case corresponds to a row of Table Q.

Table 36

Mixtures wherein compound I is fipronil, compound IIA is thiophanate-methyl, and the combination of compounds IIB1 and IID2 in each case corresponds to a row of Table Q.

Table 37

Mixtures wherein compound I is fipronil, compound IIA is chlorothalonil, and the combination of compounds IIB1 and IID2 in each case corresponds to a row of Table Q.

Table 38

Mixtures wherein compound I is fipronil, compound IIA is metrafenone, and the combination of compounds IIB1 and IID2 in each case corresponds to a row of Table Q.

Table 39

Mixtures wherein compound I is fipronil, compound IIA is difenoconazole, and the combination of compounds IIB1 and IID2 in each case corresponds to a row of Table Q.

Table 40

Mixtures wherein compound I is fipronil, compound IIA is N-(2'-fluoro-4'-chloro-5'-methylbiphenyl-2-yl)-1-methyl-3-trifluoromethyl-1H-pyrazole-4 carboxamide and the combination of compounds IIB1 and IID2 in each case corresponds to a row of Table Q.

Table 41

Mixtures wherein compound I is fipronil, compound IIA is N-(3',4',5'-trifluorobiphenyl-2-yl)-1-methyl-3-trifluoromethyl-1H-pyrazole-4-carboxamide, and the combination of compounds IIB1 and IID2 in each case corresponds to a row of Table Q.

Table 42

Mixtures wherein compound I is fipronil, compound IIA is N-(3',4',5'-trifluorobiphenyl-2-yl)-1-methyl-3-difluoromethyl-1 H-pyrazole-4-carboxamide, and the combination of compounds IIB1 and IID2 in each case corresponds to a row of Table Q.

Table 43

Mixtures wherein compound I is fipronil, compound IIA is N-(2',4',5'-trifluorobiphenyl-2-yl)-1-methyl-3-difluoromethyl-1 H-pyrazole-4-carboxamide, and the combination of compounds IIB1 and IID2 in each case corresponds to a row of Table Q.

Table 44

Mixtures wherein compound I is fipronil, compound IIA is N-(3',4',5'-trifluorobiphenyl-2-yl)-3-chlorofluoromethyl-1-methyl-1 H-pyrazole-4-carboxamide, and the combination of compounds IIB1 and IID2 in each case corresponds to a row of Table Q.

Table 45

Mixtures wherein compound I is fipronil, compound IIA is N-(3',4'-dichloro-4-fluorobiphenyl-2-yl)-3-difluoromethyl-1-methyl-pyrazole-4-carboxamide, and the combination of compounds IIB1 and IID2 in each case corresponds to a row of Table Q.

Table 46

Mixtures wherein compound I is fipronil, compound IIA is N-(3',4'-dichloro-5-fluorobiphenyl-2-yl)-3-difluoromethyl-1-methylpyrazole-4-carboxamide, and the combination of compounds IIB1 and IID2 in each case corresponds to a row of Table Q.

Table 47

Mixtures wherein compound I is fipronil, compound IIA is N-(2-(1,3-dimethylbutyl)-phenyl)-1,3-dimethyl-5-fluoro-1 H-pyrazole-4-carboxylic acid amide, and the combination of compounds IIB1 and IID2 in each case corresponds to a row of Table Q.

Table 48

Mixtures wherein compound I is fipronil, compound IIA is N-(cis-2-bicyclopropyl-2-yl-phenyl)-3-difluoromethyl-1-methyl-1 H-pyrazole-4-carboxylic acid amide, and the combination of compounds IIB1 and IID2 in each case corresponds to a row of Table Q.

Table 49

Mixtures wherein compound I is fipronil, compound IIA is N-(trans-2-bicyclopropyl-2-yl-phenyl)-3-difluoro-methyl-1-methyl-1 H-pyrazole-4-carboxylic acid amide, and the combination of compounds IIB1 and IID2 in each case corresponds to a row of Table Q.

Table 50

Mixtures wherein compound I is fipronil, compound IIA is 3-(difluoromethyl)-1-methyl-N-[1,2,3,4-tetrahydro-9-(1-methylethyl)-1,4-methanonaphthalen-5-yl]-1H-pyrazole-4-carboxamide, and the combination of compounds IIB1 and IID2 in each case corresponds to a row of Table Q.

Table 51

Mixtures wherein compound I is ethiprole, compound IIA is trifloxystrobin, and the combination of compounds IIB1 and IID2 in each case corresponds to a row of Table Q.

Table 52

Mixtures wherein compound I is ethiprole, compound IIA is azoxystrobin, and the combination of compounds IIB1 and IID2 in each case corresponds to a row of Table Q.

Table 53

Mixtures wherein compound I is ethiprole, compound IIA is boscalid, and the combination of compounds IIB1 and IID2 in each case corresponds to a row of Table Q.

Table 54

Mixtures wherein compound I is ethiprole, compound IIA is metalaxyl, and the combination of compounds IIB1 and IID2 in each case corresponds to a row of Table Q.

Table 55

Mixtures wherein compound I is ethiprole, compound IIA is metalaxyl-M, and the combination of compounds IIB1 and IID2 in each case corresponds to a row of Table Q.

Table 56

Mixtures wherein compound I is ethiprole, compound IIC is cyproconazole, and the combination of compounds

IIB1 and IID2 in each case corresponds to a row of Table Q.

Table 57

Mixtures wherein compound I is ethiprole, compound IIC is epoxiconazole, and the combination of compounds IIB1 and IID2 in each case corresponds to a row of Table Q.

Table 58

Mixtures wherein compound I is ethiprole, compound IIA is fenbuconazole, and the combination of compounds IIB1 and IID2 in each case corresponds to a row of Table Q.

Table 59

Mixtures wherein compound I is ethiprole, compound IIA is fluquinconazole, and the combination of compounds IIB1 and IID2 in each case corresponds to a row of Table Q.

Table 60

Mixtures wherein compound I is ethiprole, compound IIA is flutriafol, and the combination of compounds IIB1 and IID2 in each case corresponds to a row of Table Q.

Table 61

Mixtures wherein compound I is ethiprole, compound IIA is ipconazole, and the combination of compounds IIB1 and IID2 in each case corresponds to a row of Table Q.

Table 62

Mixtures wherein compound I is ethiprole, compound IIC is metconazole, and the combination of compounds IIB1 and IID2 in each case corresponds to a row of Table Q.

Table 63

Mixtures wherein compound I is ethiprole, compound IIC is propiconazole, and the combination of compounds IIB1 and IID2 in each case corresponds to a row of Table Q.

Table 64

Mixtures wherein compound I is ethiprole, compound II is prothioconazole, and the combination of compounds IIB1 and IID2 in each case corresponds to a row of Table Q.

Table 65

Mixtures wherein compound I is ethiprole, compound IIC is tebuconazole, and the combination of compounds IIB1 and IID2 in each case corresponds to a row of Table Q.

Table 66

Mixtures wherein compound I is ethiprole, compound IIA is triadimenol, and the combination of compounds IIB1 and IID2 in each case corresponds to a row of Table Q.

Table 67

Mixtures wherein compound I is ethiprole, compound IIC is imazalil, and the combination of compounds IIB1 and IID2 in each case corresponds to a row of Table Q.

Table 68

Mixtures wherein compound I is ethiprole, compound IIC is prochloraz, and the combination of compounds IIB1 and IID2 in each case corresponds to a row of Table Q.

Table 69

Mixtures wherein compound I is ethiprole, compound IIA is carbendazim, and the combination of compounds IIB1 and IID2 in each case corresponds to a row of Table Q.

Table 70

Mixtures wherein compound I is ethiprole, compound IIA is thiabendazole, and the combination of compounds IIB1 and IID2 in each case corresponds to a row of Table Q.

Table 71

Mixtures wherein compound I is ethiprole, compound IIA is ethaboxam, and the combination of compounds IIB1 and IID2 in each case corresponds to a row of Table Q.

Table 72

Mixtures wherein compound I is ethiprole, compound IIA is hymexazole, and the combination of compounds IIB1 and IID2 in each case corresponds to a row of Table Q.

Table 73

Mixtures wherein compound I is ethiprole, compound IIA is pyrimethanil, and the combination of compounds IIB1 and IID2 in each case corresponds to a row of Table Q.

Table 74

Mixtures wherein compound I is ethiprole, compound IIA is fludioxonil, and the combination of compounds IIB1 and IID2 in each case corresponds to a row of Table Q.

Table 75

Mixtures wherein compound I is ethiprole, compound IIC is aldimorph, and the combination of compounds IIB1 and IID2 in each case corresponds to a row of Table Q.

Table 76

Mixtures wherein compound I is ethiprole, compound IIC is dodemorph, and the combination of compounds IIB1 and IID2 in each case corresponds to a row of Table Q.

Table 77

Mixtures wherein compound I is ethiprole, compound IIC is fenpropimorph, and the combination of compounds IIB1 and IID2 in each case corresponds to a row of Table Q.

Table 78

Mixtures wherein compound I is ethiprole, compound IIA is iprodione, and the combination of compounds IIB1 and IID2 in each case corresponds to a row of Table Q.

Table 79

Mixtures wherein compound I is ethiprole, compound IIA is captan, and the combination of compounds IIB1

and IID2 in each case corresponds to a row of Table Q.

Table 80

Mixtures wherein compound I is ethiprole, compound IIA is fenoxanil, and the combination of compounds IIB1 and IID2 in each case corresponds to a row of Table Q.

Table 81

Mixtures wherein compound I is ethiprole, compound IIA is probenazole, and the combination of compounds IIB1 and IID2 in each case corresponds to a row of Table Q.

Table 82

Mixtures wherein compound I is ethiprole, compound IIC is mancozeb, and the combination of compounds IIB1 and IID2 in each case corresponds to a row of Table Q.

Table 83

Mixtures wherein compound I is ethiprole, compound IIC is metiram, and the combination of compounds IIB1 and IID2 in each case corresponds to a row of Table Q.

Table 84

Mixtures wherein compound I is ethiprole, compound IIC is thiram, and the combination of compounds IIB1 and IID2 in each case corresponds to a row of Table Q.

Table 85

Mixtures wherein compound I is ethiprole, compound IIC is ziram, and the combination of compounds IIB1 and IID2 in each case corresponds to a row of Table Q.

Table 86

Mixtures wherein compound I is ethiprole, compound IIA is guazatin, and the combination of compounds IIB1 and IID2 in each case corresponds to a row of Table Q.

Table 87

Mixtures wherein compound I is ethiprole, compound IIA is thiophanate-methyl, and the combination of compounds IIB1 and IID2 in each case corresponds to a row of Table Q.

Table 88

Mixtures wherein compound I is ethiprole, compound IIA is chlorothalonil, and the combination of compounds IIB1 and IID2 in each case corresponds to a row of Table Q.

Table 89

Mixtures wherein compound I is ethiprole, compound IIA is metrafenone, and the combination of compounds IIB1 and IID2 in each case corresponds to a row of Table Q.

Table 90

Mixtures wherein compound I is ethiprole, compound IIA is difenoconazole, and the combination of compounds IIB1 and IID2 in each case corresponds to a row of Table Q.

Table 91

Mixtures wherein compound I is fipronil, compound IIA is N-(3',4',5'-trifluorobiphenyl-2-yl)-1-methyl-3-trifluoromethyl-1H-pyrazole-4-carboxamide, and the combination of compounds IIB1 and IID2 in each case corresponds to a row of Table Q.

Table 92

Mixtures wherein compound I is fipronil, compound IIA is N-(3',4',5'-trifluorobiphenyl-2-yl)-1-methyl-3-difluoromethyl-1 H-pyrazole-4-carboxamide, and the combination of compounds IIB1 and IID2 in each case corresponds to a row of Table Q.

Table 93

Mixtures wherein compound I is fipronil, compound IIA is N-(2',4',5'-trifluorobiphenyl-2-yl)-1-methyl-3-difluoromethyl-1 H-pyrazole-4-carboxamide, and the combination of compounds IIB1 and IID2 in each case corresponds to a row of Table Q.

Table 94

Mixtures wherein compound I is ethiprole, compound IIA is N-(3',4',5'-trifluorobiphenyl-2-yl)-3-chlorofluoromethyl-1-methyl-1 H-pyrazole-4-carboxamide, and the combination of compounds IIB1 and IID2 in each case corresponds to a row of Table Q.

Table 95

Mixtures wherein compound I is ethiprole, compound IIA is N-(3',4'-dichloro-4-fluorobiphenyl-2-yl)-3-difluoromethyl-1-methyl-pyrazole-4-carboxamide, and the combination of compounds IIB1 and IID2 in each case corresponds to a row of Table Q.

Table 96

Mixtures wherein compound I is ethiprole, compound IIA is N-(3',4'-dichloro-5-fluorobiphenyl-2-yl)-3-difluoromethyl-1-methylpyrazole-4-carboxamide, and the combination of compounds IIB1 and IID2 in each case corresponds to a row of Table Q.

Table 97

Mixtures wherein compound I is ethiprole, compound IIA is N-(2-(1,3-dimethylbutyl)-phenyl)-1,3-dimethyl-5-fluoro-1 H-pyrazole-4-carboxylic acid amide, and the combination of compounds IIB1 and IID2 in each case corresponds to a row of Table Q.

Table 98

Mixtures wherein compound I is ethiprole, compound IIA is N-(cis-2-bicyclopropyl-2-yl-phenyl)-3-difluoromethyl-1-methyl-1 H-pyrazole-4-carboxylic acid amide, and the combination of compounds IIB1 and IID2 in each case corresponds to a row of Table Q.

Table 99

Mixtures wherein compound I is ethiprole, compound IIA is N-(trans-2-bicyclopropyl-2-yl-phenyl)-3-difluoromethyl-1-methyl-1 H-pyrazole-4-carboxylic acid amide, and the combination of compounds IIB1 and IID2 in each case corresponds to a row of Table Q.

Table 100

Mixtures wherein compound I is ethiprole, compound IIA is 3-(difluoromethyl)-1-methyl-N-[1,2,3,4-tetrahydro-9-(1-methylethyl)-1,4-methanonaphthalen-5-yl]-1H-pyrazole-4carboxamide, and the combination of compounds IIB1

and IID2 in each case corresponds to a row of Table Q.

Table Q

| Mixture No. | Compound IIB1 | Compound IID2 |
|---|---|---|
| M-1 | trifloxystrobin | - |
| M-2 | trifloxystrobin | orysatrobin |
| M-3 | trifloxystrobin | azoxystrobin |
| M-4 | trifloxystrobin | difenoconazole |
| M-5 | trifloxystrobin | boscalid |
| M-6 | trifloxystrobin | metalaxyl |
| M-7 | trifloxystrobin | cyproconazole |
| M-8 | trifloxystrobin | epoxiconazole |
| M-9 | trifloxystrobin | fenbuconazole |
| M-10 | trifloxystrobin | fluquinconazole |
| M-11 | trifloxystrobin | flutriafol |
| M-12 | trifloxystrobin | ipconazole |
| M-13 | trifloxystrobin | metconazole |
| M-14 | trifloxystrobin | propiconazole |
| M-15 | trifloxystrobin | prothioconazole |
| M-16 | trifloxystrobin | tebuconazole |
| M-17 | trifloxystrobin | triadimenol |
| M-18 | trifloxystrobin | triticonazole |
| M-19 | trifloxystrobin | imazalil |
| M-20 | trifloxystrobin | prochloraz |
| M-21 | trifloxystrobin | carbendazim |
| M-22 | trifloxystrobin | thiabendazole |
| M-23 | trifloxystrobin | ethaboxam |
| M-24 | trifloxystrobin | hymexazole |
| M-25 | trifloxystrobin | pyrimethanil |
| M-26 | trifloxystrobin | fludioxonil |
| M-27 | trifloxystrobin | aldimorph |
| M-28 | trifloxystrobin | dodemorph |
| M-29 | trifloxystrobin | fenpropimorph |
| M-30 | trifloxystrobin | iprodione |
| M-31 | trifloxystrobin | captan |
| M-32 | trifloxystrobin | fenoxanil |
| M-33 | trifloxystrobin | probenazol |
| M-34 | trifloxystrobin | mancozeb |
| M-35 | trifloxystrobin | metiram |
| M-36 | trifloxystrobin | thiram |
| M-37 | trifloxystrobin | ziram |

(continued)

| Mixture No. | Compound IIB1 | Compound IID2 |
|---|---|---|
| M-38 | trifloxystrobin | guazatin |
| M-39 | trifloxystrobin | thiophanate-methyl |
| M-40 | trifloxystrobin | chlorothalonil |
| M-41 | trifloxystrobin | metrafenone |
| M-42 | trifloxystrobin | pyraclostrobin |
| M-43 | orysastrobin | - |
| M-44 | orysastrobin | azoxystrobin |
| M-45 | orysastrobin | difenoconazole |
| M-46 | orysastrobin | boscalid |
| M-47 | orysastrobin | metalaxyl |
| M-48 | orysastrobin | cyproconazole |
| M-49 | orysastrobin | epoxiconazole |
| M-50 | orysastrobin | fenbuconazole |
| M-51 | orysastrobin | fluquinconazole |
| M-52 | orysastrobin | flutriafol |
| M-53 | orysastrobin | ipconazole |
| M-54 | orysastrobin | metconazole |
| M-55 | orysastrobin | propiconazole |
| M-56 | orysastrobin | prothioconazole |
| M-57 | orysastrobin | tebuconazole |
| M-58 | orysastrobin | triadimenol |
| M-59 | orysastrobin | triticonazole |
| M-60 | orysastrobin | imazalil |
| M-61 | orysastrobin | prochloraz |
| M-62 | orysastrobin | carbendazim |
| M-63 | orysastrobin | thiabendazole |
| M-64 | orysastrobin | ethaboxam |
| M-65 | orysastrobin | hymexazole |
| M-66 | orysastrobin | pyrimethanil |
| M-67 | orysastrobin | fludioxonil |
| M-68 | orysastrobin | aldimorph |
| M-69 | orysastrobin | dodemorph |
| M-70 | orysastrobin | fenpropimorph |
| M-71 | orysastrobin | iprodione |
| M-72 | orysastrobin | captan |
| M-73 | orysastrobin | fenoxanil |
| M-74 | orysastrobin | probenazol |
| M-75 | orysastrobin | mancozeb |

(continued)

| Mixture No. | Compound IIB1 | Compound IID2 |
|---|---|---|
| M-76 | orysastrobin | metiram |
| M-77 | orysastrobin | thiram |
| M-78 | orysastrobin | ziram |
| M-79 | orysastrobin | guazatin |
| M-80 | orysastrobin | thiophanate-methyl |
| M-81 | orysastrobin | chlorothalonil |
| M-82 | orysastrobin | metrafenone |
| M-83 | orysastrobin | pyraclostrobin |
| M-84 | azoxystrobin | - |
| M-85 | azoxystrobin | difenoconazole |
| M-86 | azoxystrobin | boscalid |
| M-87 | azoxystrobin | metalaxyl |
| M-88 | azoxystrobin | cyproconazole |
| M-89 | azoxystrobin | epoxiconazole |
| M-90 | azoxystrobin | fenbuconazole |
| M-91 | azoxystrobin | fluquinconazole |
| M-92 | azoxystrobin | flutriafol |
| M-93 | azoxystrobin | ipconazole |
| M-94 | azoxystrobin | metconazole |
| M-95 | azoxystrobin | propiconazole |
| M-96 | azoxystrobin | prothioconazole |
| M-97 | azoxystrobin | tebuconazole |
| M-98 | azoxystrobin | triadimenol |
| M-99 | azoxystrobin | triticonazole |
| M-100 | azoxystrobin | imazalil |
| M-101 | azoxystrobin | prochloraz |
| M-102 | azoxystrobin | carbendazim |
| M-103 | azoxystrobin | thiabendazole |
| M-104 | azoxystrobin | ethaboxam |
| M-105 | azoxystrobin | hymexazole |
| M-106 | azoxystrobin | pyrimethanil |
| M-107 | azoxystrobin | fludioxonil |
| M-108 | azoxystrobin | aldimorph |
| M-109 | azoxystrobin | dodemorph |
| M-110 | azoxystrobin | fenpropimorph |
| M-111 | azoxystrobin | iprodione |
| M-112 | azoxystrobin | captan |
| M-113 | azoxystrobin | fenoxanil |

(continued)

| Mixture No. | Compound IIB1 | Compound IID2 |
|---|---|---|
| M-114 | azoxystrobin | probenazol |
| M-115 | azoxystrobin | mancozeb |
| M-116 | azoxystrobin | metiram |
| M-117 | azoxystrobin | thiram |
| M-118 | azoxystrobin | ziram |
| M-119 | azoxystrobin | guazatin |
| M-120 | azoxystrobin | thiophanate-methyl |
| M-121 | azoxystrobin | chlorothalonil |
| M-122 | azoxystrobin | metrafenone |
| M-123 | azoxystrobin | pyraclostrobin |
| M-124 | difenoconazole | - |
| M-125 | difenoconazole | boscalid |
| M-126 | difenoconazole | metalaxyl |
| M-127 | difenoconazole | cyproconazole |
| M-128 | difenoconazole | epoxiconazole |
| M-129 | difenoconazole | fenbuconazole |
| M-130 | difenoconazole | fluquinconazole |
| M-131 | difenoconazole | flutriafol |
| M-132 | difenoconazole | ipconazole |
| M-133 | difenoconazole | metconazole |
| M-134 | difenoconazole | propiconazole |
| M-135 | difenoconazole | prothioconazole |
| M-136 | difenoconazole | tebuconazole |
| M-137 | difenoconazole | triadimenol |
| M-138 | difenoconazole | triticonazole |
| M-139 | difenoconazole | imazalil |
| M-140 | difenoconazole | prochloraz |
| M-141 | difenoconazole | carbendazim |
| M-142 | difenoconazole | thiabendazole |
| M-143 | difenoconazole | ethaboxam |
| M-144 | difenoconazole | hymexazole |
| M-145 | d ifenoconazole | pyrimethanil |
| M-146 | difenoconazole | fludioxonil |
| M-147 | difenoconazole | aldimorph |
| M-148 | difenoconazole | dodemorph |
| M-149 | difenoconazole | fenpropimorph |
| M-150 | difenoconazole | iprodione |
| M-151 | difenoconazole | captan |

(continued)

| Mixture No. | Compound IIB1 | Compound IID2 |
|---|---|---|
| M-152 | difenoconazole | fenoxanil |
| M-153 | difenoconazole | probenazol |
| M-154 | difenoconazole | mancozeb |
| M-155 | difenoconazole | metiram |
| M-156 | difenoconazole | thiram |
| M-157 | difenoconazole | ziram |
| M-158 | difenoconazole | guazatin |
| M-159 | difenoconazole | thiophanate-methyl |
| M-160 | difenoconazole | chlorothalonil |
| M-161 | difenoconazole | metrafenone |
| M-162 | difenoconazole | pyraclostrobin |
| M-163 | boscalid | - |
| M-164 | boscalid | metalaxyl |
| M-165 | boscalid | cyproconazole |
| M-166 | boscalid | epoxiconazole |
| M-167 | boscalid | fenbuconazole |
| M-168 | boscalid | fluquinconazole |
| M-169 | boscalid | flutriafol |
| M-170 | boscalid | ipconazole |
| M-171 | boscalid | metconazole |
| M-172 | boscalid | propiconazole |
| M-173 | boscalid | prothioconazole |
| M-174 | boscalid | tebuconazole |
| M-175 | boscalid | triadimenol |
| M-176 | boscalid | triticonazole |
| M-177 | boscalid | imazalil |
| M-178 | boscalid | prochloraz |
| M-179 | boscalid | carbendazim |
| M-180 | boscalid | thiabendazole |
| M-181 | boscalid | ethaboxam |
| M-182 | boscalid | hymexazole |
| M-183 | boscalid | pyrimethanil |
| M-184 | boscalid | fludioxonil |
| M-185 | boscalid | aldimorph |
| M-186 | boscalid | dodemorph |
| M-187 | boscalid | fenpropimorph |
| M-188 | boscalid | iprodione |
| M-189 | boscalid | captan |

(continued)

| Mixture No. | Compound IIB1 | Compound IID2 |
|---|---|---|
| M-190 | boscalid | fenoxanil |
| M-191 | boscalid | probenazol |
| M-192 | boscalid | mancozeb |
| M-193 | boscalid | metiram |
| M-194 | boscalid | thiram |
| M-195 | boscalid | ziram |
| M-196 | boscalid | guazatin |
| M-197 | boscalid | thiophanate-methyl |
| M-198 | boscalid | chlorothalonil |
| M-199 | boscalid | metrafenone |
| M-200 | boscalid | pyraclostrobin |
| M-201 | metalaxyl | - |
| M-202 | metalaxyl | cyproconazole |
| M-203 | metalaxyl | epoxiconazole |
| M-204 | metalaxyl | fenbuconazole |
| M-205 | metalaxyl | fluquinconazole |
| M-206 | metalaxyl | flutriafol |
| M-207 | metalaxyl | ipconazole |
| M-208 | metalaxyl | metconazole |
| M-209 | metalaxyl | propiconazole |
| M-210 | metalaxyl | prothioconazole |
| M-211 | metalaxyl | tebuconazole |
| M-212 | metalaxyl | triadimenol |
| M-213 | metalaxyl | triticonazole |
| M-214 | metalaxyl | imazalil |
| M-215 | metalaxyl | prochloraz |
| M-216 | metalaxyl | carbendazim |
| M-217 | metalaxyl | thiabendazole |
| M-218 | metalaxyl | ethaboxam |
| M-219 | metalaxyl | hymexazole |
| M-220 | metalaxyl | pyrimethanil |
| M-221 | metalaxyl | fludioxonil |
| M-222 | metalaxyl | aldimorph |
| M-223 | metalaxyl | dodemorph |
| M-224 | metalaxyl | fenpropimorph |
| M-225 | metalaxyl | iprodione |
| M-226 | metalaxyl | captan |
| M-227 | metalaxyl | fenoxanil |

(continued)

| Mixture No. | Compound IIB1 | Compound IID2 |
|---|---|---|
| M-228 | metalaxyl | probenazol |
| M-229 | metalaxyl | mancozeb |
| M-230 | metalaxyl | metiram |
| M-231 | metalaxyl | thiram |
| M-232 | metalaxyl | ziram |
| M-233 | metalaxyl | guazatin |
| M-234 | metalaxyl | thiophanate-methyl |
| M-235 | metalaxyl | chlorothalonil |
| M-236 | metalaxyl | metrafenone |
| M-237 | metalaxyl | pyraclostrobin |
| M-238 | cyproconazole | - |
| M-239 | cyproconazole | epoxiconazole |
| M-240 | cyproconazole | fenbuconazole |
| M-241 | cyproconazole | fluquinconazole |
| M-242 | cyproconazole | flutriafol |
| M-243 | cyproconazole | ipconazole |
| M-244 | cyproconazole | metconazole |
| M-245 | cyproconazole | propiconazole |
| M-246 | cyproconazole | prothioconazole |
| M-247 | cyproconazole | tebuconazole |
| M-248 | cyproconazole | triadimenol |
| M-249 | cyproconazole | triticonazole |
| M-250 | cyproconazole | imazalil |
| M-251 | cyproconazole | prochloraz |
| M-252 | cyproconazole | carbendazim |
| M-253 | cyproconazole | thiabendazole |
| M-254 | cyproconazole | ethaboxam |
| M-255 | cyproconazole | hymexazole |
| M-256 | cyproconazole | pyrimethanil |
| M-257 | cyproconazole | fludioxonil |
| M-258 | cyproconazole | aldimorph |
| M-259 | cyproconazole | dodemorph |
| M-260 | cyproconazole | fenpropimorph |
| M-261 | cyproconazole | iprodione |
| M-262 | cyproconazole | captan |
| M-263 | cyproconazole | fenoxanil |
| M-264 | cyproconazole | probenazol |
| M-265 | cyproconazole | mancozeb |

(continued)

| Mixture No. | Compound IIB1 | Compound IID2 |
|---|---|---|
| M-266 | cyproconazole | metiram |
| M-267 | cyproconazole | thiram |
| M-268 | cyproconazole | ziram |
| M-269 | cyproconazole | guazatin |
| M-270 | cyproconazole | thiophanate-methyl |
| M-271 | cyproconazole | chlorothalonil |
| M-272 | cyproconazole | metrafenone |
| M-273 | cyproconazole | pyraclostrobin |
| M-274 | epoxiconazole | - |
| M-275 | epoxiconazole | fenbuconazole |
| M-276 | epoxiconazole | fluquinconazole |
| M-277 | epoxiconazole | flutriafol |
| M-278 | epoxiconazole | ipconazole |
| M-279 | epoxiconazole | metconazole |
| M-280 | epoxiconazole | propiconazole |
| M-281 | epoxiconazole | prothioconazole |
| M-282 | epoxiconazole | tebuconazole |
| M-283 | epoxiconazole | triadimenol |
| M-284 | epoxiconazole | triticonazole |
| M-285 | epoxiconazole | imazalil |
| M-286 | epoxiconazole | prochloraz |
| M-287 | epoxiconazole | carbendazim |
| M-288 | epoxiconazole | thiabendazole |
| M-289 | epoxiconazole | ethaboxam |
| M-290 | epoxiconazole | hymexazole |
| M-291 | epoxiconazole | pyrimethanil |
| M-292 | epoxiconazole | fludioxonil |
| M-293 | epoxiconazole | aldimorph |
| M-294 | epoxiconazole | dodemorph |
| M-295 | epoxiconazole | fenpropimorph |
| M-296 | epoxiconazole | iprodione |
| M-297 | epoxiconazole | captan |
| M-298 | epoxiconazole | fenoxanil |
| M-299 | epoxiconazole | probenazol |
| M-300 | epoxiconazole | mancozeb |
| M-301 | epoxiconazole | metiram |
| M-302 | epoxiconazole | thiram |
| M-303 | epoxiconazole | ziram |

(continued)

| Mixture No. | Compound IIB1 | Compound IID2 |
|---|---|---|
| M-304 | epoxiconazole | guazatin |
| M-305 | epoxiconazole | thiophanate-methyl |
| M-306 | epoxiconazole | chlorothalonil |
| M-307 | epoxiconazole | metrafenone |
| M-308 | epoxiconazole | pyraclostrobin |
| M-309 | fenbuconazole | - |
| M-310 | fenbuconazole | fluquinconazole |
| M-311 | fenbuconazole | flutriafol |
| M-312 | fenbuconazole | ipconazole |
| M-313 | fenbuconazole | metconazole |
| M-314 | fenbuconazole | propiconazole |
| M-315 | fenbuconazole | prothioconazole |
| M-316 | fenbuconazole | tebuconazole |
| M-317 | fenbuconazole | triadimenol |
| M-318 | fenbuconazole | triticonazole |
| M-319 | fenbuconazole | imazalil |
| M-320 | fenbuconazole | prochloraz |
| M-321 | fenbuconazole | carbendazim |
| M-322 | fenbuconazole | thiabendazole |
| M-323 | fenbuconazole | ethaboxam |
| M-324 | fenbuconazole | hymexazole |
| M-325 | fenbuconazole | pyrimethanil |
| M-326 | fenbuconazole | fludioxonil |
| M-327 | fenbuconazole | aldimorph |
| M-328 | fenbuconazole | dodemorph |
| M-329 | fenbuconazole | fenpropimorph |
| M-330 | fenbuconazole | iprodione |
| M-331 | fenbuconazole | captan |
| M-332 | fenbuconazole | fenoxanil |
| M-333 | fenbuconazole | probenazol |
| M-334 | fenbuconazole | mancozeb |
| M-335 | fenbuconazole | metiram |
| M-336 | fenbuconazole | thiram |
| M-337 | fenbuconazole | ziram |
| M-338 | fenbuconazole | guazatin |
| M-339 | fenbuconazole | thiophanate-methyl |
| M-340 | fenbuconazole | chlorothalonil |
| M-341 | fenbuconazole | metrafenone |

(continued)

| Mixture No. | Compound IIB1 | Compound IID2 |
|---|---|---|
| M-342 | fenbuconazole | pyraclostrobin |
| M-343 | fluquinconazole | - |
| M-344 | fluquinconazole | flutriafol |
| M-345 | fluquinconazole | ipconazole |
| M-346 | fluquinconazole | metconazole |
| M-347 | fluquinconazole | propiconazole |
| M-348 | fluquinconazole | prothioconazole |
| M-349 | fluquinconazole | tebuconazole |
| M-350 | fluquinconazole | triadimenol |
| M-351 | fluquinconazole | triticonazole |
| M-352 | fluquinconazole | imazalil |
| M-353 | fluquinconazole | prochloraz |
| M-354 | fluquinconazole | carbendazim |
| M-355 | fluquinconazole | thiabendazole |
| M-356 | fluquinconazole | ethaboxam |
| M-357 | fluquinconazole | hymexazole |
| M-358 | fluquinconazole | pyrimethanil |
| M-359 | fluquinconazole | fludioxonil |
| M-360 | fluquinconazole | aldimorph |
| M-361 | fluquinconazole | dodemorph |
| M-362 | fluquinconazole | fenpropimorph |
| M-363 | fluquinconazole | iprodione |
| M-364 | fluquinconazole | captan |
| M-365 | fluquinconazole | fenoxanil |
| M-366 | fluquinconazole | probenazol |
| M-367 | fluquinconazole | mancozeb |
| M-368 | fluquinconazole | metiram |
| M-369 | fluquinconazole | thiram |
| M-370 | fluquinconazole | ziram |
| M-371 | fluquinconazole | guazatin |
| M-372 | fluquinconazole | thiophanate-methyl |
| M-373 | fluquinconazole | chlorothalonil |
| M-374 | fluquinconazole | metrafenone |
| M-375 | fluquinconazole | pyraclostrobin |
| M-376 | flutriafol | - |
| M-377 | flutriafol | ipconazole |
| M-378 | flutriafol | metconazole |
| M-379 | flutriafol | propiconazole |

(continued)

| Mixture No. | Compound IIB1 | Compound IID2 |
|---|---|---|
| M-380 | flutriafol | prothioconazole |
| M-381 | flutriafol | tebuconazole |
| M-382 | flutriafol | triadimenol |
| M-383 | flutriafol | triticonazole |
| M-384 | flutriafol | imazalil |
| M-385 | flutriafol | prochloraz |
| M-386 | flutriafol | carbendazim |
| M-387 | flutriafol | thiabendazole |
| M-388 | flutriafol | ethaboxam |
| M-389 | flutriafol | hymexazole |
| M-390 | flutriafol | pyrimethanil |
| M-391 | flutriafol | fludioxonil |
| M-392 | flutriafol | aldimorph |
| M-393 | flutriafol | dodemorph |
| M-394 | flutriafol | fenpropimorph |
| M-395 | flutriafol | iprodione |
| M-396 | flutriafol | captan |
| M-397 | flutriafol | fenoxanil |
| M-398 | flutriafol | probenazol |
| M-399 | flutriafol | mancozeb |
| M-400 | flutriafol | metiram |
| M-401 | flutriafol | thiram |
| M-402 | flutriafol | ziram |
| M-403 | flutriafol | guazatin |
| M-404 | flutriafol | thiophanate-methyl |
| M-405 | flutriafol | chlorothalonil |
| M-406 | flutriafol | metrafenone |
| M-407 | flutriafol | pyraclostrobin |
| M-408 | ipconazole | - |
| M-409 | ipconazole | metconazole |
| M-410 | ipconazole | propiconazole |
| M-411 | ipconazole | prothioconazole |
| M-412 | ipconazole | tebuconazole |
| M-413 | ipconazole | triadimenol |
| M-414 | ipconazole | triticonazole |
| M-415 | ipconazole | imazalil |
| M-416 | ipconazole | prochloraz |
| M-417 | ipconazole | carbendazim |

(continued)

| Mixture No. | Compound IIB1 | Compound IID2 |
|---|---|---|
| M-418 | ipconazole | thiabendazole |
| M-419 | ipconazole | ethaboxam |
| M-420 | ipconazole | hymexazole |
| M-421 | ipconazole | pyrimethanil |
| M-422 | ipconazole | fludioxonil |
| M-423 | ipconazole | aldimorph |
| M-424 | ipconazole | dodemorph |
| M-425 | ipconazole | fenpropimorph |
| M-426 | ipconazole | iprodione |
| M-427 | ipconazole | captan |
| M-428 | ipconazole | fenoxanil |
| M-429 | ipconazole | probenazol |
| M-430 | ipconazole | mancozeb |
| M-431 | ipconazole | metiram |
| M-432 | ipconazole | thiram |
| M-433 | ipconazole | ziram |
| M-434 | ipconazole | guazatin |
| M-435 | ipconazole | thiophanate-methyl |
| M-436 | ipconazole | chlorothalonil |
| M-437 | ipconazole | metrafenone |
| M-438 | ipconazole | pyraclostrobin |
| M-439 | metconazole | - |
| M-440 | metconazole | propiconazole |
| M-441 | metconazole | prothioconazole |
| M-442 | metconazole | tebuconazole |
| M-443 | metconazole | triadimenol |
| M-444 | metconazole | triticonazole |
| M-445 | metconazole | imazalil |
| M-446 | metconazole | prochloraz |
| M-447 | metconazole | carbendazim |
| M-448 | metconazole | thiabendazole |
| M-449 | metconazole | ethaboxam |
| M-450 | metconazole | hymexazole |
| M-451 | metconazole | pyrimethanil |
| M-452 | metconazole | fludioxonil |
| M-453 | metconazole | aldimorph |
| M-454 | metconazole | dodemorph |
| M-455 | metconazole | fenpropimorph |

(continued)

| Mixture No. | Compound IIB1 | Compound IID2 |
|---|---|---|
| M-456 | metconazole | iprodione |
| M-457 | metconazole | captan |
| M-458 | metconazole | fenoxanil |
| M-459 | metconazole | probenazol |
| M-460 | metconazole | mancozeb |
| M-461 | metconazole | metiram |
| M-462 | metconazole | thiram |
| M-463 | metconazole | ziram |
| M-464 | metconazole | guazatin |
| M-465 | metconazole | thiophanate-methyl |
| M-466 | metconazole | chlorothalonil |
| M-467 | metconazole | metrafenone |
| M-468 | metconazole | pyraclostrobin |
| M-469 | propiconazole | - |
| M-470 | propiconazole | prothioconazole |
| M-471 | propiconazole | tebuconazole |
| M-472 | propiconazole | triadimenol |
| M-473 | propiconazole | triticonazole |
| M-474 | propiconazole | imazalil |
| M-475 | propiconazole | prochloraz |
| M-476 | propiconazole | carbendazim |
| M-477 | propiconazole | thiabendazole |
| M-478 | propiconazole | ethaboxam |
| M-479 | propiconazole | hymexazole |
| M-480 | propiconazole | pyrimethanil |
| M-481 | propiconazole | fludioxonil |
| M-482 | propiconazole | aldimorph |
| M-483 | propiconazole | dodemorph |
| M-484 | propiconazole | fenpropimorph |
| M-485 | propiconazole | iprodione |
| M-486 | propiconazole | captan |
| M-487 | propiconazole | fenoxanil |
| M-488 | propiconazole | probenazol |
| M-489 | propiconazole | mancozeb |
| M-490 | propiconazole | metiram |
| M-491 | propiconazole | thiram |
| M-492 | propiconazole | ziram |
| M-493 | propiconazole | guazatin |

(continued)

| Mixture No. | Compound IIB1 | Compound IID2 |
|---|---|---|
| M-494 | propiconazole | thiophanate-methyl |
| M-495 | propiconazole | chlorothalonil |
| M-496 | propiconazole | metrafenone |
| M-497 | propiconazole | pyraclostrobin |
| M-498 | prothioconazole | - |
| M-499 | prothioconazole | tebuconazole |
| M-500 | prothioconazole | triadimenol |
| M-501 | prothioconazole | triticonazole |
| M-502 | prothioconazole | imazalil |
| M-503 | prothioconazole | prochloraz |
| M-504 | prothioconazole | carbendazim |
| M-505 | prothioconazole | thiabendazole |
| M-506 | prothioconazole | ethaboxam |
| M-507 | prothioconazole | hymexazole |
| M-508 | prothioconazole | pyrimethanil |
| M-509 | prothioconazole | fludioxonil |
| M-510 | prothioconazole | aldimorph |
| M-511 | prothioconazole | dodemorph |
| M-512 | prothioconazole | fenpropimorph |
| M-513 | prothioconazole | iprodione |
| M-514 | prothioconazole | captan |
| M-515 | prothioconazole | fenoxanil |
| M-516 | prothioconazole | probenazol |
| M-517 | prothioconazole | mancozeb |
| M-518 | prothioconazole | metiram |
| M-519 | prothioconazole | thiram |
| M-520 | prothioconazole | ziram |
| M-521 | prothioconazole | guazatin |
| M-522 | prothioconazole | thiophanate-methyl |
| M-523 | prothioconazole | chlorothalonil |
| M-524 | prothioconazole | metrafenone |
| M-525 | prothioconazole | pyraclostrobin |
| M-526 | tebuconazole | - |
| M-527 | tebuconazole | triadimenol |
| M-528 | tebuconazole | triticonazole |
| M-529 | tebuconazole | imazalil |
| M-530 | tebuconazole | prochloraz |
| M-531 | tebuconazole | carbendazim |

(continued)

| Mixture No. | Compound IIB1 | Compound IID2 |
|---|---|---|
| M-532 | tebuconazole | thiabendazole |
| M-533 | tebuconazole | ethaboxam |
| M-534 | tebuconazole | hymexazole |
| M-535 | tebuconazole | pyrimethanil |
| M-536 | tebuconazole | fludioxonil |
| M-537 | tebuconazole | aldimorph |
| M-538 | tebuconazole | dodemorph |
| M-539 | tebuconazole | fenpropimorph |
| M-540 | tebuconazole | iprodione |
| M-541 | tebuconazole | captan |
| M-542 | tebuconazole | fenoxanil |
| M-543 | tebuconazole | probenazol |
| M-544 | tebuconazole | mancozeb |
| M-545 | tebuconazole | metiram |
| M-546 | tebuconazole | thiram |
| M-547 | tebuconazole | ziram |
| M-548 | tebuconazole | guazatin |
| M-549 | tebuconazole | thiophanate-methyl |
| M-550 | tebuconazole | chlorothalonil |
| M-551 | tebuconazole | metrafenone |
| M-552 | tebuconazole | pyraclostrobin |
| M-553 | triadimenol | - |
| M-554 | triadimenol | triticonazole |
| M-555 | triadimenol | imazalil |
| M-556 | triadimenol | prochloraz |
| M-557 | triadimenol | carbendazim |
| M-558 | triadimenol | thiabendazole |
| M-559 | triadimenol | ethaboxam |
| M-560 | triadimenol | hymexazole |
| M-561 | triadimenol | pyrimethanil |
| M-562 | triadimenol | fludioxonil |
| M-563 | triadimenol | aldimorph |
| M-564 | triadimenol | dodemorph |
| M-565 | triadimenol | fenpropimorph |
| M-566 | triadimenol | iprodione |
| M-567 | triadimenol | captan |
| M-568 | triadimenol | fenoxanil |
| M-569 | triadimenol | probenazol |

(continued)

| Mixture No. | Compound IIB1 | Compound IID2 |
|---|---|---|
| M-570 | triadimenol | mancozeb |
| M-571 | triadimenol | metiram |
| M-572 | triadimenol | thiram |
| M-573 | triadimenol | ziram |
| M-574 | triadimenol | guazatin |
| M-575 | triadimenol | thiophanate-methyl |
| M-576 | triadimenol | chlorothalonil |
| M-577 | triadimenol | metrafenone |
| M-578 | triadimenol | pyraclostrobin |
| M-579 | triticonazole | - |
| M-580 | triticonazole | imazalil |
| M-581 | triticonazole | prochloraz |
| M-582 | triticonazole | carbendazim |
| M-583 | triticonazole | thiabendazole |
| M-584 | triticonazole | ethaboxam |
| M-585 | triticonazole | hymexazole |
| M-586 | triticonazole | pyrimethanil |
| M-587 | triticonazole | fludioxonil |
| M-588 | triticonazole | aldimorph |
| M-589 | triticonazole | dodemorph |
| M-590 | triticonazole | fenpropimorph |
| M-591 | triticonazole | iprodione |
| M-592 | triticonazole | captan |
| M-593 | triticonazole | fenoxanil |
| M-594 | triticonazole | probenazol |
| M-595 | triticonazole | mancozeb |
| M-596 | triticonazole | metiram |
| M-597 | triticonazole | thiram |
| M-598 | triticonazole | ziram |
| M-599 | triticonazole | guazatin |
| M-600 | triticonazole | thiophanate-methyl |
| M-601 | triticonazole | chlorothalonil |
| M-602 | triticonazole | metrafenone |
| M-603 | triticonazole | pyraclostrobin |
| M-604 | imazalil | - |
| M-605 | imazalil | prochloraz |
| M-606 | imazalil | carbendazim |
| M-607 | imazalil | thiabendazole |

(continued)

| Mixture No. | Compound IIB1 | Compound IID2 |
|---|---|---|
| M-608 | imazalil | ethaboxam |
| M-609 | imazalil | hymexazole |
| M-610 | imazalil | pyrimethanil |
| M-611 | imazalil | fludioxonil |
| M-612 | imazalil | aldimorph |
| M-613 | imazalil | dodemorph |
| M-614 | imazalil | fenpropimorph |
| M-615 | imazalil | iprodione |
| M-616 | imazalil | captan |
| M-617 | imazalil | fenoxanil |
| M-618 | imazalil | probenazol |
| M-619 | imazalil | mancozeb |
| M-620 | imazalil | metiram |
| M-621 | imazalil | thiram |
| M-622 | imazalil | ziram |
| M-623 | imazalil | guazatin |
| M-624 | imazalil | thiophanate-methyl |
| M-625 | imazalil | chlorothalonil |
| M-626 | imazalil | metrafenone |
| M-627 | imazalil | pyraclostrobin |
| M-628 | prochloraz | - |
| M-629 | prochloraz | carbendazim |
| M-630 | prochloraz | thiabendazole |
| M-631 | prochloraz | ethaboxam |
| M-632 | prochloraz | hymexazole |
| M-633 | prochloraz | pyrimethanil |
| M-634 | prochloraz | fludioxonil |
| M-635 | prochloraz | aldimorph |
| M-636 | prochloraz | dodemorph |
| M-637 | prochloraz | fenpropimorph |
| M-638 | prochloraz | iprodione |
| M-639 | prochloraz | captan |
| M-640 | prochloraz | fenoxanil |
| M-641 | prochloraz | probenazol |
| M-642 | prochloraz | mancozeb |
| M-643 | prochloraz | metiram |
| M-644 | prochloraz | thiram |
| M-645 | prochloraz | ziram |

(continued)

| Mixture No. | Compound IIB1 | Compound IID2 |
|---|---|---|
| M-646 | prochloraz | guazatin |
| M-647 | prochloraz | thiophanate-methyl |
| M-648 | prochloraz | chlorothalonil |
| M-649 | prochloraz | metrafenone |
| M-650 | prochloraz | pyraclostrobin |
| M-651 | carbendazim | - |
| M-652 | carbendazim | thiabendazole |
| M-653 | carbendazim | ethaboxam |
| M-654 | carbendazim | hymexazole |
| M-655 | carbendazim | pyrimethanil |
| M-656 | carbendazim | fludioxonil |
| M-657 | carbendazim | aldimorph |
| M-658 | carbendazim | dodemorph |
| M-659 | carbendazim | fenpropimorph |
| M-660 | carbendazim | iprodione |
| M-661 | carbendazim | captan |
| M-662 | carbendazim | fenoxanil |
| M-663 | carbendazim | probenazol |
| M-664 | carbendazim | mancozeb |
| M-665 | carbendazim | metiram |
| M-666 | carbendazim | thiram |
| M-667 | carbendazim | ziram |
| M-668 | carbendazim | guazatin |
| M-669 | carbendazim | thiophanate-methyl |
| M-670 | carbendazim | chlorothalonil |
| M-671 | carbendazim | metrafenone |
| M-672 | carbendazim | pyraclostrobin |
| M-673 | thiabendazole | - |
| M-674 | thiabendazole | ethaboxam |
| M-675 | thiabendazole | hymexazole |
| M-676 | thiabendazole | pyrimethanil |
| M-677 | thiabendazole | fludioxonil |
| M-678 | thiabendazole | aldimorph |
| M-679 | thiabendazole | dodemorph |
| M-680 | thiabendazole | fenpropimorph |
| M-681 | thiabendazole | iprodione |
| M-682 | thiabendazole | captan |
| M-683 | thiabendazole | fenoxanil |

(continued)

| Mixture No. | Compound IIB1 | Compound IID2 |
|---|---|---|
| M-684 | thiabendazole | probenazol |
| M-685 | thiabendazole | mancozeb |
| M-686 | thiabendazole | metiram |
| M-687 | thiabendazole | thiram |
| M-688 | thiabendazole | ziram |
| M-689 | thiabendazole | guazatin |
| M-690 | thiabendazole | thiophanate-methyl |
| M-691 | thiabendazole | chlorothalonil |
| M-692 | thiabendazole | metrafenone |
| M-693 | thiabendazole | pyraclostrobin |
| M-694 | ethaboxam | - |
| M-695 | ethaboxam | hymexazole |
| M-696 | ethaboxam | pyrimethanil |
| M-697 | ethaboxam | fludioxonil |
| M-698 | ethaboxam | aldimorph |
| M-699 | ethaboxam | dodemorph |
| M-700 | ethaboxam | fenpropimorph |
| M-701 | ethaboxam | iprodione |
| M-702 | ethaboxam | captan |
| M-703 | ethaboxam | fenoxanil |
| M-704 | ethaboxam | probenazol |
| M-705 | ethaboxam | mancozeb |
| M-706 | ethaboxam | metiram |
| M-707 | ethaboxam | thiram |
| M-708 | ethaboxam | ziram |
| M-709 | ethaboxam | guazatin |
| M-710 | ethaboxam | thiophanate-methyl |
| M-711 | ethaboxam | chlorothalonil |
| M-712 | ethaboxam | metrafenone |
| M-713 | ethaboxam | pyraclostrobin |
| M-714 | hymexazole | - |
| M-715 | hymexazole | pyrimethanil |
| M-716 | hymexazole | fludioxonil |
| M-717 | hymexazole | aldimorph |
| M-718 | hymexazole | dodemorph |
| M-719 | hymexazole | fenpropimorph |
| M-720 | hymexazole | iprodione |
| M-721 | hymexazole | captan |

(continued)

| Mixture No. | Compound IIB1 | Compound IID2 |
|---|---|---|
| M-722 | hymexazole | fenoxanil |
| M-723 | hymexazole | probenazol |
| M-724 | hymexazole | mancozeb |
| M-725 | hymexazole | metiram |
| M-726 | hymexazole | thiram |
| M-727 | hymexazole | ziram |
| M-728 | hymexazole | guazatin |
| M-729 | hymexazole | thiophanate-methyl |
| M-730 | hymexazole | chlorothalonil |
| M-731 | hymexazole | metrafenone |
| M-732 | hymexazole | pyraclostrobin |
| M-733 | pyrimethanil | - |
| M-734 | pyrimethanil | fludioxonil |
| M-735 | pyrimethanil | aldimorph |
| M-736 | pyrimethanil | dodemorph |
| M-737 | pyrimethanil | fenpropimorph |
| M-738 | pyrimethanil | iprodione |
| M-739 | pyrimethanil | captan |
| M-740 | pyrimethanil | fenoxanil |
| M-741 | pyrimethanil | probenazol |
| M-742 | pyrimethanil | mancozeb |
| M-743 | pyrimethanil | metiram |
| M-744 | pyrimethanil | thiram |
| M-745 | pyrimethanil | ziram |
| M-746 | pyrimethanil | guazatin |
| M-747 | pyrimethanil | thiophanate-methyl |
| M-748 | pyrimethanil | chlorothalonil |
| M-749 | pyrimethanil | metrafenone |
| M-750 | pyrimethanil | pyraclostrobin |
| M-751 | fludioxonil | - |
| M-752 | fludioxonil | aldimorph |
| M-753 | fludioxonil | dodemorph |
| M-754 | fludioxonil | fenpropimorph |
| M-755 | fludioxonil | iprodione |
| M-756 | fludioxonil | captan |
| M-757 | fludioxonil | fenoxanil |
| M-758 | fludioxonil | probenazol |
| M-759 | fludioxonil | mancozeb |

(continued)

| Mixture No. | Compound IIB1 | Compound IID2 |
|---|---|---|
| M-760 | fludioxonil | metiram |
| M-761 | fludioxonil | thiram |
| M-762 | fludioxonil | ziram |
| M-763 | fludioxonil | guazatin |
| M-764 | fludioxonil | thiophanate-methyl |
| M-765 | fludioxonil | chlorothalonil |
| M-766 | fludioxonil | metrafenone |
| M-767 | fludioxonil | pyraclostrobin |
| M-768 | aldimorph | - |
| M-769 | aldimorph | dodemorph |
| M-770 | aldimorph | fenpropimorph |
| M-771 | aldimorph | iprodione |
| M-772 | aldimorph | captan |
| M-773 | aldimorph | fenoxanil |
| M-774 | aldimorph | probenazol |
| M-775 | aldimorph | mancozeb |
| M-776 | aldimorph | metiram |
| M-777 | aldimorph | thiram |
| M-778 | aldimorph | ziram |
| M-779 | aldimorph | guazatin |
| M-780 | aldimorph | thiophanate-methyl |
| M-781 | aldimorph | chlorothalonil |
| M-782 | aldimorph | metrafenone |
| M-783 | aldimorph | pyraclostrobin |
| M-784 | dodemorph | - |
| M-785 | dodemorph | fenpropimorph |
| M-786 | dodemorph | iprodione |
| M-787 | dodemorph | captan |
| M-788 | dodemorph | fenoxanil |
| M-789 | dodemorph | probenazol |
| M-790 | dodemorph | mancozeb |
| M-791 | dodemorph | metiram |
| M-792 | dodemorph | thiram |
| M-793 | dodemorph | ziram |
| M-794 | dodemorph | guazatin |
| M-795 | dodemorph | thiophanate-methyl |
| M-796 | dodemorph | chlorothalonil |
| M-797 | dodemorph | metrafenone |

(continued)

| Mixture No. | Compound IIB1 | Compound IID2 |
|---|---|---|
| M-798 | dodemorph | pyraclostrobin |
| M-799 | fenpropimorph | - |
| M-800 | fenpropimorph | iprodione |
| M-801 | fenpropimorph | captan |
| M-802 | fenpropimorph | fenoxanil |
| M-803 | fenpropimorph | probenazol |
| M-804 | fenpropimorph | mancozeb |
| M-805 | fenpropimorph | metiram |
| M-806 | fenpropimorph | thiram |
| M-807 | fenpropimorph | ziram |
| M-808 | fenpropimorph | guazatin |
| M-809 | fenpropimorph | thiophanate-methyl |
| M-810 | fenpropimorph | chlorothalonil |
| M-811 | fenpropimorph | metrafenone |
| M-812 | fenpropimorph | pyraclostrobin |
| M-813 | iprodione | - |
| M-814 | iprodione | captan |
| M-815 | iprodione | fenoxanil |
| M-816 | iprodione | probenazol |
| M-817 | iprodione | mancozeb |
| M-818 | iprodione | metiram |
| M-819 | iprodione | thiram |
| M-820 | iprodione | ziram |
| M-821 | iprodione | guazatin |
| M-822 | iprodione | thiophanate-methyl |
| M-823 | iprodione | chlorothalonil |
| M-824 | iprodione | metrafenone |
| M-825 | iprodione | pyraclostrobin |
| M-826 | captan | - |
| M-827 | captan | fenoxanil |
| M-828 | captan | probenazol |
| M-829 | captan | mancozeb |
| M-830 | captan | metiram |
| M-831 | captan | thiram |
| M-832 | captan | ziram |
| M-833 | captan | guazatin |
| M-834 | captan | thiophanate-methyl |
| M-835 | captan | chlorothalonil |

(continued)

| Mixture No. | Compound IIB1 | Compound IID2 |
|---|---|---|
| M-836 | captan | metrafenone |
| M-837 | captan | pyraclostrobin |
| M-838 | fenoxanil | - |
| M-839 | fenoxanil | probenazol |
| M-840 | fenoxanil | mancozeb |
| M-841 | fenoxanil | metiram |
| M-842 | fenoxanil | thiram |
| M-843 | fenoxanil | ziram |
| M-844 | fenoxanil | guazatin |
| M-845 | fenoxanil | thiophanate-methyl |
| M-846 | fenoxanil | chlorothalonil |
| M-847 | fenoxanil | metrafenone |
| M-848 | fenoxanil | pyraclostrobin |
| M-849 | probenazol | - |
| M-850 | probenazol | mancozeb |
| M-851 | probenazol | metiram |
| M-852 | probenazol | thiram |
| M-853 | probenazol | ziram |
| M-854 | probenazol | guazatin |
| M-855 | probenazol | thiophanate-methyl |
| M-856 | probenazol | chlorothalonil |
| M-857 | probenazol | metrafenone |
| M-858 | probenazol | pyraclostrobin |
| M-859 | mancozeb | - |
| M-860 | mancozeb | metiram |
| M-861 | mancozeb | thiram |
| M-862 | mancozeb | ziram |
| M-863 | mancozeb | guazatin |
| M-864 | mancozeb | thiophanate-methyl |
| M-865 | mancozeb | chlorothalonil |
| M-866 | mancozeb | metrafenone |
| M-867 | mancozeb | pyraclostrobin |
| M-868 | metiram | - |
| M-869 | metiram | thiram |
| M-870 | metiram | ziram |
| M-871 | metiram | guazatin |
| M-872 | metiram | thiophanate-methyl |
| M-873 | metiram | chlorothalonil |

(continued)

| Mixture No. | Compound IIB1 | Compound IID2 |
|---|---|---|
| M-874 | metiram | metrafenone |
| M-875 | metiram | pyraclostrobin |
| M-876 | thiram | - |
| M-877 | thiram | ziram |
| M-878 | thiram | guazatin |
| M-879 | thiram | thiophanate-methyl |
| M-880 | thiram | chlorothalonil |
| M-881 | thiram | metrafenone |
| M-882 | thiram | pyraclostrobin |
| M-883 | ziram | - |
| M-884 | ziram | guazatin |
| M-885 | ziram | thiophanate-methyl |
| M-886 | ziram | chlorothalonil |
| M-887 | ziram | metrafenone |
| M-888 | ziram | pyraclostrobin |
| M-889 | guazatin | - |
| M-890 | guazatin | thiophanate-methyl |
| M-891 | guazatin | chlorothalonil |
| M-892 | guazatin | metrafenone |
| M-893 | guazatin | pyraclostrobin |
| M-894 | thiophanate-methyl | - |
| M-895 | thiophanate-methyl | chlorothalonil |
| M-896 | thiophanate-methyl | metrafenone |
| M-897 | thiophanate-methyl | pyraclostrobin |
| M-898 | chlorothalonil | - |
| M-899 | chlorothalonil | metrafenone |
| M-900 | chlorothalonil | pyraclostrobin |
| M-901 | metrafenone | - |
| M-902 | metrafenone | pyraclostrobin |

In a particular preferred embodiment, the present invention comprises the following tertiary and quaternay mixtures:

Table 1’
Mixtures wherein compound I is fipronil, compound IIA is trifloxystrobin, and the combination of compounds IIB1 and IID2 in each case corresponds to a mixture set forth in Table S.

Table 2’
Mixtures wherein compound I is fipronil, compound IIA is azoxystrobin, and the combination of compounds IIB1 and IID2 in each case corresponds to a mixture set forth in Table S.

Table 3’

Mixtures wherein compound I is fipronil, compound IIA is metalaxyl, and the combination of compounds IIB1 and IID2 in each case corresponds to a mixture set forth in Table S.

Table 4'
Mixtures wherein compound I is fipronil, compound IIA is metalaxyl-M, and the combination of compounds IIB1 and IID2 in each case corresponds to a mixture set forth in Table S.

Table 5'
Mixtures wherein compound I is fipronil, compound IIC is cyproconazole, and the combination of compounds IIB1 and IID2 in each case corresponds to a mixture set forth in Table S.

Table 6'
Mixtures wherein compound I is fipronil, compound IIA is flutriafol, and the combination of compounds IIB1 and IID2 in each case corresponds to a mixture set forth in Table S.

Table 7'
Mixtures wherein compound I is fipronil, compound IIC is tebuconazole, and the combination of compounds IIB1 and IID2 in each case corresponds to a mixture set forth in Table S.

Table 8'
Mixtures wherein compound I is fipronil, compound IIA is triadimenol, and the combination of compounds IIB1 and IID2 in each case corresponds to a mixture set forth in Table S.

Table 9'
Mixtures wherein compound I is fipronil, compound IIC is prochloraz, and the combination of compounds IIB1 and IID2 in each case corresponds to a mixture set forth in Table S.

Table 10'
Mixtures wherein compound I is fipronil, compound IIA is fludioxonil, and the combination of compounds IIB1 and IID2 in each case corresponds to a mixture set forth in Table S.

Table 11'
Mixtures wherein compound I is fipronil, compound IIC is thiram, and the combination of compounds IIB1 and IID2 in each case corresponds to a mixture set forth in Table S.

Table 12'
Mixtures wherein compound I is fipronil, compound IIA is difenoconazole, and the combination of compounds IIB1 and IID2 in each case corresponds to a mixture set forth in Table S.

Table S

| Mixture No | Mixture | Mixture No | Mixture |
|---|---|---|---|
| S-1. | M-1 as disclosed in Table Q | S-53. | M-247 as disclosed in Table Q |
| S-2. | M-3 as disclosed in Table Q | S-54. | M-248 as disclosed in Table Q |
| S-3. | M-4 as disclosed in Table Q | S-55. | M-249 as disclosed in Table Q |
| S-4. | M-6 as disclosed in Table Q | S-56. | M-251 as disclosed in Table Q |
| S-5. | M-7 as disclosed in Table Q | S-57. | M-257 as disclosed in Table Q |
| S-6. | M-11 as disclosed in Table Q | S-58. | M-267 as disclosed in Table Q |
| S-7. | M-15 as disclosed in Table Q | S-59. | M-273 as disclosed in Table Q |
| S-8. | M-16 as disclosed in Table Q | S-60. | M-376 as disclosed in Table Q |
| S-9. | M-17 as disclosed in Table Q | S-61. | M-380 as disclosed in Table Q |
| S-10. | M-18 as disclosed in Table Q | S-62. | M-381 as disclosed in Table Q |

(continued)

| Mixture No | Mixture | Mixture No | Mixture |
|---|---|---|---|
| S-11. | M-20 as disclosed in Table Q | S-63. | M-382 as disclosed in Table Q |
| S-12. | M-26 as disclosed in Table Q | S-64. | M-383 as disclosed in Table Q |
| S-13. | M-36 as disclosed in Table Q | S-65. | M-385 as disclosed in Table Q |
| S-14. | M-42 as disclosed in Table Q | S-66. | M-391 as disclosed in Table Q |
| S-15. | M-84 as disclosed in Table Q | S-67. | M-401 as disclosed in Table Q |
| S-16. | M-85 as disclosed in Table Q | S-68. | M-407 as disclosed in Table Q |
| S-17. | M-87 as disclosed in Table Q | S-69. | M-498 as disclosed in Table Q |
| S-18. | M-88 as disclosed in Table Q | S-70. | M-499 as disclosed in Table Q |
| S-19. | M-92 as disclosed in Table Q | S-71. | M-500 as disclosed in Table Q |
| S-20. | M-96 as disclosed in Table Q | S-72. | M-501 as disclosed in Table Q |
| S-21. | M-97 as disclosed in Table Q | S-73. | M-503 as disclosed in Table Q |
| S-22. | M-98 as disclosed in Table Q | S-74. | M-509 as disclosed in Table Q |
| S-23. | M-99 as disclosed in Table Q | S-75. | M-519 as disclosed in Table Q |
| S-24. | M-101 as disclosed in Table Q | S-76. | M-525 as disclosed in Table Q |
| S-25. | M-107 as disclosed in Table Q | S-77. | M-526 as disclosed in Table Q |
| S-26. | M-117 as disclosed in Table Q | S-78. | M-527 as disclosed in Table Q |
| S-27. | M-123 as disclosed in Table Q | S-79. | M-528 as disclosed in Table Q |
| S-28. | M-126 as disclosed in Table Q | S-80. | M-530 as disclosed in Table Q |
| S-29. | M-127 as disclosed in Table Q | S-81. | M-536 as disclosed in Table Q |
| S-30. | M-131 as disclosed in Table Q | S-82. | M-546 as disclosed in Table Q |
| S-31. | M-135 as disclosed in Table Q | S-83. | M-552 as disclosed in Table Q |
| S-32. | M-136 as disclosed in Table Q | S-84. | M-553 as disclosed in Table Q |
| S-33. | M-137 as disclosed in Table Q | S-85. | M-554 as disclosed in Table Q |
| S-34. | M-138 as disclosed in Table Q | S-86. | M-556 as disclosed in Table Q |
| S-35. | M-140 as disclosed in Table Q | S-87. | M-562 as disclosed in Table Q |
| S-36. | M-146 as disclosed in Table Q | S-88. | M-572 as disclosed in Table Q |
| S-37. | M-156 as disclosed in Table Q | S-89. | M-578 as disclosed in Table Q |
| S-38. | M-162 as disclosed in Table Q | S-90. | M-579 as disclosed in Table Q |
| S-39. | M-201 as disclosed in Table Q | S-91. | M-581 as disclosed in Table Q |
| S-40. | M-202 as disclosed in Table Q | S-92. | M-587 as disclosed in Table Q |
| S-41. | M-206 as disclosed in Table Q | S-93. | M-597 as disclosed in Table Q |
| S-42. | M-210 as disclosed in Table Q | S-94. | M-603 as disclosed in Table Q |
| S-43. | M-211 as disclosed in Table Q | S-95. | M-628 as disclosed in Table Q |
| S-44. | M-212 as disclosed in Table Q | S-96. | M-634 as disclosed in Table Q |
| S-45. | M-213 as disclosed in Table Q | S-97. | M-644 as disclosed in Table Q |
| S-46. | M-215 as disclosed in Table Q | S-98. | M-650 as disclosed in Table Q |
| S-47. | M-221 as disclosed in Table Q | S-99. | M-751 as disclosed in Table Q |
| S-48. | M-231 as disclosed in Table Q | S-100. | M-876 as disclosed in Table Q |

(continued)

| Mixture No | Mixture | Mixture No | Mixture |
|---|---|---|---|
| S-49. | M-237 as disclosed in Table Q | S-101. | M-761 as disclosed in Table Q |
| S-50. | M-238 as disclosed in Table Q | S-102. | M-767 as disclosed in Table Q |
| S-51. | M-242 as disclosed in Table Q | S-103. | M-882 as disclosed in Table Q |
| S-52. | M-246 as disclosed in Table Q | | |

The inventive mixtures can further contain one or more insecticidal compound III. The following list of insecticides together with which the inventive mixtures according to the invention can be used, is intended to illustrate the possible combinations, but not to impose any limitation:

A.1. Organo(thio)phosphates: acephate, azamethiphos, azinphos-ethyl, azinphos-methyl, chlor-ethoxyfos, chlorfenvinphos, chlormephos, chlorpyrifos, chlorpyrifos-methyl, coumaphos, cyano-phos, demeton-S-methyl, diazinon, dichlorvos/ DDVP, dicrotophos, dimethoate, dimethyl-vinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;

A.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isopro-carb, methiocarb, methomyl, metolcarb, oxamyl, pirimicarb, propoxur, thiodicarb, thiofanox, trimethacarb, XMC, xylylcarb, triazamate;

A.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, betacypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;

A.4. Juvenile hormone mimics: hydroprene, kinoprene, methoprene, fenoxycarb, pyriproxyfen;

A.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), thiacloprid, thiocyclam, thiosultap-sodium, and AKD1022.

A.6. GABA gated chloride channel antagonist compounds: chlordane, endosulfan, gamma-HCH (lindane); acetoprole, pyrafluprole, pyriprole, vaniliprole, the phenylpyrazole compound of formula $\Gamma^1$

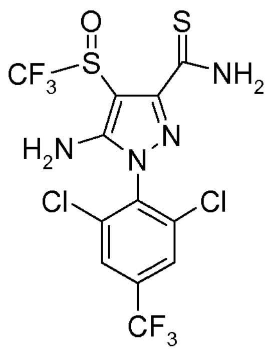

($\Gamma^1$)

,

A.7. Chloride channel activators: abamectin, emamectin benzoate, milbemectin, lepimectin;

A.8. METI I compounds: fenazaquin, fenpyroximate, pyrimidifen, pyridaben, tebufenpyrad, tolfenpyrad, flufenerim, rotenone;

A.9. METI II and III compounds: acequinocyl, fluacyprim, hydramethylnon;

A.10. Uncouplers of oxidative phosphorylation: chlorfenapyr, DNOC;

A.11. Inhibitors of oxidative phosphorylation: azocyclotin, cyhexatin, diafenthiuron, fenbutatin oxide, propargite, tetradifon;

A.12. Moulting disruptors: cyromazine, chromafenozide, halofenozide, methoxyfenozide, tebufenozide;

A.13. Synergists: piperonyl butoxide, tribufos;

A.14. Sodium channel blocker compounds: indoxacarb, metaflumizone;

A.15. Fumigants: methyl bromide, chloropicrin sulfuryl fluoride;

A.16. Selective feeding blockers: crylotie, pymetrozine, flonicamid;

A.17. Mite growth inhibitors: clofentezine, hexythiazox, etoxazole;

A.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;

A.19. Lipid biosynthesis inhibitors: spirodiclofen, spiromesifen, spirotetramat;

A.20. octapaminergic agonsits: amitraz;

A.21. ryanodine receptor modulators: flubendiamide;

A.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic;

A.23. N-R'-2,2-dihalo-1-R"cyclo-propanecarboxamide-2-(2,6-dichloro- $\alpha,\alpha,\alpha$-tri-fluoro-p-tolyl)hydrazone or N-R'-2,2-di(R"')propionamide-2-(2,6-dichloro-$\alpha,\alpha,\alpha$-trifluoro-p-tolyl)-hydrazone, wherein R' is methyl or ethyl, halo is chloro or bromo, R" is hydrogen or methyl and R"' is methyl or ethyl;

A.24. Anthranilamides: chloranthraniliprole, the compound of formula $\Gamma^2$

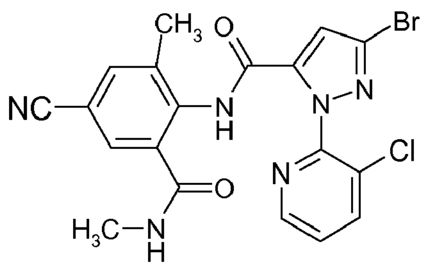

($\Gamma^2$)

;

A.25. Malononitrile compounds: $CF_3(CH_2)_2C(CN)_2CH_2(CF_2)_3CF_2H$, $CF_3(CH_2)_2C(CN)_2CH_2(CF_2)_5CF_2H$, $CF_3(CH_2)_2C(CN)_2(CH_2)_2C(CF_3)_2F$, $CF_3(CH_2)_2C(CN)_2(CH_2)_2(CF_2)_3CF_3$, $CF_2H(CF_2)_3CH_2C(CN)_2CH_2(CF_2)_3CF_2H$, $CF_3(CH_2)_2C(CN)_2CH_2(CF_2)_3CF_3$, $CF_3(CF_2)_2CH_2C(CN)_2CH_2(CF_2)_3CF_2H$, $CF_3CF_2CH_2C(CN)_2CH_2(CF_2)_3CF_2H$, 2-(2,2,3,3,4,4,5,5-octafluoropentyl)-2-(3,3,4,4,4-pentafluorobutyl)-malonodinitrile, and $CF_2HCF_2CF_2CF_2CH_2C(CN)_2CH_2CH_2CF_2CF_3$;

A.26. Microbial disruptors: *Bacillus thuringiensis* subsp. *Israelensi, Bacillus sphaericus, Bacillus thuringiensis* subsp.

*Aizawai, Bacillus thuringiensis* subsp. *Kurstaki, Bacillus thuringiensis* subsp. *Tenebrionis;*

The commercially available compounds of the list above may be found in The Pesticide Manual, 13th Edition, British Crop Protection Council (2003) among other publications.

Thioamides of formula $\Gamma^1$ and their preparation have been described in WO 98/28279. Lepimectin is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. AKD 1022 and its preparation have been described in US 6300348. Chloranthraniliprole has been described in WO 01/70671, WO 03/015519 and WO 05/118552. Anthranilamide derivatives of formula $\Gamma^2$ have been described in WO 01/70671, WO 04/067528 and WO 05/118552. Cyflumetofen and its preparation have been described in WO 04/080180. The aminoquinazolinone compound pyrifluquinazon has been described in EP A 109 7932. The malononitrile compounds $CF_3(CH_2)_2C(CN)_2CH_2(CF_2)_3CF_2H$, $CF_3(CH_2)_2C(CN)_2CH_2(CF_2)_5CF_2H$, $CF_3(CH_2)_2C(CN)_2(CH_2)_2C(CF_3)_2F$, $CF_3(CH_2)_2C(CN)_2(CH_2)_2(CF_2)_3CF_3$, $CF_2H(CF_2)_3CH_2C(CN)_2CH_2(CF_2)_3CF_2H$, $CF_3(CH_2)_2C(CN)_2CH_2(CF_2)_3CF_3$, $CF_3(CF_2)_2CH_2C(CN)_2CH_2(CF_2)_3CF_2H$, $CF_3CF_2CH_2C(CN)_2CH_2(CF_2)_3CF_2H$, 2-(2,2,3,3,4,4,5,5-octafluoropentyl)-2-(3,3,4,4,4-pentafluorobutyl)-malonodinitrile, and $CF_2HCF_2CF_2CF_2CH_2C(CN)_2CH_2CH_2CF_2CF_3$ have been described in WO 05/63694.

Preferred mixing partners are pyrethroids, especially alpha-cypermethrin, anthranilamides, especially chlorantraniliprole, the compound of formula $G^2$

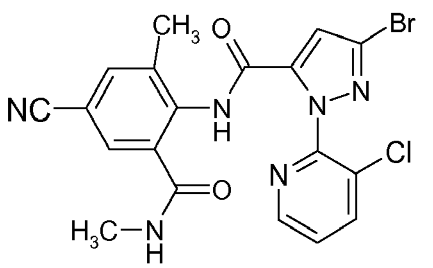

($G^2$)

;

nicotinic receptor agonists/antagonists compounds, especially acetamiprid, clothianidin, dinotefuran, imidacloprid, thiamethoxam, nitenpyram, thiacloprid. Most preferred partners are clothi-anidin and imidacloprid.

As mentioned above, the present invention also comprises mixtures comprising, as active components

(1) an insecticidal compound I selected from fipronil and ethiprole;

(2) a nicotinic receptor agonists/antagonists compound IIIA;

(3) and compound IIB and/or compound IID selected from List D, which is defined as List B plus pyracolostrobin.

In a preferred embodiment, the nicotinic receptor agonists/antagonists compound III is acetamiprid, clothianidin, dinotefuran, imidacloprid, thiamethoxam, nitenpyram or thiacloprid. In a more preferred embodiment, the nicotinic receptor agonists/antagonists compound III is clothianidin, thiamethoxam or imidacloprid, wherein chlothianidin is most preferred.

Preferred are also quarternary mixtures containing fipronil as compound I, clothianidin as compound IIIA and compounds IID and compound IIB.

Preferred are also quarternary mixtures containing fipronil as compound I, imidacloprid as compound IIIA and compounds IID and compound IIB.

Preferred are also quarternary mixtures containing fipronil as compound I, thiamethoxam as compound IIIA and and compounds IID and compound IIB.

Especially preferred are also tertiary mixtures containing fipronil as compound I, clothianidin and triticonazole.

Especially preferred are also tertiary mixtures containing fipronil as compound I, clothianidin and pyraclostrobin.

Especially preferred are also mixtures containing fipronil, clothianidin, pyraclostrobin and prochloraz.

Especially preferred are also mixtures containing fipronil, clothianidin, pyraclostrobin and triticonazole.

Especially preferred are also mixtures containing fipronil, clothianidin, pyraclostrobin and thiophanate-methyl.
Especially preferred are also mixtures containing fipronil, clothianidin, pyraclostrobin and thiophanate-methyl.
Preferred are also mixtures wherein compound I is fipronil, compound IIIA is clothianidin, and the combination of compounds IIB1 and IID2 in each case corresponds to a row of Table Q.
More preferred are also mixtures, wherein compound I is fipronil, compound IIIA is clothianidin, and the combination of compounds IIB1 and IID2 in each case corresponds to a row of Table S.
Preferred are also mixtures wherein compound I is fipronil, compound IIIA is imidacloprid, and the combination of compounds IIB1 and IID2 in each case corresponds to a row of Table Q.
More preferred are also mixtures, wherein compound I is fipronil, compound IIIA is imidacloprid, and the combination of compounds IIB1 and IID2 in each case corresponds to a row of Table S.
Preferred are also mixtures wherein compound I is fipronil, compound IIIA is thiamethoxam, and the combination of compounds IIB1 and IID2 in each case corresponds to a row of Table Q.
More preferred are also mixtures, wherein compound I is fipronil, compound IIIA is thiamethoxam, and the combination of compounds IIB1 and IID2 in each case corresponds to a row of Table S.
As mentioned above, the present invention also comprises mixtures comprising, as active components

(1) an insecticidal compound I selected from fipronil and ethiprole;
(2) an anthranilamide compound IIIB;
(3) and compound IIB and/or compound IID selected from List D, which is defined as List B plus pyracolostrobin.

In a preferred embodiment, compound IIIB is chloranthraniliprole.
In a further preferred embodiment, compound IIIB is the compound of formula G2.
Preferred are also quarternary mixtures containing fipronil as compound I, compound IIIB and compounds IID and compound IIB.
Especially preferred are also tertiary mixtures containing fipronil as compound I, chloranthraniliprole and compounds IID and compound IIB.
Preferred are also mixtures wherein compound I is fipronil, compound IIIB is chloranthraniliprole, and the combination of compounds IIB1 and IID2 in each case corresponds to a row of Table Q.
More preferred are also mixtures, wherein compound I is fipronil, compound IIIB is chloranthraniliprole, and the combination of compounds IIB1 and IID2 in each case corresponds to a row of Table S.
Preferred are also mixtures wherein compound I is fipronil, compound IIIB is is the compound of formula G2., and the combination of compounds IIB1 and IID2 in each case corresponds to a row of Table Q.
More preferred are also mixtures, wherein compound I is fipronil, compound IIIB is the compound of formula G2, and the combination of compounds IIB1 and IID2 in each case corresponds to a row of Table S.
As mentioned above, the present invention also comprises fungicidal synergistic mixtures consisting of compound IIB and compound IID. Preferred are the combinations of compound IIB1 and IID2 as set forth in Table R.
Table R corresponds to table Q, however excluding the mixture numbers M-1, M-43, M-84, M-124, M-163, M-201, M-238, M-274, M-309, M-343, M-376, M-408, M-439, M-469, M-498, M-526, M-553, M-579, M-604, M-628, M-651, M-673, M-694, M-714, M-733, M-751, M-768, M-784, M-799, M-813, M-826, M-838, M-849, M-859, M-868, M-876, M-883, M-889, M-894, M-898 and M-901, which just represent single compound IIB1 and no compound IID2.
The present invention also comprises mixtures of three fungicidal compounds, wherein two compounds are selected from List B, as defined above, and the third fungidical compound is fungicidal compound IID in synergistically effective amounts.
With respect to their intended use, the following tertiary fungicidal mixtures are especially preferred:

Table 1"
Mixtures wherein compound IIB is trifloxystrobin, and the combination of compounds IIB1 and IID2 in each case corresponds to a row of Table R.

Table 2"
Mixtures wherein compound IIB is azoxystrobin, and the combination of compounds IIB1 and IID2 in each case corresponds to a row of Table R.

Table 3"
Mixtures wherein compound IIB is boscalid, and the combination of compounds IIB1 and IID2 in each case corresponds to a row of Table R.

Table 4"

Mixtures wherein compound IIB is metalaxyl, and the combination of compounds IIB1 and IID2 in each case corresponds to a row of Table R.

Table 5"
Mixtures wherein compound IIB is metalaxyl-M, and the combination of compounds IIB1 and IID2 in each case corresponds to a row of Table R.

Table 6"
Mixtures wherein compound IIB is cyproconazole, and the combination of compounds IIB1 and IID2 in each case corresponds to a row of Table R.

Table 7"
Mixtures wherein compound IIB is epoxiconazole, and the combination of compounds IIB1 and IID2 in each case corresponds to a row of Table R.

Table 8"
Mixtures wherein compound IIB is fenbuconazole, and the combination of compounds IIB1 and IID2 in each case corresponds to a row of Table R.

Table 9"
Mixtures wherein compound IIB is fluquinconazole, and the combination of compounds IIB1 and IID2 in each case corresponds to a row of Table R.

Table 10"
Mixtures wherein compound IIB is flutriafol, and the combination of compounds IIB1 and IID2 in each case corresponds to a row of Table R.

Table 11"
Mixtures wherein compound IIB is ipconazole, and the combination of compounds IIB1 and IID2 in each case corresponds to a row of Table R.

Table 12"
Mixtures wherein compound IIB is metconazole, and the combination of compounds IIB1 and IID2 in each case corresponds to a row of Table R.

Table 13"
Mixtures wherein compound IIB is propiconazole, and the combination of compounds IIB1 and IID2 in each case corresponds to a row of Table R.

Table 14"
Mixtures wherein compound I is ethiprole, compound II is prothioconazole, and the combination of compounds IIB1 and IID2 in each case corresponds to a row of Table R.

Table 15"
Mixtures wherein compound IIB is tebuconazole, and the combination of compounds IIB1 and IID2 in each case corresponds to a row of Table R.

Table 16"
Mixtures wherein compound IIB is triadimenol, and the combination of compounds IIB1 and IID2 in each case corresponds to a row of Table R.

Table 17"
Mixtures wherein compound IIB is imazalil, and the combination of compounds IIB1 and IID2 in each case corresponds to a row of Table R.

Table 18"
Mixtures wherein compound IIB is prochloraz, and the combination of compounds IIB1 and IID2 in each case corresponds to a row of Table R.

Table 19"
Mixtures wherein compound IIB is carbendazim, and the combination of compounds IIB1 and IID2 in each case corresponds to a row of Table R.

Table 20"
Mixtures wherein compound IIB is thiabendazole, and the combination of compounds IIB1 and IID2 in each case corresponds to a row of Table R.

Table 21"
Mixtures wherein compound IIB is ethaboxam, and the combination of compounds IIB1 and IID2 in each case corresponds to a row of Table R.

Table 22"
Mixtures wherein compound IIB is hymexazole, and the combination of compounds IIB1 and IID2 in each case corresponds to a row of Table R.

Table 23"
Mixtures wherein compound IIB is pyrimethanil, and the combination of compounds IIB1 and IID2 in each case corresponds to a row of Table R.

Table 24"
Mixtures wherein compound IIB is fludioxonil, and the combination of compounds IIB1 and IID2 in each case corresponds to a row of Table R.

Table 25"
Mixtures wherein compound IIB is aldimorph, and the combination of compounds IIB1 and IID2 in each case corresponds to a row of Table R.

Table 26"
Mixtures wherein compound IIB is dodemorph, and the combination of compounds IIB1 and IID2 in each case corresponds to a row of Table R.

Table 27"
Mixtures wherein compound IIB is fenpropimorph, and the combination of compounds IIB1 and IID2 in each case corresponds to a row of Table R.

Table 28"
Mixtures wherein compound IIB is iprodione, and the combination of compounds IIB1 and IID2 in each case corresponds to a row of Table R.

Table 29"
Mixtures wherein compound IIB is captan, and the combination of compounds IIB1 and IID2 in each case corresponds to a row of Table R.

Table 30"
Mixtures wherein compound IIB is fenoxanil, and the combination of compounds IIB1 and IID2 in each case corresponds to a row of Table R.

Table 31"
Mixtures wherein compound IIB is probenazole, and the combination of compounds IIB1 and IID2 in each case corresponds to a row of Table R.

Table 32"
Mixtures wherein compound IIB is mancozeb, and the combination of compounds IIB1 and IID2 in each case corresponds to a row of Table R.

Table 33"
Mixtures wherein compound IIB is metiram, and the combination of compounds IIB1 and IID2 in each case corresponds to a row of Table R.

Table 34"
Mixtures wherein compound IIB is thiram, and the combination of compounds IIB1 and IID2 in each case corresponds to a row of Table R.

Table 35"
Mixtures wherein compound IIB is ziram, and the combination of compounds IIB1 and IID2 in each case corresponds to a row of Table R.

Table 36"
Mixtures wherein compound IIB is guazatin, and the combination of compounds IIB1 and IID2 in each case corresponds to a row of Table R.

Table 37"
Mixtures wherein compound IIB is thiophanate-methyl, and the combination of compounds IIB1 and IID2 in each case corresponds to a row of Table R.

Table 38"
Mixtures wherein compound IIB is chlorothalonil, and the combination of compounds IIB1 and IID2 in each case corresponds to a row of Table R.

Table 39"
Mixtures wherein compound IIB is metrafenone, and the combination of compounds IIB1 and IID2 in each case corresponds to a row of Table R.

Table 40"
Mixtures wherein compound IIB is difenoconazole, and the combination of compounds IIB1 and IID2 in each case corresponds to a row of Table R.

Table 41"
Mixtures wherein compound IIB is triticonazole, and the combination of compounds IIB1 and IID2 in each case corresponds to a row of Table R.

Table 42"
Mixtures wherein compound I is fipronil, compound IIA is N-(3',4',5'-trifluorobiphenyl-2-yl)-1-methyl-3-trifluoromethyl-1H-pyrazole-4-carboxamide, and the combination of compounds IIB1 and IID2 in each case corresponds to a row of Table Q.

Table 43"
Mixtures wherein compound I is fipronil, compound IIA is N-(3',4',5'-trifluorobiphenyl-2-yl)-1-methyl-3-difluoromethyl-1 H-pyrazole-4-carboxamide, and the combination of compounds IIB1 and IID2 in each case corresponds to a row of Table R.

Table 44"
Mixtures wherein compound I is fipronil, compound IIA is N-(2',4',5'-trifluorobiphenyl-2-yl)-1-methyl-3-difluoromethyl-1 H-pyrazole-4-carboxamide, and the combination of compounds IIB1 and IID2 in each case corresponds to a row of Table R.

Table 45"
Mixtures wherein compound I is ethiprole, compound IIA is N-(3',4',5'-trifluorobiphenyl-2-yl)-3-chlorofluoromethyl-1-methyl-1 H-pyrazole-4-carboxamide, and the combination of compounds IIB1 and IID2 in each case corresponds to a row of Table R.

Table 46"
Mixtures wherein compound I is ethiprole, compound IIA is N-(3',4'-dichloro-4-fluorobiphenyl-2-yl)-3-difluoro-methyl-1-methyl-pyrazole-4-carboxamide, and the combination of compounds IIB1 and IID2 in each case corresponds to a row of Table R.

Table 47"

Mixtures wherein compound I is ethiprole, compound IIA is N-(3',4'-dichloro-5-fluorobiphenyl-2-yl)-3-difluoromethyl-1-methylpyrazole-4-carboxamide, and the combination of compounds IIB1 and IID2 in each case corresponds to a row of Table R.

Table 48"

Mixtures wherein compound I is ethiprole, compound IIA is N-(2-(1,3-dimethylbutyl)-phenyl)-1,3-dimethyl-5-fluoro-1 H-pyrazole-4-carboxylic acid amide, and the combination of compounds IIB1 and IID2 in each case corresponds to a row of Table R.

Table 49"

Mixtures wherein compound I is ethiprole, compound IIA is N-(cis-2-bicyclopropyl-2-yl-phenyl)-3-difluoromethyl-1-methyl-1 H-pyrazole-4-carboxylic acid amide, and the combination of compounds IIB1 and IID2 in each case corresponds to a row of Table R.

Table 50"

Mixtures wherein compound I is ethiprole, compound IIA is N-(trans-2-bicyclopropyl-2-yl-phenyl)-3-difluoro-methyl-1-methyl-1 H-pyrazole-4-carboxylic acid amide, and the combination of compounds IIB1 and IID2 in each case corresponds to a row of Table R.

Table 51"

Mixtures wherein compound I is ethiprole, compound IIA is 3-(difluoromethyl)-1-methyl-N-[1,2,3,4-tetrahydro-9-(1-methylethyl)-1,4-methanonaphthalen-5-yl]-1H-pyrazole-4carboxamide, and the combination of compounds IIB1 and IID2 in each case corresponds to a row of Table R.

Herein, the following mixtures are especially preferred:

(1) the mixture consisting of prochloraz, triticonazole and pyraclostrobin;
(2) the mixture consisting of thiophanatemethyl, triticonazole and pyraclostrobin; and
(3) the mixture consisting of boscalid, metalxyl and pyraclostrobin.

For use according to the present invention, the mixtures according to the invention, or the compound I and the active compounds IIA (or IIC) and optionally IIB or IIB and IID (alternatively the fungicidal mixtures as defined above or the mixtures of compound I, compound III (e.g. IIIA or IIIB) and one or more compounds IIB or compound IIB and compound IID), can be converted into the customary formulations, for example solutions, emulsions, suspensions, dusts, powders, pastes and granules. The use form depends on the particular intended purpose; in each case, it should ensure a fine and even distribution of the compound according to the invention.

The formulations are prepared in a known manner, for example by extending the active compound with solvents and/or carriers, if desired using emulsifiers and dispersants. Solvents/auxiliaries which are suitable are essentially:

- water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used,
- carriers such as ground natural minerals (for example kaolins, clays, talc, chalk) and ground synthetic minerals (for example highly disperse silica, silicates); emulsifiers such as nonionic and anionic emulsifiers (for example polyoxyethylene fatty alcohol ethers, alkylsulfonates and arylsulfonates) and dispersants such as lignosulfite waste liquors and methylcellulose.

Suitable surfactants are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ethers, ethoxylated isooctylphenol, octylphenol, nonylphenol, alkylphenol polyglycol ethers, tributylphenyl polyglycol ethers, tristearylphenyl polyglycol ethers, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, strongly polar solvents, for example dimethyl sulfoxide, N-methylpyrrolidone and water.

Also anti-freezing agents such as glycerin, ethylene glycol, propylene glycol and bactericides such as can be added to the formulation.

Suitable antifoaming agents are for example antifoaming agents based on silicon or magnesium stearate.

Seed treatment formulations may additionally comprise binders and optionally colorants.

Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisoutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of a gelling agent is carrageen (Satiagel®).

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

In general, the formulations comprise from 0.01 to 95% by weight, preferably from 0.1 to 90% by weight, of the active compound. The active compounds are employed in a purity of from 90% to 100%, preferably 95% to 100% (according to NMR spectrum).

For seed treatment purposes, respective formulations can be diluted 2-10 fold leading to concentrations in the ready to use preparations of 0,01 to 60% by weight active compound by weight, preferably 0,1 to 40% by weight.

The following are examples of formulations: 1. Products for dilution with water For seed treatment purposes, such products may be applied to the seed diluted or undiluted.

A Water-soluble concentrates (SL, LS)

10 parts by weight of the active compounds are dissolved with 90 parts by weight of water or a water-soluble solvent. As an alternative, wetters or other auxiliaries are added. The active compound dissolves upon dilution with water. A formulation having an active compound content of 10% by weight is obtained in this manner.

B Dispersible concentrates (DC)

20 parts by weight of the active compounds are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates (EC)

15 parts by weight of the active compounds are dissolved in 75 parts by weight of xylene with addition of calcium dodecylbenzenesulfonate and castor oil ethoxylate (in each case 5 parts by weight). Dilution with water gives an emulsion. The formulation has an active compound content of 15% by weight.

D Emulsions (EW, EO, ES)

25 parts by weight of the active compounds are dissolved in 35 parts by weight of xylene with addition of calcium dodecylbenzenesulfonate and castor oil ethoxylate (in each case 5 parts by weight). This mixture is added into 30 parts by weight of water by means of an emulsifying machine (e.g. Ultraturrax) and made into a homogeneous emulsion. Dilution with water gives an emulsion. The formulation has an active compound content of 25% by weight.

E Suspensions (SC, OD, FS)
In an agitated ball mill, 20 parts by weight of the active compounds are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules (WG, SG)
50 parts by weight of the active compounds are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders (WP, SP, SS, WS)
75 parts by weight of the active compounds are ground in a rotor- stator mill with addition of 25 parts by weight of dispersants and wetters as well as silica gel. Dilution with water gives a stable dispersion or solution of the active compound. The active compound content of the formulation is 75% by weight.

H Gel formulations (GF)
In a ball mill, 20 parts by weight of the active compounds, 10 parts by weight of dispersant, 1 part by weight of gelling agent and 70 parts by weight of water or an organic solvent are ground to give a fine suspension. On dilution with water, a stable suspension having an active compound content of 20% by weight is obtained.

2. Products to be applied undiluted

I Dustable powders (DP, DS)
5 parts by weight of the active compounds are ground finely and mixed intimately with 95 parts by weight of finely divided kaolin. This gives a dustable product having an active compound content of 5% by weight.

J Granules (GR, FG, GG, MG)
0.5 part by weight of the active compounds is ground finely and associated with 99.5 parts by weight of carriers. Current methods are extrusion, spray-drying or the fluidized bed. This gives granules to be applied undiluted having an active compound content of 0.5% by weight.

K ULV solutions (UL)
10 parts by weight of the active compounds are dissolved in 90 parts by weight of an organic solvent, for example xylene. This gives a product to be applied undiluted having an active compound content of 10% by weight.

For seed treatment, use is usually made of water-soluble concentrates (LS), suspensions (FS), dustable powders (DS), water-dispersible and water-soluble powders (WS, SS), emulsions (ES), emulsifiable concentrates (EC) and gel formulations (GF). These formulations can be applied to the seed in undiluted form or, preferably, diluted. Application can be carried out prior to sowing.

In a preferred embodiment a FS formulation is used for seed treatment. Typcially, a FS formulation may comprise 1-800 g/l of active ingredient, 1-200 g/l Surfactant, 0 to 200 g/l antifreezing agent, 0 to 400 g/l of binder, 0 to 200 g/l of a pigment and up to 1 liter of a solvent, preferably water.

The inventive mixtures can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; the intention is to ensure in each case the finest possible distribution of the active compounds according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active compound concentrations in the ready-to-use preparations can be varied within relatively wide ranges. In general, they are from 0.0001 to 10%, preferably from 0.01 to 1%.

The active compounds may also be used successfully in the ultra-low-volume process (ULV), by which it is possible to apply formulations comprising over 95% by weight of active compound, or even to apply the active compounds without additives.

Various types of oils, wetters, adjuvants, herbicides, fungicides, other pesticides, or bactericides may be added to the active compounds, if appropriate not until immediately prior to use (tank mix). These agents can be admixed with the agents according to the invention in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

The compounds contained in the mixtures as defined above can be applied simultaneously, that is jointly or separately, or in succession, the sequence, in the case of separate application, generally not having any effect on the result of the control measures.

Advantageously, they are suitable for controlling the following plant diseases:

- *Alternaria* species on vegetables, oilseed rape, sugar beet and fruit and rice, such as, for example, *A. solani* or *A. alternata* on potatoes and tomatoes;
- *Aphanomyces* species on sugar beet and vegetables;
- *Ascochyta* species on cereals and vegetables;
- *Bipolaris* and *Drechslera* species on corn, cereals, rice and lawns, such as, for example, *D. maydis* on corn;
- *Blumeria graminis* (powdery mildew) on cereals;
- *Botrytis cinerea* (gray mold) on strawberries, vegetables, flowers and grapevines;
- *Bremia lactucae* on lettuce;
- *Cercospora* species on corn, soybeans, rice and sugar beet;
- *Cochliobolus* species on corn, cereals, rice, such as, for example, *Cochliobolus sativus* on cereals, *Cochliobolus miyabeanus* on rice;
- *Colletotricum* species on soybeans and cotton;
- *Drechslera* species, *Pyrenophora* species on corn, cereals, rice and lawns, such as, for example, *D. teres* on barley or *D. tritici-repentis* on wheat;
- *Esca* on grapevines, caused by *Phaeoacremonium chlamydosporium, Ph. Aleophilum* and *Formitipora punctata (syn. Phellinus punctatus);*
- *Exserohilum* species on corn;
- *Erysiphe cichoracearum* and *Sphaerotheca fuliginea* on cucumbers;
- *Fusarium* and *Verticillium* species on various plants, such as, for example, *F. graminearum* or *F. culmorum* on cereals or *F. oxysporum* on a multitude of plants, such as, for example, tomatoes;
- *Gaeumanomyces graminis* on cereals;
- *Gibberella* species on cereals and rice (for example *Gibberella fujikuroi* on rice);
- *Grainstaining complex* on rice;
- *Helminthosporium* species on corn and rice;
- *Michrodochium nivale* on cereals;
- *Mycosphaerella* species on cereals, bananas and groundnuts, such as, for example, *M. graminicola* on wheat or *M.fijiensis* on bananas;
- *Peronospora* species on cabbage and bulbous plants, such as, for example, *P. brassicae* on cabbage or *P. destructor* on onions;
- *Phakopsara pachyrhizi* and *Phakopsara meibomiae* on soybeans;
- *Phomopsis* species on soybeans and sunflowers;
- *Phytophthora infestans* on potatoes and tomatoes;
- *Phytophthora* species on various plants, such as, for example, *P. capsici* on bell pepper;
- *Plasmopara viticola* on grapevines;
- *Podosphaera leucotricha* on apples;
- *Pseudocercosporella herpotrichoides* on cereals;
- *Pseudoperonospora* on various plants, such as, for example, *P. cubensis* on cucumber or *P. humili* on hops;
- *Puccinia* species on various plants, such as, for example, *P. triticina, P. striformins, P. hordei or P.graminis* on cereals or *P. asparagi* on asparagus;
- *Pyricularia oryzae, Corticium sasakii, Sarocladium oryzae, S.attenuatum, Entyloma oryzae* on rice;
- *Pyricularia grisea* on lawns and cereals;
- *Pythium spp.* on lawns, rice, corn, cotton, oilseed rape, sunflowers, sugar beet, vegetables and other plants, such

as, for example, *P. ultiumum* on various plants, *P. aphanidermatum* on lawns;

- *Rhizoctonia* species on cotton, rice, potatoes, lawns, corn, oilseed rape, potatoes, sugar beet, vegetables and on various plants, such as, for example, *R. solani* on beet and various plants;
- *Rhynchosporium secalis* on barley, rye and triticale;
- *Sclerotinia* species on oilseed rape and sunflowers;
- *Septoria tritici* and *Stagonospora nodorum* on wheat;
- *Erysiphe (syn. Uncinula) necator on* grapevines;
- *Setospaeria* species on corn and lawns;
- *Sphacelotheca reilinia* on corn;
- *Thievaliopsis* species on soybeans and cotton;
- *Tilletia* species on cereals;
- *Ustilago* species on cereals, corn and sugar cane, such as, for example, *U. maydis* on corn;
- *Venturia* species (scab) on apples and pears, such as, for example, *V. inaequalis* on apples.

The inventive mixtures are furthermore suitable for controlling harmful fungi in the protection of materials (for example wood, paper, paint dispersions, fibers or fabrics) and in the protection of stored products. In the protection of wood, particular attention is paid to the following harmful fungi: Ascomycetes, such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes, such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes, such as *Aspergillus* spp., *Cladosporium* spp., *Penicillium* spp., *Trichoderma* spp., *Alternaria* spp., *Paecilomyces* spp. and Zygomycetes, such as *Mucorspp.,* additionally in the protection of materials the following yeasts: *Candida* spp. and *Saccharomyces cerevisae.*

They are particularly important for controlling a multitude of fungi on various cultivated plants, such as bananas, cotton, vegetable species (for example cucumbers, beans and cucurbits), barley, grass, oats, coffee, potatoes, corn, fruit species, rice, rye, soya, tomatoes, grapevines, wheat, ornamental plants, sugar cane and also on a large number of seeds.

The inventive mixtures (except the mixtures comprising fungicides only) exhibit also outstanding action against pests from the following orders:

insects from the order of the lepidopterans (*Lepidoptera*), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis,*

beetles (*Coleoptera*), for example *Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus* and *Sitophilus granaria,*

flies, mosquitoes (Diptera), e.g. *Aedes aegypti, Aedes albopictus, Aedes vexans, Anastrepha ludens, Anopheles*

*maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga sp., Simulium vittatum, Stomoxys calcitrans, Tabanus bovinus, Tabanus atratus, Tabanus lineola,* and *Tabanus similis, Tipula oleracea,* and *Tipula paludosa* thrips (*Thysanoptera*), e.g. *Dichromothrips corbetti, Dichromothrips ssp, Frankliniella fusca, Frankliniella occidentalis, Frankliniella tritici, Scirtothrips citri, Thrips oryzae, Thrips palmi* and *Thrips tabaci,*

termites (Isoptera), e.g. *Calotermes flavicollis, Leucotermes flavipes, Heterotermes aureus, Reticulitermes flavipes, Reticulitermes virginicus, Reticulitermes lucifugus, Termes natalensis,* and *Coptotermes formosanus,*

cockroaches (Blattaria - Blattodea), e.g. *Blattella germanica, Blattella asahinae, Periplaneta americana, Periplaneta japonica, Periplaneta brunnea, Periplaneta fuligginosa, Periplaneta australasiae, and Blatta orientalis,*

true bugs (Hemiptera), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma* spp., and *Arilus critatus.*

ants, bees, wasps, sawflies (Hymenoptera), e.g. *Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus* spp. *Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile,* crickets, grasshoppers, locusts (Orthoptera), e.g. *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera,* and *Locustana pardalina,*

Arachnoidea, such as arachnids (Acarina), e.g. of the families Argasidae, Ixodidae and Sarcoptidae, such as *Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei,* and Eriophyidae spp. such as *Aculus schlechtendali, Phyllocoptrata oleivora* and *Eriophyes*

*sheldoni;* Tarsonemidae spp. such as *Phytonemus pallidus and Polyphagotarsonemus latus;* Tenuipalpidae spp. such as *Brevipalpus phoenicis;* Tetranychidae spp. such as *Tetranychus cinnabarinus, Tetranychus kanzawai, Tetranychus pacificus, Tetranychus telarius* and *Tetranychus* urticae, Panonychus ulmi, Panonychus citri, and *Oligonychus pratensis;* Araneida, e.g. *Latrodectus mactans,* and *Loxosceles reclusa,*

fleas (Siphonaptera), e.g. *Ctenocephalides felis, Ctenocephalides canis, Xenopsylla cheopis, Pulex irritans, Tunga penetrans,* and *Nosopsyllus fasciatus,*

silverfish, firebrat (Thysanura), e.g. *Lepisma saccharina* and *Thermobia domestica,*

centipedes (Chilopoda), e.g. *Scutigera coleoptrata,*

millipedes (Diplopoda), e.g. *Narceus spp.,*

Earwigs (Dermaptera), e.g. *forficula auricularia,*

lice (Phthiraptera), e.g. *Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus* and *Solenopotes capillatus,*

plant parasitic nematodes such as root-knot nematodes, *Meloidogyne arenaria, Meloidogyne chitwoodi, Meloidogyne exigua, Meloidogyne hapla, Meloidogyne incognita, Meloidogyne javanica* and other *Meloidogyne species;* cyst nematodes, *Globodera rostochiensis, Globodera pallida, Globodera tabacum* and other *Globodera species, Heterodera avenae, Heterodera glycines, Heterodera schachtii, Heterodera trifolii,* and other *Heterodera species;* seed gall nematodes, *Anguina funesta, Anguina tritici* and other *Anguina species;* stem and foliar nematodes, *Aphelenchoides besseyi, Aphelenchoides fragariae, Aphelenchoides ritzemabosi* and other *Aphelenchoides species;* sting nematodes, *Belonolaimus longicaudatus* and other *Belonolaimus species;* pine nematodes, *Bursaphelenchus xylophilus* and other *Bursaphelenchus species;* ring nematodes, *Criconema species, Criconemella species, Criconemoides species,* and *Mesocriconema species;* stem and bulb nematodes, *Ditylenchus destructor, Ditylenchus dipsaci, Ditylenchus myceliophagus* and other *Ditylenchus species;* awl nematodes, *Dolichodorus species;* spiral nematodes, *Helicotylenchus dihystera, Helicotylenchus multicinctus* and other *Helicotylenchus species, Rotylenchus robustus* and other *Rotylenchus species;* sheath nematodes, *Hemicycliophora species and Hemicriconemoides species; Hirshmanniella species;* lance nematodes, *Hoplolaimus columbus, Hoplolaimus galeatus* and other *Hoplolaimus species;* false root-knot nematodes, *Nacobbus aberrans* and other *Nacobbus species;* needle nematodes, *Longidorus elongates* and other *Longidorus species;* pin nematodes, *Paratylenchus species;* lesion nematodes, *Pratylenchus brachyurus, Pratylenchus coffeae, Pratylenchus curvitatus, Pratylenchus goodeyi, Pratylencus neglectus, Pratylenchus penetrans, Pratylenchus scribneri, Pratylenchus vulnus, Pratylenchus zeae* and other *Pratylenchus species; Radinaphelenchus cocophilus* and other *Radinaphelenchus species;* burrowing nematodes, *Radopholus similis* and other *Radopholus species;* reniform nematodes, *Rotylenchulus reniformis* and other *Rotylenchulus species; Scutellonema species;* stubby root nematodes, *Trichodorus primitivus* and other *Trichodorus species; Paratrichodorus minor and other Paratrichodorus species;* stunt nematodes, *Tylenchorhynchus claytoni, Tylenchorhynchus dubius* and other *Tylenchorhynchus species* and *Merlinius species;* citrus nematodes, *Tylenchulus semipenetrans* and other *Tylenchulus species;* dagger nematodes, *Xiphinema americanum, Xiphinema index, Xiphinema diversicaudatum* and other *Xiphinema species;* and other plant parasitic nematode species.

Moreover, the inventive mixtures are especially useful for the control of Lepidoptera, Coleoptera, Diptera, Thysanoptera and Hymenoptera.

Moreover, the inventive mixtures are especially useful for the control of non-crop pests (household, turf, ornamental).

The mixtures according to the invention can be applied to any and all developmental stages of pests, such as egg, larva, pupa, and adult. The pests may be controlled by contacting the target pest, its food supply, habitat, breeding ground or its locus with a pesticidally effective amount of the inventive mixtures or of compositions comprising the mixtures.

"Locus" means a plant, seed, soil, area, material or environment in which a pest is growing or may grow.

In general, "pesticidally effective amount" means the amount of the inventive mixtures or of compositions comprising the mixtures needed to achieve an observable effect on growth, in-cluding the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as

desired pesticidal effect and duration, weather, target species, locus, mode of application, and the like.

The compound I and the compound IIA (or compound IIC) are usually applied in a weight ratio of from 500:1 to 1:100, preferabgly1:40 to 100:1, more preferably from 1:20 to 100:1, most preferably from 1:2 to 100:1, in particular from 10:1 to 1:10.

The compound I, the compound IIA and the compound IIB (or compound IIC) are usually applied in a weight ratio of from 1:50:500 to 50:1:1, preferably 1:40:40 to 100:1:1, more preferably from 1:20:20 to 100:1:1, in particular from 1:2:2 to 100:1:1.

The compound I, the compound IIA, the compound IIB and the compound IIB (or IID) are usually applied in a weight ratio of of from 1:40:40:40 to 100:1:1:1, more preferably from 1:20:20:20 to 100:1:1:1, in particular from 1:2:2:2 to 100:1:1:1.

The two fungicidal compound IIB and fungicidal compound IID are usually applied in a weight ratio of of from 1:200 to 200:1, more preferably from 1:100 to 100:1, in particular from 1:20 to 20:1.

The two fungicidal compounds selected from list B and the third fungicidal compound IID are usually applied in a weight ratio of of from 1.200:200 to 200:1:1, more preferably from 1:100:100 to 100:1:1, in particular from10:20:20 to 20:1:1.

The compound I, compound IIIA or other neonicotinid and the compound IIB or compound IID are usually applied in a weight ratio of of from 1:100:40 to 100:5:1 more preferably from 1:50:20 to 100:5:1, in particular from 1:10: 2 to 100:10:1.

The compound I, compound IIIA or other neonicotinoid and the compound IIB and compound IID are usually applied in a weight ratio of of from 1:100:40 :40 to 100:5:1:1, more preferably from 1:50:20:20 to 100:5:1:1, in particular from 1:10:2:2 to 100:10:1:1.

The compound I, compound IIIB and the compound IIB or compound IID are usually applied in a weight ratio of from 1:20:40 to 100:1:1, more preferably from1:35:20 to 100:1:1, in particular from from1:5:20 to 100:1:1 .

The compound I, compound IIIB and the compound IIB and compound IID are usually applied in a weight ratio of of from 1:20:40:40 to 100:1:1:1, more preferably from 1:35:20:20 to 100:5:1:1, in particularfrom1:5:2:2 to 100:1:1:1.

When preparing the mixtures, it is preferred to employ the pure active compounds I and IIA (or IIC) and optionally one or more IIB (and optionally III (e.g. IIIB or IIIA) and optionally IID), to which further active compounds against pests, such as insects, arachnids or nematodes, or else herbicidal or growth-regulating active compounds or fertilizers can be added as further active components according to need.

The inventive mixtures are employed by treating the fungi or the plants, seeds, materials or soil to be protected from fungal attack with a pesticidally effective amount of the active compounds. The application can be carried out both before and after the infection of the materials, plants or seeds by the pests.

In the method of combating harmful fungi depending on the type of compound and the desired effect, the application rates of the mixtures according to the invention are from 5 g/ha to 2000 g/ha, preferably from 50 to 900 g/ha, in particular from 50 to 750 g/ha.

The inventive mixtures or compositions of these mixtures can also be employed for protecting plants from attack or infestation by insects, acarids or nematodes comprising contacting a plant, or soil or water in which the plant is growing.

In the context of the present invention, the term plant refers to an entire plant, a part of the plant or the propagation material of the plant, that is, the seed or the seedling.

The treatment can be made into the seedbox before planting into the field.

Plants which can be treated with the inventive mixtures include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, mixtures according to the present invention can be applied to transgenic crops (as seed treatment, spray treatment, in furrow or by any other means) which are resistant to herbicides from the group consisting of the sulfonylureas (EP-A-0257993, U.S. Pat. No. 5,013,659), imidazolinones (see for example US 6222100, WO0182685, WO0026390, WO9741218, WO9802526, WO9802527, WO 04/106529, WO 05/20673, WO 03/14357, WO 03/13225, WO 03/14356, WO 04/16073), glufosinate-type (see for example EP-A-0242236, EP-A-242246) or glyphosate-type (see for example WO 92/00377) or in plants resistant towards herbicides selected from the group of cyclohexadienone/ Aryloxyphenoxypropionic acid herbicides (US 5,162,602 , US 5,290,696 , US 5,498,544 , US 5,428,001 , US 6,069,298 , US 6,268,550 , US 6,146,867 , US 6,222,099 , US 6,414,222) or in transgenic crop plants, for example cotton, with the capability of producing Bacillus thuringiensis toxins (Bt toxins) which make the plants resistant to certain pests (EP-A-0142924, EP-A-0193259).

Furthermore, can be applied to transgenic crops (as seed treatment, spray treatment, in furrow or by any other means), which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the

starch synthesized in the plants (e.g. WO 92/11376, WO 92/14827, WO 91/19806) or of transgenic crop plants having a modified fatty acid composition (WO 91/13972).

The inventive mixtures can therefore be used for the protection of the plant shoot against foliar pests as well as for the treatment of the seed and roots against soil pests, especially those mixtures having systemic action. The term seed treatment comprises all suitable seed treatment techniques known in the art, such as seed dressing, seed coating, seed dusting, seed soaking and seed pelleting.

The compounds I (optionally together with compound III, e.g. IIIA or IIIB) and the one or more compound(s) II (selected from compound IIB, IIC and IID depending on the mixture employed) are usually applied in a weight ratio of from 100:1 1 to 1:100.

Depending on the desired effect, the application rates of the mixtures according to the invention are from 0,3 g/ha to 2000 g/ha..

The inventive mixtures are also suitable for the protection of the seed and the seedlings' roots and shoots, preferably the seeds, against soil pests.

Compositions, which are especially useful for seed treatment are e.g.:

A Soluble concentrates (SL, LS)
D Emulsions (EW, EO, ES)
E Suspensions (SC, OD, FS)
F Water-dispersible granules and water-soluble granules (WG, SG)
G Water-dispersible powders and water-soluble powders (WP, SP, WS)
H Gel-Formulations (GF)
I Dustable powders (DP, DS)

In the treatment of seed, the application rates of the inventive mixture are generally for the formulated product (which usually comprises from10 to 750 g/l of the active(s)) 0,001 l to 1 l per 100 kg of seed, dependent from the desired effect and the kind of seed. Application rates are preferably from 0,01l to 1 l/100 kg of seed, more preferably from 0,1 to 0,75l/100 kg.

In a particular preferred embodiment, each insecticidal compound of the mixtures as defined above (compound I, the nicotinic receptor agonists/antagonists compound, the anthranilamide compound) is generally applied from 1 to 500 g of active ingredient/100 kg seed.

In a further particular preferred embodiment, each of the the fungicidal compound II (compound IID, IIC, IIB, IIA, depending on the mixture used) is generally applied from 1 g to 200 g of active ingredient/100 kg seed.

The separate or joint application of the compounds I (and optionally the a nicotinic receptor agonists/antagonists compound or optionally the anthranilamide compound) and II or of the mixtures of the compounds I (and optionally the a nicotinic receptor agonists/antagonists compound or optionally the anthranilamide compound) and II is carried out by spraying or dusting the seeds, the seedlings, the plants or the soils before or after sowing of the plants or before or after emergence of the plants.

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The seed comprises the inventive mixtures in an amount of from 0.1 g to 10 kg per 100 kg of seed.

The inventive mixtures are effective through both contact (via soil, glass, wall, bed net, carpet, plant parts or animal parts), and ingestion (bait, or plant part) and through trophallaxis and transfer.

Preferred application methods are into water bodies, via soil, cracks and crevices, pastures, manure piles, sewers, into water, on floor, wall, or by perimeter spray application and bait.

According to another preferred embodiment of the invention, for use against non crop pests such as ants, termites, wasps, flies, mosquitoes, crickets, locusts, or cockroaches the inventive mixtures are prepared into a bait preparation.

The bait can be a liquid, a solid or a semisolid preparation (e.g. a gel). The bait employed in the composition is a product which is sufficiently attractive to incite insects such as ants, termites, wasps, flies, mosquitoes, crickets etc. or cockroaches to eat it. This attractant may be chosen from feeding stimulants or para and / or sex pheromones readily known in the art.

Methods to control infectious diseases transmitted by insects (e.g. malaria, dengue and yellow fever, lymphatic filariasis, and leishmaniasis) with the inventive mixtures and their respective compositions also comprise treating surfaces of huts and houses, air spraying and impregnation of curtains, tents, clothing items, bed nets, tsetse-fly trap or the like. Insecticidal compositions for application to fibers, fabric, knitgoods, non-wovens, netting material or foils and tarpaulins preferably comprise a composition including the inventive mixtures, optionally a repellent and at least one binder.

The inventive mixtures and the compositions comprising them can be used for protecting wooden materials

such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

In the case of soil treatment or of application to the pests dwelling place or nest, the quantity of active ingredient ranges from 0.0001 to 500 g per 100 $m^2$, preferably from 0.001 to 20 g per 100 $m^2$.

Customary application rates in the protection of materials are, for example, from 0.01 g to 1000 g of active compound per $m^2$ treated material, desirably from 0.1 g to 50 g per $m^2$.

Insecticidal compositions for use in the impregnation of materials typically contain from 0.001 to 95 weight %, preferably from 0.1 to 45 weight %, and more preferably from 1 to 25 weight % of at least one repellent and / or insecticide.

For use in bait compositions, the typical content of active ingredient is from 0.0001 weight % to 15 weight %, desirably from 0.001 weight % to 5% weight % of active compound. The composition used may also comprise other additives such as a solvent of the active material, a flavoring agent, a preserving agent, a dye or a bitter agent. Its attractiveness may also be enhanced by a special color, shape or texture.

For use in spray compositions, the content of the mixture of the active ingredients is from 0.001 to 80 weights %, preferably from 0.01 to 50 weight % and most preferably from 0.01 to 15 weight %.

For use in treating crop plants, the rate of application of the mixture of the active ingredients of this invention may be in the range of 0.1 g to 4000 g per hectare, desirably from 25 g to 600 g per hectare, more desirably from 50 g to 500 g per hectare.

It was also an object of the present invention to provide mixtures suitable for treating, controlling, preventing and protecting warm-blooded animals, including humans, and fish against infestation and infection by pests. Problems that may be encountered with pest control on or in animals and/or humans are similar to those described at the outset, namely the need for reduced dosage rates, and / or enhanced spectrum of activity and / or combination of knock-down activity with prolonged control and / or resistance management.

This invention also provides a method for treating, controlling, preventing and protecting warm-blooded animals, including humans, and fish against infestation and infection by pests of the orders Siphonaptera, Hymenoptera, Hemiptera, Orthoptera, Acarina, Phthiraptera, and Diptera, which comprises orally, topically or parenterally administering or applying to said animals a pesticidally effective amount of mixtures according to the invention.

The invention also provides a process for the preparation of a composition for treating, controlling, preventing or protecting a warm-blooded animal or a fish against infestation or infection by pests of the Siphonaptera, Hymenoptera, Hemiptera, Orthoptera, Acarina, Phthiraptera, and Diptera orders which comprises a pesticidally effective amount of a mixture according to the invention.

The above method is particularly useful for controlling and preventing infestations and infections in warm-blooded animals such as cattle, sheep, swine, camels, deer, horses, poultry, goats, dogs and cats as well as humans.

Infestations in warm-blooded animals and fish including, but not limited to, lice, biting lice, ticks, nasal bots, keds, biting flies, muscoid flies, flies, myiasitic fly larvae, chiggers, gnats, mosquitoes and fleas may be controlled, prevented or eliminated by the mixtures according to the invention.

For oral administration to warm-blooded animals, the mixtures according to the invention may be formulated as animal feeds, animal feed premixes, animal feed concentrates, pills, solutions, pastes, suspensions, drenches, gels, tablets, boluses and capsules. In addition, the mixtures according to the invention may be administered to the animals in their drinking water. For oral administration, the dosage form chosen should provide the animal with 0.01 mg/kg to 100 mg/kg of animal body weight per day of the mixture.

Alternatively, the mixtures according to the invention may be administered to animals parenterally, for example, by intraruminal, intramuscular, intravenous or subcutaneous injection. The mixtures according to the invention may be dispersed or dissolved in a physiologically acceptable carrier for subcutaneous injection. Alternatively, the mixtures according to the invention may be formulated into an implant for subcutaneous administration. In addition the mixtures according to the invention may be transdermally administered to animals. For parenteral administration, the dosage form chosen should provide the animal with 0.01 mg/kg to 100 mg/kg of animal body weight per day of the mixture.

The mixtures according to the invention may also be applied topically to the animals in the form of dips, dusts, powders, collars, medallions, sprays, spot-on and pour-on formulations. For topical application, dips and sprays usually contain 0,5 ppm to 5,000 ppm and preferably 1 ppm to 3000 ppm of the inventive compounds. In addition, the mixtures according to the invention may be formulated as ear tags for animals, particularly quadrupeds such as cattle and sheep.

Biological Examples

1) Fungicidal action

The fungicidal effect of the compound and the mixtures could be demonstrated by the following tests:

The active compounds, separately or jointly, were prepared as a stock solution comprising 0.25% by weight of active compound in acetone or DMSO. 1 % by weight of the emulsifier Uniperol® EL (wetting agent having emulsifying and dispersant action based on ethoxylated alkylphenols) was added to this solution, and the mixture was diluted with water to the desired concentration.
The visually determined percentages of infected leaf areas were converted into efficacies in % of the untreated control:
The efficacy (E) is calculated as follows using Abbot's formula:

$$E = (1 - \alpha/\beta) \cdot 100$$

α corresponds to the fungicidal infection of the treated plants in % and
β corresponds to the fungicidal infection of the untreated (control) plants in %

An efficacy of 0 means that the infection level of the treated plants corresponds to that of the untreated control plants; an efficacy of 100 means that the treated plants were not infected.
The expected efficacies of mixtures of active compounds were determined using Colby's formula (Colby, S.R. "Calculating synergistic and antagonistic responses of herbicide Combinations", Weeds, 15, 20-22, 1967) and compared with the observed efficacies.
Colby's formula:

$$E = x + y - x \cdot y/100$$

E expected efficacy, expressed in % of the untreated control, when using the mixture of the active compounds A and B at the concentrations a and b
x efficacy, expressed in % of the untreated control, when using the active compound A at the concentration a
y efficacy, expressed in % of the untreated control, when using the active compound B at the concentration b

Use example 1 - Fungicidal control of brown spot caused by *Cochliobolus miyabeanus* (protective) Leaves of pot-grown rice seedlings were sprayed to run-off with an aqueous suspension, containing the concentration of active ingredient as described below prepared from the stock solution. The plants were allowed to air-dry. At the following day the plants were inoculated with an aqueous spore suspension of *Cochliobolus miyabeanus.* Then the trial plants were immediately transferred to a humid chamber. After 6 days at 22-24°C and a relative humidity close to 100 % the extent of fungal attack on the leaves was visually assessed as % diseased leaf area.
The test results show that, by virtue of strong synergism, the activity of the mixtures according to the invention is considerably higher than had been predicted using Colby's formula.

2) Action against animal pests

The following tests demonstrate the control efficacy of compounds, mixtures or compositions of this invention on specific pests. However, the pest control protection afforded by the compounds, mixtures or compositions is not limited to these species. In certain instances, combinations of a compound of this invention with other invertebrate pest control compounds or agents are found to exhibit synergistic effects against certain important invertebrate pests.
The analysis of synergism or antagonism between the mixtures or compositions is determined using Colby's equation.

Use example 2

For evaluating control of vetch aphid (*Megoura viciae*) through contact or systemic means the test unit consists of 24-well-microtiter plates containing broad bean leaf disks.
The compounds or mixtures are formulated using a solution containing 75% water and 25% DMSO. Different concentrations of formulated compounds or mixtures are sprayed onto the leaf disks at 2.5μl, using a custom built micro atomizer, at two replications.
For experimental mixtures in these tests identical volumes of both mixing partners at the desired concentrations respectively, are mixed together.
After application, the leaf disks are air-dried and 5 - 8 adult aphids placed on the leaf disks inside the microtiter

plate wells. The aphids are then allowed to suck on the treated leaf disks and incubated at 23 ± 1°C, 50 ± 5 % RH (room humidity) for 5 days. Aphid mortality and fecundity is visually assessed.

Use example 3

For evaluating control of boll weevil (*Anthonomus grandis*) the test unit consists of 24-well-microtiter plates containing an insect diet and 20-30 A. *grandis* eggs.

The compounds or mixtures are formulated using a solution containing 75% water and 25% DMSO. Different concentrations of formulated compounds or mixtures are sprayed onto the insect diet at 20μl, using a custom built micro atomizer, at two replications.

For experimental mixtures in these tests identical volumes of both mixing partners at the desired concentrations respectively, are mixed together.

After application, microtiter plates are incubated at 23 ± 1°C, 50 ± 5 % RH for 5 days. Egg and larval mortality is visually assessed.

Use example 4

For evaluating control of Mediterranean fruitfly (*Ceratitis capitata*) the test unit consists of 96-well-microtiter plates containing an insect diet and 50-80 *C. capitata* eggs.

The compounds or mixtures are formulated using a solution containing 75% water and 25% DMSO. Different concentrations of formulated compounds or mixtures are sprayed onto the insect diet at 5μl, using a custom built micro atomizer, at two replications.

For experimental mixtures in these tests identical volumes of both mixing partners at the desired concentrations respectively, are mixed together.

After application, microtiter plates are incubated at 28 ± 1°C, 80 ± 5 % RH for 5 days. Egg and larval mortality is visually assessed.

Use example 5

For evaluating control of tobacco budworm (*Heliothis virescens*) the test unit consists of 96-well-microtiter plates containing an insect diet and 15-25 *H. virescens* eggs.

The compounds or mixtures are formulated using a solution containing 75% water and 25% DMSO. Different concentrations of formulated compounds or mixtures are sprayed onto the insect diet at 10μl, using a custom built micro atomizer, at two replications.

For experimental mixtures in these tests identical volumes of both mixing partners at the desired concentrations respectively, are mixed together.

After application, microtiter plates are incubated at 28 ± 1°C, 80 ± 5 % RH for 5 days. Egg and larval mortality is visually assessed.

In the following examples 6 and 7, the active ingredients were formulated separately as stock solutions at a concentration of 10 000 ppm in DMSO. The active ingredient pyraclostrobin was employed as a commercially available formulation.

Use example No. 6 - Activity against the causative agent of gray mold *Botrytis cinerea* in the microtiter test (Botrci)

The stock solution was pipetted into a microtiter plate (MTP) and diluted to the stated active ingredient concentration with an aqueous malt-based medium for fungi. An aqueous spore suspension of *Botrytis cinerea* was subsequently added. The plates were placed into a water-vapor-saturated chamber at temperatures of 18°C. On day 7 post-inoculation, the MTPs were measured at 405 nm using an absorption photometer.

The parameters measured were related to the growth of the control variant, which was free from active ingredients, and the blank, which was free from fungi and active ingredients, in order to determine the relative growth % of the pathogens in the individual active ingredients.

The visually determined data for the affected leaf area in % was first averaged and then converted into efficacies as % of the untreated control. An efficacy of 0 is the same disease level as in the untreated control, an efficacy of 100 is 0% disease level. The expected efficacies for active ingredient combinations were determined using Colby' s formula (Colby, S. R. (Calculating synergistic and antagonistic responses of herbicide Combinations", Weeds, 15, pp. 20-22, 1967) and compared with the observed efficacies.

| Active ingredient/a.i. combination | Concentration (ppm) | Ratio | Observed activity (%) | Activity calculated using Colby' s formula (%) | Synergistic effect in (%) |
|---|---|---|---|---|---|
| pyraclostrobin | 0.016 | 4 | | | |
| triticonazole + thiophanate-methyl | 0.063+0.25 | 12 | | | |
| pyraclostrobin triticonazole + thiophanate-methyl | 0.016+0.063+0.25 | 1:4:16 | 35 | 15 | 20 |

Use example No. 7 - Activity against the causative agent of rice blast disease *Pyricularia oryzae* in the microtiter test (Pyrior)

The stock solution was pipetted into a microtiter plate (MTP) and diluted to the stated active ingredient concentration with an aqueous malt-based medium for fungi. An aqueous spore suspension of *Pyricularia oryzae* was subsequently added. The plates were placed into a water-vapor-saturated chamber at temperatures of 18°C. On day 7 post-inoculation, the MTPs were measured at 405 nm using an absorption photometer.

The parameters measured were related to the growth of the control variant, which was free from active ingredients, and the blank, which was free from fungi and active ingredients, in order to determine the relative growth % of the pathogens in the individual active ingredients.

The visually determined data for the affected leaf area in % was first averaged and then converted into efficacies as % of the untreated control. An efficacy of 0 is the same disease level as in the untreated control, an efficacy of 100 is 0% disease level. The expected efficacies for active ingredient combinations were determined using Colby' s formula (Colby, S. R. (Calculating synergistic and antagonistic responses of herbicide Combinations", Weeds, 15, pp. 20-22, 1967) and compared with the observed efficacies.

| Active ingredient/a.i. combination | Concentration (ppm) | Ratio | Observed activity (%) | Activity calculated using Colby' s formula (%) | Synergistic effect in (%) |
|---|---|---|---|---|---|
| pyraclostrobin | 0.001 | 31 | | | |
| triticonazole + thiophanate-methyl | 0.004+0.016 | 5 | | | |
| pyraclostrobin triticonazole + thiophanate-methyl | 0.001+0.004+0.016 | 1:4:16 | 60 | 35 | 25 |

Use example No. 8 - Activity against the causative agent of rice blast disease *Pyricularia oryzae* in the microtiter test (Pyrior)

The active ingredients were formulated separately as stock solutions at a concentration of 10 000 ppm in DMSO.

The stock solution was pipetted into a microtiter plate (MTP) and diluted to the stated active ingredient concentration with an aqueous malt-based medium for fungi. An aqueous spore suspension of *Pyricularia oryzae* was subsequently added. The plates were placed into a water-vapor-saturated chamber at temperatures of 18°C. On day 7 post-inoculation, the MTPs were measured at 405 nm using an absorption photometer.

The parameters measured were related to the growth of the control variant, which was free from active ingredients, and the blank, which was free from fungi and active ingredients, in order to determine the relative growth % of the pathogens in the individual active ingredients.

The visually determined data for the affected leaf area in % was first averaged and then converted into efficacies as % of the untreated control. An efficacy of 0 is the same disease level as in the untreated control; an efficacy of 100

is 0% disease level. The expected efficacies for active ingredient combinations were determined using Colby' s formula (Colby, S. R. (Calculating synergistic and antagonistic responses of herbicide Combinations", Weeds, 15, pp. 20-22, 1967) and compared with the observed efficacies.

| Active ingredient/a.i. combination | Concentration (ppm) | Ratio | Observed activity (%) | Activity calculated using Colby' s formula (%) | Synergistic effect in (%) |
|---|---|---|---|---|---|
| triticonazole + clothia-nidin | 2+2 | | 22 | | |
| fipronil | 2 | | 5 | | |
| triticonazole + clothia-nidin + fipronil | 2+2+2 | 1:1:1 | 61 | 26 | 35 |

## Claims

**1.** Synergistic pesticidal mixtures comprising, as active components,

1) an insecticidal compound I which is fipronil and
2) a fungicidal compound IIA which is trifloxystrobin.

**2.** Pesticidal mixtures according to claim 1 additionally comprising as active components one fungicidal compound IIB selected from difenoconazole, orysastrobin, azoxystrobin, boscalid, metalaxyl, cyproconazole, epoxiconazole, fenbuconazole, fluquinconazole, flutriafol, ipconazole, metconazole, propiconazole, prothioconazole, tebuconazole, triadimenol, triticonazole, imazalil, prochloraz, carbendazim, thiabendazole, ethaboxam, hymexazole, pyrimethanil, aldimorph, dodemorph, fenpropimorph, iprodione, captan, fenoxanil, probenazol, mancozeb, metiram, thiram, ziram, guazatin, thiophanate-methyl, chlorothalonil, and metrafenone
in synergistically effective amounts.

**3.** A mixture according to any of claims 1 and 2, comprising compounds I, IIA, and following combinations of compound IIB and IID:

| IIB | IID |
| --- | --- |
| trifloxystrobin | orysatrobin |
| trifloxystrobin | azoxystrobin |
| trifloxystrobin | difenoconazole |
| trifloxystrobin | boscalid |
| trifloxystrobin | metalaxyl |
| trifloxystrobin | cyproconazole |
| trifloxystrobin | epoxiconazole |
| trifloxystrobin | fenbuconazole |
| trifloxystrobin | fluquinconazole |
| trifloxystrobin | flutriafol |
| trifloxystrobin | ipconazole |
| trifloxystrobin | metconazole |
| trifloxystrobin | propiconazole |
| trifloxystrobin | prothioconazole |
| trifloxystrobin | tebuconazole |
| trifloxystrobin | triadimenol |
| trifloxystrobin | triticonazole |
| trifloxystrobin | imazalil |
| trifloxystrobin | prochloraz |
| trifloxystrobin | carbendazim |
| trifloxystrobin | thiabendazole |
| trifloxystrobin | ethaboxam |

| IIB | IID |
| --- | --- |
| trifloxystrobin | hymexazole |
| trifloxystrobin | pyrimethanil |
| trifloxystrobin | fludioxonil |
| trifloxystrobin | aldimorph |
| trifloxystrobin | dodemorph |
| trifloxystrobin | fenpropimorph |
| trifloxystrobin | iprodione |
| trifloxystrobin | captan |
| trifloxystrobin | fenoxanil |
| trifloxystrobin | probenazol |
| trifloxystrobin | mancozeb |
| trifloxystrobin | metiram |
| trifloxystrobin | thiram |
| trifloxystrobin | ziram |
| trifloxystrobin | guazatin |
| trifloxystrobin | thiophanate-methyl |
| trifloxystrobin | chlorothalonil |
| trifloxystrobin | metrafenone |
| trifloxystrobin | pyraclostrobin |
| orysastrobin | azoxystrobin |
| orysastrobin | difenoconazole |

| IIB | IID |
|---|---|
| orysastrobin | boscalid |
| orysastrobin | metalaxyl |
| orysastrobin | cyproconazole |
| orysastrobin | epoxiconazole |
| orysastrobin | fenbuconazole |
| orysastrobin | fluquinconazole |
| orysastrobin | flutriafol |
| orysastrobin | ipconazole |
| orysastrobin | metconazole |
| orysastrobin | propiconazole |
| orysastrobin | prothioconazole |
| orysastrobin | tebuconazole |
| orysastrobin | triadimenol |
| orysastrobin | triticonazole |
| orysastrobin | imazalil |
| orysastrobin | prochloraz |
| orysastrobin | carbendazim |
| orysastrobin | thiabendazole |
| orysastrobin | ethaboxam |
| orysastrobin | hymexazole |
| orysastrobin | pyrimethanil |
| orysastrobin | fludioxonil |
| orysastrobin | aldimorph |
| orysastrobin | dodemorph |
| orysastrobin | fenpropimorph |
| orysastrobin | iprodione |
| orysastrobin | captan |
| orysastrobin | fenoxanil |
| orysastrobin | probenazol |
| orysastrobin | mancozeb |
| orysastrobin | metiram |
| orysastrobin | thiram |
| orysastrobin | ziram |
| orysastrobin | guazatin |
| orysastrobin | thiophanate-methyl |
| orysastrobin | chlorothalonil |
| orysastrobin | metrafenone |
| orysastrobin | pyraclostrobin |
| azoxystrobin | difenoconazole |
| azoxystrobin | boscalid |

| IIB | IID |
|---|---|
| azoxystrobin | metalaxyl |
| azoxystrobin | cyproconazole |
| azoxystrobin | epoxiconazole |
| azoxystrobin | fenbuconazole |
| azoxystrobin | fluquinconazole |
| azoxystrobin | flutriafol |
| azoxystrobin | ipconazole |
| azoxystrobin | metconazole |
| azoxystrobin | propiconazole |
| azoxystrobin | prothioconazole |
| azoxystrobin | tebuconazole |
| azoxystrobin | triadimenol |
| azoxystrobin | triticonazole |
| azoxystrobin | imazalil |
| azoxystrobin | prochloraz |
| azoxystrobin | carbendazim |
| azoxystrobin | thiabendazole |
| azoxystrobin | ethaboxam |
| azoxystrobin | hymexazole |
| azoxystrobin | pyrimethanil |
| azoxystrobin | fludioxonil |
| azoxystrobin | aldimorph |
| azoxystrobin | dodemorph |
| azoxystrobin | fenpropimorph |
| azoxystrobin | iprodione |
| azoxystrobin | captan |
| azoxystrobin | fenoxanil |
| azoxystrobin | probenazol |
| azoxystrobin | mancozeb |
| azoxystrobin | metiram |
| azoxystrobin | thiram |
| azoxystrobin | ziram |
| azoxystrobin | guazatin |
| azoxystrobin | thiophanate-methyl |
| azoxystrobin | chlorothalonil |
| azoxystrobin | metrafenone |
| azoxystrobin | pyraclostrobin |
| boscalid | metalaxyl |
| boscalid | cyproconazole |
| boscalid | epoxiconazole |

| IIB | IID |
|---|---|
| boscalid | fenbuconazole |
| boscalid | fluquinconazole |
| boscalid | flutriafol |
| boscalid | ipconazole |
| boscalid | metconazole |
| boscalid | propiconazole |
| boscalid | prothioconazole |
| boscalid | tebuconazole |
| boscalid | triadimenol |
| boscalid | triticonazole |
| boscalid | imazalil |
| boscalid | prochloraz |
| boscalid | carbendazim |
| boscalid | thiabendazole |
| boscalid | ethaboxam |
| boscalid | hymexazole |
| boscalid | pyrimethanil |
| boscalid | fludioxonil |
| boscalid | aldimorph |
| boscalid | dodemorph |
| boscalid | fenpropimorph |
| boscalid | iprodione |
| boscalid | captan |
| boscalid | fenoxanil |
| boscalid | probenazol |
| boscalid | mancozeb |
| boscalid | metiram |
| boscalid | thiram |
| boscalid | ziram |
| boscalid | guazatin |
| boscalid | thiophanate-methyl |
| boscalid | chlorothalonil |
| boscalid | metrafenone |
| boscalid | pyraclostrobin |
| metalaxyl | cyproconazole |
| metalaxyl | epoxiconazole |
| metalaxyl | fenbuconazole |
| metalaxyl | fluquinconazole |
| metalaxyl | flutriafol |
| metalaxyl | ipconazole |

| IIB | IID |
|---|---|
| metalaxyl | metconazole |
| metalaxyl | propiconazole |
| metalaxyl | prothioconazole |
| metalaxyl | tebuconazole |
| metalaxyl | triadimenol |
| metalaxyl | triticonazole |
| metalaxyl | imazalil |
| metalaxyl | prochloraz |
| metalaxyl | carbendazim |
| metalaxyl | thiabendazole |
| metalaxyl | ethaboxam |
| metalaxyl | hymexazole |
| metalaxyl | pyrimethanil |
| metalaxyl | fludioxonil |
| metalaxyl | aldimorph |
| metalaxyl | dodemorph |
| metalaxyl | fenpropimorph |
| metalaxyl | iprodione |
| metalaxyl | captan |
| metalaxyl | fenoxanil |
| metalaxyl | probenazol |
| metalaxyl | mancozeb |
| metalaxyl | metiram |
| metalaxyl | thiram |
| metalaxyl | ziram |
| metalaxyl | guazatin |
| metalaxyl | thiophanate-methyl |
| metalaxyl | chlorothalonil |
| metalaxyl | metrafenone |
| metalaxyl | pyraclostrobin |
| cyproconazole | epoxiconazole |
| cyproconazole | fenbuconazole |
| cyproconazole | fluquinconazole |
| cyproconazole | flutriafol |
| cyproconazole | ipconazole |
| cyproconazole | metconazole |
| cyproconazole | propiconazole |
| cyproconazole | prothioconazole |
| cyproconazole | tebuconazole |
| cyproconazole | triadimenol |

| IIB | IID |
|---|---|
| cyproconazole | triticonazole |
| cyproconazole | imazalil |
| cyproconazole | prochloraz |
| cyproconazole | carbendazim |
| cyproconazole | thiabendazole |
| cyproconazole | ethaboxam |
| cyproconazole | hymexazole |
| cyproconazole | pyrimethanil |
| cyproconazole | fludioxonil |
| cyproconazole | aldimorph |
| cyproconazole | dodemorph |
| cyproconazole | fenpropimorph |
| cyproconazole | iprodione |
| cyproconazole | captan |
| cyproconazole | fenoxanil |
| cyproconazole | probenazol |
| cyproconazole | mancozeb |
| cyproconazole | metiram |
| cyproconazole | thiram |
| cyproconazole | ziram |
| cyproconazole | guazatin |
| cyproconazole | thiophanate-methyl |
| cyproconazole | chlorothalonil |
| cyproconazole | metrafenone |
| cyproconazole | pyraclostrobin |
| epoxiconazole | fenbuconazole |
| epoxiconazole | fluquinconazole |
| epoxiconazole | flutriafol |
| epoxiconazole | ipconazole |
| epoxiconazole | metconazole |
| epoxiconazole | propiconazole |
| epoxiconazole | prothioconazole |
| epoxiconazole | tebuconazole |
| epoxiconazole | triadimenol |
| epoxiconazole | triticonazole |
| epoxiconazole | imazalil |
| epoxiconazole | prochloraz |
| epoxiconazole | carbendazim |
| epoxiconazole | thiabendazole |
| epoxiconazole | ethaboxam |

| IIB | IID |
|---|---|
| epoxiconazole | hymexazole |
| epoxiconazole | pyrimethanil |
| epoxiconazole | fludioxonil |
| epoxiconazole | aldimorph |
| epoxiconazole | dodemorph |
| epoxiconazole | fenpropimorph |
| epoxiconazole | iprodione |
| epoxiconazole | captan |
| epoxiconazole | fenoxanil |
| epoxiconazole | probenazol |
| epoxiconazole | mancozeb |
| epoxiconazole | metiram |
| epoxiconazole | thiram |
| epoxiconazole | ziram |
| epoxiconazole | guazatin |
| epoxiconazole | thiophanate-methyl |
| epoxiconazole | chlorothalonil |
| epoxiconazole | metrafenone |
| epoxiconazole | pyraclostrobin |
| fenbuconazole | fluquinconazole |
| fenbuconazole | flutriafol |
| fenbuconazole | ipconazole |
| fenbuconazole | metconazole |
| fenbuconazole | propiconazole |
| fenbuconazole | prothioconazole |
| fenbuconazole | tebuconazole |
| fenbuconazole | triadimenol |
| fenbuconazole | triticonazole |
| fenbuconazole | imazalil |
| fenbuconazole | prochloraz |
| fenbuconazole | carbendazim |
| fenbuconazole | thiabendazole |
| fenbuconazole | ethaboxam |
| fenbuconazole | hymexazole |
| fenbuconazole | pyrimethanil |
| fenbuconazole | fludioxonil |
| fenbuconazole | aldimorph |
| fenbuconazole | dodemorph |
| fenbuconazole | fenpropimorph |
| fenbuconazole | iprodione |

| IIB | IID |
|---|---|
| fenbuconazole | captan |
| fenbuconazole | fenoxanil |
| fenbuconazole | probenazol |
| fenbuconazole | mancozeb |
| fenbuconazole | metiram |
| fenbuconazole | thiram |
| fenbuconazole | ziram |
| fenbuconazole | guazatin |
| fenbuconazole | thiophanate-methyl |
| fenbuconazole | chlorothalonil |
| fenbuconazole | metrafenone |
| fenbuconazole | pyraclostrobin |
| fluquinconazole | flutriafol |
| fluquinconazole | ipconazole |
| fluquinconazole | metconazole |
| fluquinconazole | propiconazole |
| fluquinconazole | prothioconazole |
| fluquinconazole | tebuconazole |
| fluquinconazole | triadimenol |
| fluquinconazole | triticonazole |
| fluquinconazole | imazalil |
| fluquinconazole | prochloraz |
| fluquinconazole | carbendazim |
| fluquinconazole | thiabendazole |
| fluquinconazole | ethaboxam |
| fluquinconazole | hymexazole |
| fluquinconazole | pyrimethanil |
| fluquinconazole | fludioxonil |
| fluquinconazole | aldimorph |
| fluquinconazole | dodemorph |
| fluquinconazole | fenpropimorph |
| fluquinconazole | iprodione |
| fluquinconazole | captan |
| fluquinconazole | fenoxanil |
| fluquinconazole | probenazol |
| fluquinconazole | mancozeb |
| fluquinconazole | metiram |
| fluquinconazole | thiram |
| fluquinconazole | ziram |
| fluquinconazole | guazatin |

| IIB | IID |
|---|---|
| fluquinconazole | thiophanate-methyl |
| fluquinconazole | chlorothalonil |
| fluquinconazole | metrafenone |
| fluquinconazole | pyraclostrobin |
| flutriafol | ipconazole |
| flutriafol | metconazole |
| flutriafol | propiconazole |
| flutriafol | prothioconazole |
| flutriafol | tebuconazole |
| flutriafol | triadimenol |
| flutriafol | triticonazole |
| flutriafol | imazalil |
| flutriafol | prochloraz |
| flutriafol | carbendazim |
| flutriafol | thiabendazole |
| flutriafol | ethaboxam |
| flutriafol | hymexazole |
| flutriafol | pyrimethanil |
| flutriafol | fludioxonil |
| flutriafol | aldimorph |
| flutriafol | dodemorph |
| flutriafol | fenpropimorph |
| flutriafol | iprodione |
| flutriafol | captan |
| flutriafol | fenoxanil |
| flutriafol | probenazol |
| flutriafol | mancozeb |
| flutriafol | metiram |
| flutriafol | thiram |
| flutriafol | ziram |
| flutriafol | guazatin |
| flutriafol | thiophanate-methyl |
| flutriafol | chlorothalonil |
| flutriafol | metrafenone |
| flutriafol | pyraclostrobin |
| ipconazole | metconazole |
| ipconazole | propiconazole |
| ipconazole | prothioconazole |
| ipconazole | tebuconazole |

| IIB | IID |
|---|---|
| ipconazole | triadimenol |
| ipconazole | triticonazole |
| ipconazole | imazalil |
| ipconazole | prochloraz |
| ipconazole | carbendazim |
| ipconazole | thiabendazole |
| ipconazole | ethaboxam |
| ipconazole | hymexazole |
| ipconazole | pyrimethanil |
| ipconazole | fludioxonil |
| ipconazole | aldimorph |
| ipconazole | dodemorph |
| ipconazole | fenpropimorph |
| ipconazole | iprodione |
| ipconazole | captan |
| ipconazole | fenoxanil |
| ipconazole | probenazol |
| ipconazole | mancozeb |
| ipconazole | metiram |
| ipconazole | thiram |
| ipconazole | ziram |
| ipconazole | guazatin |
| ipconazole | thiophanate-methyl |
| ipconazole | chlorothalonil |
| ipconazole | metrafenone |
| ipconazole | pyraclostrobin |
| metconazole | propiconazole |
| metconazole | prothioconazole |
| metconazole | tebuconazole |
| metconazole | triadimenol |
| metconazole | triticonazole |
| metconazole | imazalil |
| metconazole | prochloraz |
| metconazole | carbendazim |
| metconazole | thiabendazole |
| metconazole | ethaboxam |
| metconazole | hymexazole |
| metconazole | pyrimethanil |
| metconazole | fludioxonil |
| metconazole | aldimorph |

| IIB | IID |
|---|---|
| metconazole | dodemorph |
| metconazole | fenpropimorph |
| metconazole | iprodione |
| metconazole | captan |
| metconazole | fenoxanil |
| metconazole | probenazol |
| metconazole | mancozeb |
| metconazole | metiram |
| metconazole | thiram |
| metconazole | ziram |
| metconazole | guazatin |
| metconazole | thiophanate-methyl |
| metconazole | chlorothalonil |
| metconazole | metrafenone |
| metconazole | pyraclostrobin |
| propiconazole | prothioconazole |
| propiconazole | tebuconazole |
| propiconazole | triadimenol |
| propiconazole | triticonazole |
| propiconazole | imazalil |
| propiconazole | prochloraz |
| propiconazole | carbendazim |
| propiconazole | thiabendazole |
| propiconazole | ethaboxam |
| propiconazole | hymexazole |
| propiconazole | pyrimethanil |
| propiconazole | fludioxonil |
| propiconazole | aldimorph |
| propiconazole | dodemorph |
| propiconazole | fenpropimorph |
| propiconazole | iprodione |
| propiconazole | captan |
| propiconazole | fenoxanil |
| propiconazole | probenazol |
| propiconazole | mancozeb |
| propiconazole | metiram |
| propiconazole | thiram |
| propiconazole | ziram |
| propiconazole | guazatin |
| propiconazole | thiophanate- |

| IIB | IID |
|---|---|
| | methyl |
| propiconazole | chlorothalonil |
| propiconazole | metrafenone |
| propiconazole | pyraclostrobin |
| prothioconazole | tebuconazole |
| prothioconazole | triadimenol |
| prothioconazole | triticonazole |
| prothioconazole | imazalil |
| prothioconazole | prochloraz |
| prothioconazole | carbendazim |
| prothioconazole | thiabendazole |
| prothioconazole | ethaboxam |
| prothioconazole | hymexazole |
| prothioconazole | pyrimethanil |
| prothioconazole | fludioxonil |
| prothioconazole | aldimorph |
| prothioconazole | dodemorph |
| prothioconazole | fenpropimorph |
| prothioconazole | iprodione |
| prothioconazole | captan |
| prothioconazole | fenoxanil |
| prothioconazole | probenazol |
| prothioconazole | mancozeb |
| prothioconazole | metiram |
| prothioconazole | thiram |
| prothioconazole | ziram |
| prothioconazole | guazatin |
| prothioconazole | thiophanate-methyl |
| prothioconazole | chlorothalonil |
| prothioconazole | metrafenone |
| prothioconazole | pyraclostrobin |
| tebuconazole | triadimenol |
| tebuconazole | triticonazole |
| tebuconazole | imazalil |
| tebuconazole | prochloraz |
| tebuconazole | carbendazim |
| tebuconazole | thiabendazole |
| tebuconazole | ethaboxam |
| tebuconazole | hymexazole |
| tebuconazole | pyrimethanil |

| IIB | IID |
|---|---|
| tebuconazole | fludioxonil |
| tebuconazole | aldimorph |
| tebuconazole | dodemorph |
| tebuconazole | fenpropimorph |
| tebuconazole | iprodione |
| tebuconazole | captan |
| tebuconazole | fenoxanil |
| tebuconazole | probenazol |
| tebuconazole | mancozeb |
| tebuconazole | metiram |
| tebuconazole | thiram |
| tebuconazole | ziram |
| tebuconazole | guazatin |
| tebuconazole | thiophanate-methyl |
| tebuconazole | chlorothalonil |
| tebuconazole | metrafenone |
| tebuconazole | pyraclostrobin |
| triadimenol | triticonazole |
| triadimenol | imazalil |
| triadimenol | prochloraz |
| triadimenol | carbendazim |
| triadimenol | thiabendazole |
| triadimenol | ethaboxam |
| triadimenol | hymexazole |
| triadimenol | pyrimethanil |
| triadimenol | fludioxonil |
| triadimenol | aldimorph |
| triadimenol | dodemorph |
| triadimenol | fenpropimorph |
| triadimenol | iprodione |
| triadimenol | captan |
| triadimenol | fenoxanil |
| triadimenol | probenazol |
| triadimenol | mancozeb |
| triadimenol | metiram |
| triadimenol | thiram |
| triadimenol | ziram |
| triadimenol | guazatin |
| triadimenol | thiophanate-methyl |

| IIB | IID |
|---|---|
| triadimenol | chlorothalonil |
| triadimenol | metrafenone |
| triadimenol | pyraclostrobin |
| triticonazole | imazalil |
| triticonazole | prochloraz |
| triticonazole | carbendazim |
| triticonazole | thiabendazole |
| triticonazole | ethaboxam |
| triticonazole | hymexazole |
| triticonazole | pyrimethanil |
| triticonazole | fludioxonil |
| triticonazole | aldimorph |
| triticonazole | dodemorph |
| triticonazole | fenpropimorph |
| triticonazole | iprodione |
| triticonazole | captan |
| triticonazole | fenoxanil |
| triticonazole | probenazol |
| triticonazole | mancozeb |
| triticonazole | metiram |
| triticonazole | thiram |
| triticonazole | ziram |
| triticonazole | guazatin |
| triticonazole | thiophanate-methyl |
| triticonazole | chlorothalonil |
| triticonazole | metrafenone |
| triticonazole | pyraclostrobin |
| imazalil | prochloraz |
| imazalil | carbendazim |
| imazalil | thiabendazole |
| imazalil | ethaboxam |
| imazalil | hymexazole |
| imazalil | pyrimethanil |
| imazalil | fludioxonil |
| imazalil | aldimorph |
| imazalil | dodemorph |
| imazalil | fenpropimorph |
| imazalil | iprodione |
| imazalil | captan |
| imazalil | fenoxanil |

| IIB | IID |
|---|---|
| imazalil | probenazol |
| imazalil | mancozeb |
| imazalil | metiram |
| imazalil | thiram |
| imazalil | ziram |
| imazalil | guazatin |
| imazalil | thiophanate-methyl |
| imazalil | chlorothalonil |
| imazalil | metrafenone |
| imazalil | pyraclostrobin |
| prochloraz | carbendazim |
| prochloraz | thiabendazole |
| prochloraz | ethaboxam |
| prochloraz | hymexazole |
| prochloraz | pyrimethanil |
| prochloraz | fludioxonil |
| prochloraz | aldimorph |
| prochloraz | dodemorph |
| prochloraz | fenpropimorph |
| prochloraz | iprodione |
| prochloraz | captan |
| prochloraz | fenoxanil |
| prochloraz | probenazol |
| prochloraz | mancozeb |
| prochloraz | metiram |
| prochloraz | thiram |
| prochloraz | ziram |
| prochloraz | guazatin |
| prochloraz | thiophanate-methyl |
| prochloraz | chlorothalonil |
| prochloraz | metrafenone |
| prochloraz | pyraclostrobin |
| carbendazim | thiabendazole |
| carbendazim | ethaboxam |
| carbendazim | hymexazole |
| carbendazim | pyrimethanil |
| carbendazim | fludioxonil |
| carbendazim | aldimorph |
| carbendazim | dodemorph |

| IIB | IID |
|---|---|
| carbendazim | fenpropimorph |
| carbendazim | iprodione |
| carbendazim | captan |
| carbendazim | fenoxanil |
| carbendazim | probenazol |
| carbendazim | mancozeb |
| carbendazim | metiram |
| carbendazim | thiram |
| carbendazim | ziram |
| carbendazim | guazatin |
| carbendazim | thiophanate-methyl |
| carbendazim | chlorothalonil |
| carbendazim | metrafenone |
| carbendazim | pyraclostrobin |
| thiabendazole | ethaboxam |
| thiabendazole | hymexazole |
| thiabendazole | pyrimethanil |
| thiabendazole | fludioxonil |
| thiabendazole | aldimorph |
| thiabendazole | dodemorph |
| thiabendazole | fenpropimorph |
| thiabendazole | iprodione |
| thiabendazole | captan |
| thiabendazole | fenoxanil |
| thiabendazole | probenazol |
| thiabendazole | mancozeb |
| thiabendazole | metiram |
| thiabendazole | thiram |
| thiabendazole | ziram |
| thiabendazole | guazatin |
| thiabendazole | thiophanate-methyl |
| thiabendazole | chlorothalonil |
| thiabendazole | metrafenone |
| thiabendazole | pyraclostrobin |
| ethaboxam | hymexazole |
| ethaboxam | pyrimethanil |
| ethaboxam | fludioxonil |
| ethaboxam | aldimorph |
| ethaboxam | dodemorph |

| IIB | IID |
|---|---|
| ethaboxam | fenpropimorph |
| ethaboxam | iprodione |
| ethaboxam | captan |
| ethaboxam | fenoxanil |
| ethaboxam | probenazol |
| ethaboxam | mancozeb |
| ethaboxam | metiram |
| ethaboxam | thiram |
| ethaboxam | ziram |
| ethaboxam | guazatin |
| ethaboxam | thiophanate-methyl |
| ethaboxam | chlorothalonil |
| ethaboxam | metrafenone |
| ethaboxam | pyraclostrobin |
| hymexazole | pyrimethanil |
| hymexazole | fludioxonil |
| hymexazole | aldimorph |
| hymexazole | dodemorph |
| hymexazole | fenpropimorph |
| hymexazole | iprodione |
| hymexazole | captan |
| hymexazole | fenoxanil |
| hymexazole | probenazol |
| hymexazole | mancozeb |
| hymexazole | metiram |
| hymexazole | thiram |
| hymexazole | ziram |
| hymexazole | guazatin |
| hymexazole | thiophanate-methyl |
| hymexazole | chlorothalonil |
| hymexazole | metrafenone |
| hymexazole | pyraclostrobin |
| pyrimethanil | fludioxonil |
| pyrimethanil | aldimorph |
| pyrimethanil | dodemorph |
| pyrimethanil | fenpropimorph |
| pyrimethanil | iprodione |
| pyrimethanil | captan |
| pyrimethanil | fenoxanil |

| IIB | IID |
|---|---|
| pyrimethanil | probenazol |
| pyrimethanil | mancozeb |
| pyrimethanil | metiram |
| pyrimethanil | thiram |
| pyrimethanil | ziram |
| pyrimethanil | guazatin |
| pyrimethanil | thiophanate-methyl |
| pyrimethanil | chlorothalonil |
| pyrimethanil | metrafenone |
| pyrimethanil | pyraclostrobin |
| fludioxonil | aldimorph |
| fludioxonil | dodemorph |
| fludioxonil | fenpropimorph |
| fludioxonil | iprodione |
| fludioxonil | captan |
| fludioxonil | fenoxanil |
| fludioxonil | probenazol |
| fludioxonil | mancozeb |
| fludioxonil | metiram |
| fludioxonil | thiram |
| fludioxonil | ziram |
| fludioxonil | guazatin |
| fludioxonil | thiophanate-methyl |
| fludioxonil | chlorothalonil |
| fludioxonil | metrafenone |
| fludioxonil | pyraclostrobin |
| aldimorph | dodemorph |
| aldimorph | fenpropimorph |
| aldimorph | iprodione |
| aldimorph | captan |
| aldimorph | fenoxanil |
| aldimorph | probenazol |
| aldimorph | mancozeb |
| aldimorph | metiram |
| aldimorph | thiram |
| aldimorph | ziram |
| aldimorph | guazatin |
| aldimorph | thiophanate-methyl |

| IIB | IID |
|---|---|
| aldimorph | chlorothalonil |
| aldimorph | metrafenone |
| aldimorph | pyraclostrobin |
| dodemorph | fenpropimorph |
| dodemorph | iprodione |
| dodemorph | captan |
| dodemorph | fenoxanil |
| dodemorph | probenazol |
| dodemorph | mancozeb |
| dodemorph | metiram |
| dodemorph | thiram |
| dodemorph | ziram |
| dodemorph | guazatin |
| dodemorph | thiophanate-methyl |
| dodemorph | chlorothalonil |
| dodemorph | metrafenone |
| dodemorph | pyraclostrobin |
| fenpropimorph | iprodione |
| fenpropimorph | captan |
| fenpropimorph | fenoxanil |
| fenpropimorph | probenazol |
| fenpropimorph | mancozeb |
| fenpropimorph | metiram |
| fenpropimorph | thiram |
| fenpropimorph | ziram |
| fenpropimorph | guazatin |
| fenpropimorph | thiophanate-methyl |
| fenpropimorph | chlorothalonil |
| fenpropimorph | metrafenone |
| fenpropimorph | pyraclostrobin |
| iprodione | captan |
| iprodione | fenoxanil |
| iprodione | probenazol |
| iprodione | mancozeb |
| iprodione | metiram |
| iprodione | thiram |
| iprodione | ziram |
| iprodione | guazatin |
| iprodione | thiophanate- |

| IIB | IID |
|---|---|
| | methyl |
| iprodione | chlorothalonil |
| iprodione | metrafenone |
| iprodione | pyraclostrobin |
| captan | fenoxanil |
| captan | probenazol |
| captan | mancozeb |
| captan | metiram |
| captan | thiram |
| captan | ziram |
| captan | guazatin |
| captan | thiophanate-methyl |
| captan | chlorothalonil |
| captan | metrafenone |
| captan | pyraclostrobin |
| fenoxanil | probenazol |
| fenoxanil | mancozeb |
| fenoxanil | metiram |
| fenoxanil | thiram |
| fenoxanil | ziram |
| fenoxanil | guazatin |
| fenoxanil | thiophanate-methyl |
| fenoxanil | chlorothalonil |
| fenoxanil | metrafenone |
| fenoxanil | pyraclostrobin |
| probenazol | mancozeb |
| probenazol | metiram |
| probenazol | thiram |
| probenazol | ziram |
| probenazol | guazatin |
| probenazol | thiophanate-methyl |
| probenazol | chlorothalonil |
| probenazol | metrafenone |
| probenazol | pyraclostrobin |
| mancozeb | metiram |
| mancozeb | thiram |
| mancozeb | ziram |
| mancozeb | guazatin |

| IIB | IID |
|---|---|
| mancozeb | thiophanate-methyl |
| mancozeb | chlorothalonil |
| mancozeb | metrafenone |
| mancozeb | pyraclostrobin |
| metiram | thiram |
| metiram | ziram |
| metiram | guazatin |
| metiram | thiophanate-methyl |
| metiram | chlorothalonil |
| metiram | metrafenone |
| metiram | pyraclostrobin |
| thiram | ziram |
| thiram | guazatin |
| thiram | thiophanate-methyl |
| thiram | chlorothalonil |
| thiram | metrafenone |
| thiram | pyraclostrobin |
| ziram | guazatin |
| ziram | thiophanate-methyl |
| ziram | chlorothalonil |
| ziram | metrafenone |
| ziram | pyraclostrobin |
| guazatin | thiophanate-methyl |
| guazatin | chlorothalonil |
| guazatin | metrafenone |
| guazatin | pyraclostrobin |
| thiophanate-methyl | chlorothalonil |
| thiophanate-methyl | metrafenone |
| thiophanate-methyl | pyraclostrobin |
| chlorothalonil | metrafenone |
| chlorothalonil | pyraclostrobin |
| metrafenone | pyraclostrobin |

4. A mixture according to any of claims 1, 2 and 3, further comprising an insecticidal compound III which is selected from pyrethroids, and nicotinic receptor agonists/antagonists IIIA.

5. A mixture according to claim 4, wherein the insecticidal compound is selected from alpha-cypermethrin, nicotinic receptor agonists/antagonists IIIA which are acetamiprid, clothi-anidin, dinotefuran, imidacloprid, thiamethoxam, nitenpyram, thiacloprid, and anthranilamides IIIB which are chloranthraniliprole, and 5-bromo-2-(3-chloro-2-pyridyl)-N-[4-cyano-2-methyl-6-(methylcarbamoyl)phenyl]pyrazole-3-carboxamide.

6. A mixture according to any of claims 4 and 5, wherein the insecticidal compound is selected from clothianidin, thiamethoxam, and imidacloprid.

7. The mixture according to any of claims 1 to 6, comprising the compound I and the compound IIA in a weight ratio of from 100:1 to 1:100.

8. The mixture according to any of claims 2 to 6, comprising the compound I, the compound IIA and the compound IIB in a weight ratio of from 1:50:500 to 50:1:1.

9. A pesticidal composition, comprising a liquid or solid carrier and a mixture as defined in any of claims 1 to 8.

10. A method for controlling phytopathogenic harmful fungi, wherein the fungi, their habitat or the plants to be protected against fungal attack, the soil or seed are treated with an effective amount of a mixture as defined in any of claims 1 to 8.

11. A method for controlling insects, arachnids or nematodes comprising contacting an insect, acarid or nematode or their food supply, habitat, breeding grounds or their locus with a mixture as defined in any of claims 1 to 8 in pesticidally effective amounts.

12. A method for protecting plants from attack or infestation by insects, acarids or nematodes comprising contacting the plant, or the soil or water in which the plant is growing or the seed of the plant, with a mixture as defined in any of claims 1 to 8 in pesticidally effective amounts.

13. A method as claimed in claims 10 to 12, wherein the mixture as defined in any of claims 1 to 8 is applied in an amount of from 5 g/ha to 2000 g/ha.

14. A method for protection of seed comprising contacting the seeds with a mixture as defined in any of claims 1 to 8 in an amount of from 0.01 g to 10 kg per 100 kg of seeds.

15. Seed, comprising the mixture as defined in any of claims 1 to 8 in an amount of from 0.1 g to 10 kg per 100 kg of seeds.

16. A method as claimed in claims 10 to 14 wherein
the compound I, compounds IIA, IIB and IID as defined in any of claims 1 to 8 are applied simultaneously, that is jointly or separately, or in succession.

Europäisches Patentamt
European Patent Office
Office européen des brevets

# EUROPEAN SEARCH REPORT

Application Number
EP 13 18 3213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/48366 A (BASF AG [DE]; SCHELBERGER KLAUS [DE]; GROTE THOMAS [DE]; SAUTER HUBERT) 30 September 1999 (1999-09-30)<br>* claims 1-4 *<br>* example 1 *<br>----- | 1-16 | INV.<br>A01P3/00<br>A01P5/00<br>A01P7/02<br>A01P7/04<br>A01N43/56<br>A01N47/02<br>A01N37/36<br>A01N37/46<br>A01N37/50<br>A01N43/36<br>A01N43/40<br>A01N43/54<br>A01N43/653<br>A01N47/24<br>A01N47/26<br>A01N47/34<br>A01N47/38 |
| A | WO 2006/066810 A2 (BASF AG [DE]; SPEAKMAN JOHN-BRYAN [DE]; STIERL REINHARD [DE]; STRATHMA) 29 June 2006 (2006-06-29)<br>* claim 7 *<br>----- | 1-16 | |
| | | | TECHNICAL FIELDS SEARCHED (IPC) |
| | | | A01N |

The present search report has been drawn up for all claims

| Place of search | Date of completion of the search | Examiner |
|---|---|---|
| Munich | 22 November 2013 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 13 18 3213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | A01N51/00<br>A01N53/00 |
| | | | TECHNICAL FIELDS SEARCHED (IPC) |

The present search report has been drawn up for all claims

| Place of search | Date of completion of the search | Examiner |
|---|---|---|
| Munich | 22 November 2013 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 13 18 3213

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2013

| Patent document cited in search report | Publication date | Patent family member(s) | Publication date |
|---|---|---|---|
| WO 9948366 A | 30-09-1999 | AR 018809 A1 | 12-12-2001 |
| | | AU 735903 B2 | 19-07-2001 |
| | | AU 2934899 A | 18-10-1999 |
| | | BR 9909048 A | 05-12-2000 |
| | | CA 2324460 A1 | 30-09-1999 |
| | | CN 1294488 A | 09-05-2001 |
| | | CO 5060421 A1 | 30-07-2001 |
| | | EP 1082009 A1 | 14-03-2001 |
| | | ID 26839 A | 15-02-2001 |
| | | JP 4458666 B2 | 28-04-2010 |
| | | JP 2002507551 A | 12-03-2002 |
| | | KR 20010034646 A | 25-04-2001 |
| | | TW 520274 B | 11-02-2003 |
| | | WO 9948366 A1 | 30-09-1999 |
| WO 2006066810 A2 | 29-06-2006 | AR 052270 A1 | 07-03-2007 |
| | | AU 2005318481 A1 | 29-06-2006 |
| | | BR PI0519162 A2 | 30-12-2008 |
| | | CA 2589646 A1 | 29-06-2006 |
| | | CN 101080170 A | 28-11-2007 |
| | | EA 200701224 A1 | 28-02-2008 |
| | | EP 1830647 A2 | 12-09-2007 |
| | | JP 2008524150 A | 10-07-2008 |
| | | KR 20070089866 A | 03-09-2007 |
| | | MA 29156 B1 | 02-01-2008 |
| | | NZ 555623 A | 30-04-2009 |
| | | US 2008153824 A1 | 26-06-2008 |
| | | UY 29261 A1 | 31-07-2006 |
| | | WO 2006066810 A2 | 29-06-2006 |
| | | ZA 200704453 A | 25-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 295117 A
- WO 9722593 A
- WO 9512314 A
- US 5877194 A
- WO 9948366 A
- WO 0028825 A
- WO 02102148 A
- WO 05051081 A
- WO 05058040 A
- WO 03075653 A
- WO 9500303 A
- WO 06066810 A
- DE 19548873
- DE 2324020
- US 4664696 A
- GB 2098607 A
- EP 196038 A
- EP 15756 A
- EP 267778 A
- GB 857383 A
- BE 835579
- WO 9616048 A
- EP 40345 A
- EP 234242 A
- FR 2641277
- US 3991071 A
- JP 54119462 A
- US 3631176 A
- US 3657443 A
- US 3017415 A
- DE 1209799
- EP 639574 A
- JP 518249 A
- JP 532202 A
- EP 382375 A
- EP 477631 A
- WO 9727189 A
- EP 253213 A
- EP 398692 A
- WO 9715552 A
- EP 278595 A
- EP 460575 A
- US 3249499 A
- DE 2903612
- EP 545099 A
- JP 1104514 A
- US 3937840 A
- GB 1500581 A
- GB 2058059 A
- US 3399214 A
- JP 10130268 B
- EP 120321 A
- EP 860438 A
- WO 9942447 A
- EP 49854 A
- EP 310550 A
- GB 1218623 A
- EP 224339 A
- DD 151404 A
- DE 1901421
- DE 1198125
- DE 2752096
- DE 1164152
- GB 1312536 A
- US 3903090 A
- DE OS2207576
- WO 03053145 A
- US 2720480 A
- WO 9748684 A
- GB 1419121 A
- US 2553770 A
- US 5240940 A
- US 3379610 A
- US 2504404 A
- US 2791605 A
- US 3248400 A
- BE 611960
- US 1972961 A
- DE 642532
- US 2457674 A
- EP 472996 A
- JP 9323984 A
- DE 1643040
- US 2867562 A
- GB 1114155 A
- US 2526660 A
- US 3499086 A
- FR 2254276
- DE 1545790
- GB 1467561 A
- US 3290353 A
- DE 1193498
- EP 199433 A
- DE 1643347
- DE 2732257
- DE 682048
- DE OS1930540
- WO 9619442 A

- US 3957847 A
- GB 1182584 A
- GB 1448810 A
- US 5945567 A
- EP 281842 A
- EP 1201648 A
- EP 226917 A
- WO 9846608 A
- WO 9924413 A
- WO 04049804 A
- WO 03066609 A
- WO 0314103 A
- EP 1035122 A
- EP 1028125 A
- EP 71792 A
- EP 141317 A
- WO 03009687 A
- WO 05087771 A
- WO 05087772 A
- WO 05087773 A
- EP 05002426 W
- EP 2006050922 W
- EP 2006060399 W
- WO 2006087343 A
- WO 200142223 A
- WO 200534628 A
- WO 2005123689 A
- WO 2005123690 A
- WO 2006120219 A
- EP 2006064991 W
- EP 06123463 A
- WO 9828279 A
- EP 454621 A1
- WO 9828277 A
- EP 462456 A1
- US 4822779 A
- JP 2002193709 B
- WO 0100614 A
- WO 9845274 A
- US 6335357 B
- US 6221890 B
- JP 21010907 B
- WO 03007717 A
- WO 03007718 A
- US 6300348 B
- WO 0170671 A
- WO 03015519 A
- WO 05118552 A
- WO 04067528 A
- WO 04080180 A
- EP 1097932 A
- WO 0563694 A
- EP 0257993 A
- US 5013659 A
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- EP 0242236 A
- EP 242246 A
- WO 9200377 A
- US 5162602 A
- US 5290696 A
- US 5498544 A
- US 5428001 A
- US 6069298 A
- US 6268550 B
- US 6146867 A
- US 6222099 B
- US 6414222 B
- EP 0142924 A
- EP 0193259 A
- WO 9211376 A
- WO 9214827 A
- WO 9119806 A
- WO 9113972 A

**Non-patent literature cited in the description**

- *Proc. 1990 Br. Crop. Prot. Conf. - Pests Dis.,* 1990, vol. 1, 459
- *Noyaku Kagaku,* 1983, vol. 8, 575
- *Fruits,* 1973, vol. 28, 545
- *Proc. Br. Crop Prot. Conf.-Pests Dis.,* 1992, vol. 5-3, 411
- *Proc. 1988 Br. Crop Prot. Conf. - Pests Dis.,* 1988, vol. 1, 33
- *Proc. 1988 Br. Crop Prot. Conf. - Pests Dis.,* 1988, vol. 2, 519
- Pesticide Manual. 2000, 712
- *Proc. Br. Crop Prot. Conf. - Pests Dis.,* 1998, vol. 2, 327
- The Pesticide Manual. publ. The British Crop Protection Council, 1995, 474
- Proc. 1988 Br. Crop Prot. Conf. - Pests Dis. 1988, vol. 1, 65
- The Pesticide Manual. The British Crop Protection Council, 1995, 482
- *C. R. Seances Acad. Agric. Fr.,* 1945, vol. 31, 24
- The Pesticide Manual. British Crop Protection Council, 2003

- Farm Chemicals Handbook. Meister Publishing Company, 2001, vol. 88
- *Pesticide Science,* 1988, vol. 54, 237-243
- **COLBY, S.R.** Calculating synergistic and antagonistic responses of herbicide Combinations. *Weeds,* 1967, vol. 15, 20-22
- **COLBY, S. R.** Calculating synergistic and antagonistic responses of herbicide Combinations. *Weeds,* 1967, 20-22
- **COLBY, S. R.** Calculating synergistic and antagonistic responses of herbicide Combinations. *Weeds,* 1967, vol. 15, 20-22